Europäisches Patentamt

European Patent Office

Office européen des brevets

(19)

(11) **EP 1 460 862 A1**

(12) **EUROPEAN PATENT APPLICATION**

(43) Date of publication:
**22.09.2004 Bulletin 2004/39**

(51) Int Cl.[7]: **H04Q 3/00**

(21) Application number: **03290704.0**

(22) Date of filing: **19.03.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **ALCATEL**
**75008 Paris (FR)**

(72) Inventors:
 • **Hopfmüller, Heinrich**
  **71282 Hemmingen (DE)**
 • **Milbredt, Thomas**
  **71229 Leonberg (DE)**

 • **Salomon, Rudolf**
  **74223 Flein (DE)**
 • **Schnaitmann, Bernd**
  **71642 Ludwigsburg (DE)**
 • **Stosshoff, Ulrich**
  **71706 Markgröningen (DE)**

(74) Representative:
**Menzietti, Domenico, Dipl.-Ing et al**
**Alcatel**
**Intellectual Property Department, Stuttgart**
**70430 Stuttgart (DE)**

(54) **Number portability database**

(57)    It is an object of the invention to provide a Number Portability Database, which provides access for different signaling application services for fixed and/or mobile users independently from the topology of the network. An inventive number portability database includes e.g. a E.164 single number configuration table, a E.164 range number configuration number table, and a service control configuration table. Each configuration table includes several parameters and can easily be re-configured allowing the whole system to be very flexible and to be adapted to specific requirements via simple software reprogramming. If predefined parameters of an assembled search digit string (e.g. assembled from a received E.164 number) could not be found in a Single Number Configuration Table a further query is done in a Range Number Configuration Table. This two step approach enables a quicker search routine. Parameters are e.g. number value, portability status, transition indicator, service control.

Fig. 1

**Description**

TECHNICAL FIELD OF THE INVENTION

This invention is related in general to the field of telecommunications systems. More particularly, the invention is related to a SS7 signaling server and method for routing SS7 links in a telecommunications network. More particularly, the invention is related to a Number Portability Database. The invention is related to the european patent applications EP 02360267.5 and EP 02360268.3 which hereby are incorporated by reference.

BACKGROUND OF THE INVENTION

A SS7 signaling server for routing SS7 links includes a signaling transfer point (STP) and a signaling application server (SAS). The SAS is capable to process at least one application process. Each application process, e.g. an individual INAP, MAP, CAP, or any TCAP User, TCAP Relay, or SCCP Relay service request has to be identified and processed. After an inbound message analysis a service decision including a database search has to be performed.
The SS7 signaling server for routing SS7 links, includes e.g. a signaling transfer point (STP) and a signaling application server (SAS); SS7 = Signaling System No. 7. STP and SAS have different functionalities. The STP has at least one external interface to connect the STP via at least one SS7 link to at least one telecommunications unit, and an internal interface to connect the STP to the SAS. The STP processes incoming SS7 messages, e.g. in the MTP1, MTP2, MTP3, and SCCP layer. The SAS is capable to process at least one application service request, advantageously at least two different application service requests. The STP identifies a single application service request in one incoming SS7 message and provides the identified single application service request to the SAS for further processing. The SAS has e.g. two TCAP processes to identify two different application services, e.g. INAP and MAP. STP and SAS are interconnected via an internal interworking protocol, e.g. using TCP/IP (transmission control protocol/internet protocol). The interworking protocol is called Advanced Signaling Transport Protocol (ASTP).
The signaling server is e.g. highly configurable and efficient regarding run-time. The signaling server is capable of processing multiple application service requests, e.g. mobile number portability (MNP), service number portability (SNP), screening, intelligent network (IN) services, TCAP services, MAP services, CAP services, TCAP Relay, TCAP User Relay, SCCP Relay.
The SS7 signaling server for routing SS7 links, includes e.g. a signaling transfer point (STP) and a signaling application server (SAS),
wherein the STP has at least one external interface to connect the STP via at least one SS7 link to at least one telecommunications unit, and an internal interface to connect the STP to the SAS,
wherein the SAS is capable to process at least one service requst, advantageously at least two different application service requests, and
wherein the STP is capable to process incoming SS7 messages, to identify a single application service request in one incoming SS7 message, to provide the identified single application service request to the SAS for further processing.

SUMMARY OF THE INVENTION

It is an object of the invention to provide a Number Portability Database, which provides access for different signaling application services for fixed and/or mobile users independently from the topology of the network and the servers used.
An inventive number portability database includes e.g. a E.164 single number configuration table, a E.164 range number configuration number table, and a service control configuration table.
Each configuration table includes several parameters and can easily be re-configured allowing the whole system to be very flexible and to be adapted to specific requirements via simple software reprogramming.
If predefined attributes (= parameters) of an assembled search digit string (e.g. assembled from a received E.164 number) could not be found in a Single Number Configuration Table a further query is done in a Range Number Configuration Table. This two step approach enables a quicker search routine. Parameters are e.g. number value, portability status, transition indicator.
The service control configuration table has a link to both single and range number configuration number table in order to provide service control information corresponding to the detected search string. Storing the service control information in a central service control configuration table minimizes the required storing space in the single and range number configuration number table and thus enables a quicker search routine. In addition, part of the service control information has only to be stored once and not twice, thus reducing the total storage volume.
The database can easily be extended to perform also flexible routing: A MSIN based single number configuration table and a MSIN based range number configuration number table are included, which are both linked to the service control configuration table.

The inventive database is highly configurable, and it is possible to adapt service in a very easy way to e.g. different mobile networks.

The inventive Number Portability Database for at least one SAS application service includes at least one single number configuration table, at least one range number configuration number table, and a service control configuration table, wherein the single number configuration table serves to store single numbers or attributes thereof and corresponding service control data or attributes thereof, wherein the range number configuration table serves to store ranges or attributes thereof and corresponding service control data or attributes thereof, wherein the service control configuration table serves to store service control data or attributes thereof and corresponding service control information or attributes thereof.

Examples of the attributes are specified below. In each table at least two attributes are stored. Instead of the attributes specified other attributes could be used.

In an advantageous embodiment of the invention the Number Portability Database has at least one single number configuration table which serves to store E.164 single numbers or attributes thereof like E.164 Number Length, E.164 Number Value, Number Type, Portability Status, Default/Exception Indicator, Transition Indicator, Extended Match Indicator, Extended Match Length, and corresponding service control data or attributes thereof like Service Control Data Id, Service Control Data Sequence Number, and at least one range number configuration table which serves to store E.164 range numbers or attributes thereof like E.164 Number Start Range Length, E.164 Number Start Range Value, E.164 Number End Range Length, E.164 Number End Range Value, Number Type, Portability Status, Default/Exception Indicator, Transition Indicator, Single Number Flag, and corresponding service control data or attributes thereof like Service Control Data Id, Service Control Data Sequence Number. In each database at least two attributes are stored.

In a further advantageous embodiment of the invention the Number Portability Database serves in addition for flexible routing. At least one single number configuration table serves to store MSIN based single numbers or attributes thereof like MSIN Based Number Length, MSIN Based Number Value, Number Type, Portability Status, Default/Exception Indicator, Transition Indicator, Extended Match Indicator, Extended Match Length, and corresponding service control data or attributes thereof like Service Control Data Id, Service Control Data Sequence Number. At least one range number configuration table serves to store MSIN based range numbers or attributes thereof like MSIN Based Number Start Range Length, MSIN Based Number Start Range Value, MSIN Based Number End Range Length, MSIN Based Number End Range Value, Number Type, Portability Status, Default/Exception Indicator, Transition Indicator, Single Number Flag, and corresponding service control data or attributes thereof like Service Control Data Id, Service Control Data Sequence Number.

In a preferred embodiment the inventive Number Portability Database has a service control configuration table which serves to store service control data or attributes thereof like Service Control Data Id, and corresponding service control information or attributes thereof like Service Control Data Function, Service Control Data Type, Service Control Data Length, Service Control Data Value, Address Info Present Mask, Nature of Address Indicator, Numbering Plan, Cut Enable Mask, Cut Offset, Cut Length.

In a further preferred embodiment at least one single number configuration table is implemented in an object-oriented database using a B-Tree like access method optimized for searching from the smnallest to the greatest or from the greates to the smallest, and at least one range number configuration table is implemented in an object-oriented database using a B-Tree like access method optimized for searching from the smnallest to the greatest or from the greates to the smallest.

An inventive Signaling application server (SAS) comprises at least one processor, at least one database and at least one processing software for processing at least one application service request, wherein the at least one processing software is programmed in such a way that identifying and processing at least one application service request is enabled - including e.g. a signaling connection control part (SCCP) process and/or at least one transaction capabilities application part (TCAP) process to identify at least one application service request -, and wherein at least one database is a Number Portability Database including at least one single number configuration table, at least one range number configuration number table, and a service control configuration table.

An inventive SS7 signaling server for routing SS7 links, includes a signaling transfer point (STP), a signaling application server (SAS), and a Number Portability Database including at least one single number configuration table, at least one range number configuration number table, and a service control configuration table,
wherein the STP has at least one external interface to connect the STP via at least one SS7 link to at least one telecommunications unit, and an internal interface to connect the STP to the SAS,
wherein the SAS has access to the Number Portability Database and is capable to process at least one application service request, and
wherein the STP is capable to process incoming SS7 messages, to identify a single application service request in one incoming SS7 message, to provide the identified single application service request to the SAS for further processing.

The SAS has access to the Number Portability Database and can make use of different database query search algorithms.

BRIEF DESCRIPTION OF THE DRAWINGS

For a better understanding of the present invention, reference is made to the accompanying drawings, in which:

FIG. 1      is an Entity-Relationsship Diagram of an E.164 and MSIN Based Database - Input Digit String plus Database Information;

FIG. 2      is a further Entity-Relationsship Diagram of an E.164 and MSIN Based Database-Output Digit String plus Database Information;

FIG. 3      is a further Entity-Relationsship Diagram of an E.164 and MSIN Based Database-Only Database Information;

FIG. 4      shows a flowchart of a SAS Database Query Search Algorithm in Single Number Table with Search Direction from the smallest to the greatest, Extended Search Disabled;

FIG. 5      shows a flowchart of a SAS Database Query Search Algorithm in Single Number Table with Search Direction from the greatest to the smallest, Extended Search Disabled;

FIG. 6      shows a flowchart of a SAS Database Query Search Algorithm in Range Number Table with Search Direction from the smallest to the greatest, Open Ranges, True Single Numbers Not Allowed;

FIG. 7      shows a flowchart of a SAS Database Query Search Algorithm in Range Number Table with Search Direction from the greatest to the smallest, Open Ranges, True Single Numbers Not Allowed;

FIG. 8      shows a flowchart of a SAS Database Query Search Algorithm in Range Number Table with Search Direction from the smallest to the greatest, Open Ranges;

FIG. 9      shows a flowchart of a SAS Database Query Search Algorithm in Range Number Table with Search Direction from the greatest to the smallest, Open Ranges;

FIG. 10      shows a flowchart of a SAS Database Query Search Algorithm in Single Number Table with Search Direction from the smallest to the greatest, Extended Match Enabled;

FIG. 11      shows a flowchart of a SAS Database Query Search Algorithm in Auxiliary Number Table with Search Direction from the greatest to the smallest;

FIG. 12      shows an Illustration of the B-Tree Implementation of a Single Number Table - Optimized for Searching from the Smallest to the Greatest;

FIG. 13      shows another Illustration of the B-Tree Implementation of a Single Number Table - Optimized for Searching from the Greatest to the Smallest;

FIG. 14      shows Design Patterns for SAS Physical Data Model;

FIG. 15      shows Design Patterns for SPS Physical Data Model; SPS = Service Provisioning System includes: Configuration Management system for SAS; and

FIG. 16      shows a SPS SAS Logical Database Hierarchy.

DETAILED DESCRIPTION OF THE INVENTION

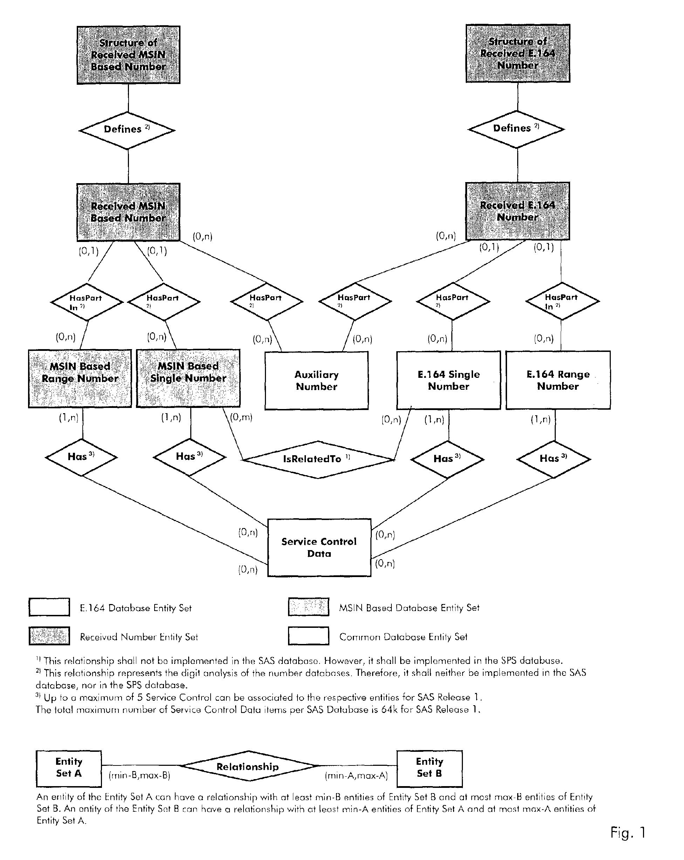

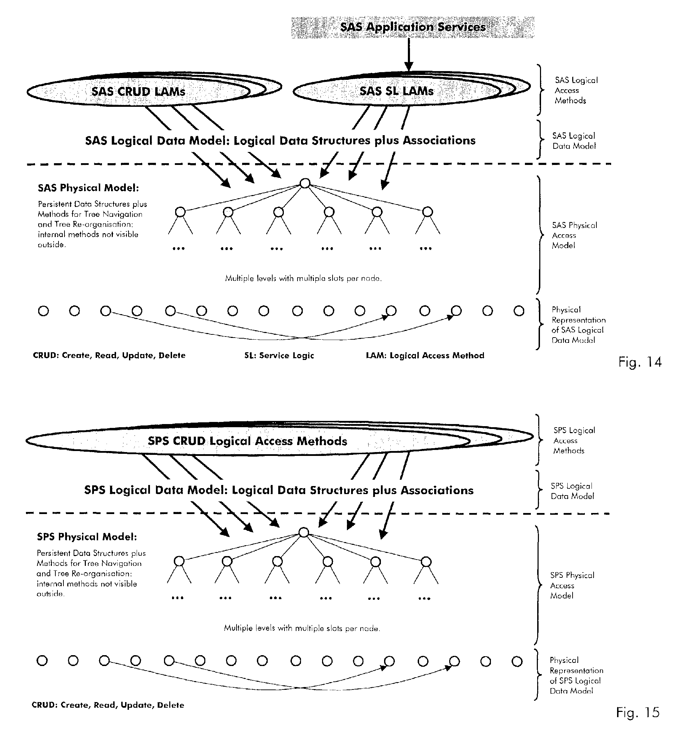

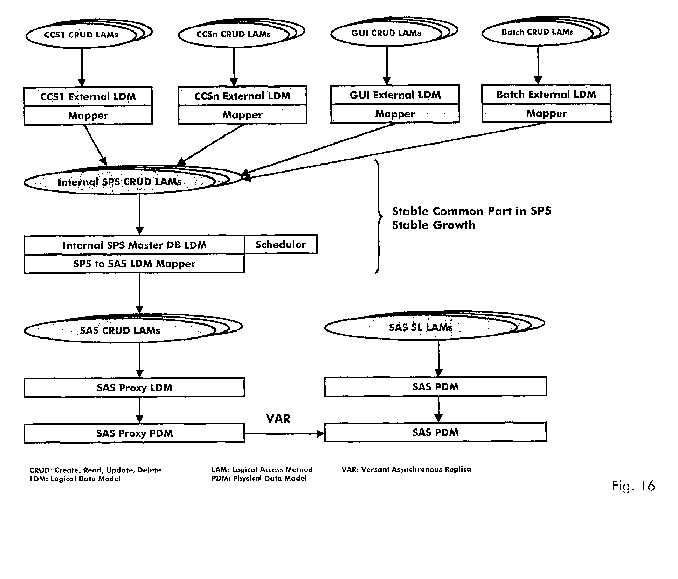

The preferred embodiments of the present invention are illustrated in FIGS. 1-16, like reference numerals being used to refer to like and corresponding parts of the various drawings.

FIG. 1 shows an Entity-Relationship Diagram of the E.164 and MSIN Based Database - Input Digit String plus Database Information.

1. Data Models of the SAS Data

SAS data is the data maintained in the SAS Databases in the SAS itself and the data maintained the SAS Proxy Databases in the SPS. The SAS Proxy Databases in the SPS are a copy of the SAS Databases in the SAS, i. e. both kinds databases are identical except local system platform dependencies.

The SAS data includes E.164 single number data, E.164 range number data, MSIN based single number data, MSIN based range data, Auxiliary Number data, Service Control data, and configuration data.

Only logical data models are defined in this section. The Entity Relationship method has been used to specify these logical data models. The reason for this choice was to clearly distinguish between logical and physical data model. A second reason is the fact that the ER method is simple and widely known, which enables people to review the logical data models without being experts in object orientation. The logical data models capture the complete information, which is necessary for the SAS Application Services to perform their function. The physical data models includes also aspects to store and retrieve this information in an object oriented database. For the physical model OOA methods are to be used.

In terms of Object Oriented Analysis (OOA) the logical data model of the SAS data represents the steps:

1. Identification of classes / entity sets.

2. Identification of associations and aggregations.

3. Identification of attributes.

4. Identification of external operations.

1.1 Fundamental Requirements

From a logical perspective, the SAS data - except the configuration data - is captured in tables in the sense of the relation database model. Currently, there are up to six different tables, which can be deployed within a given SAS. These are currently:

- The E.164 Single Number Table.
- The E.164 Range Number Table.
- The MSIN Based Single Number Table.
- The MSIN Based Range Number Table.
- The Auxiliary Number Table.
- The Service Control Data Table.

Additional tables are expected to be integrated in the future.

Each table is deployed to meet the specific data requirements of an individual SAS Application Service, or a group of SAS Application Services. It may not be necessary for each table to be used within the SAS, depending on the specific customer network deployment of the SAS Application Services. Therefore, the set of table to be deployed for a given customer is configured according to his needs. For instance, a customer may not want to have range tables, or another customer only needs the E.164 tables. However, the Service Control Table is always necessary for the services Number Portability and Flexible Routing.

The (sub-) set of the above six tables, which is installed on a given SAS server node is called a Logical SAS Database. In particular for big STP installations, there may be multiple Logical SAS Databases per SSE. For instance, there may be the following three logical SAS databases:

- The first set of SAS server nodes contains an E.164 Single Number Table for FNP, an E.164 Range Number Table for FNP, an Auxiliary Number Table for FNP, and a Service Control Table for FNP.

- The second set of SAS server nodes contains an E.164 Single Number Table for MNP, an E.164 Range Number Table for MNP, an Auxiliary Number Table for MNP, and a Service Control Table for MNP.

- The third set of SAS server nodes contains a MSIN Based Single Number Table for FLR, a MSIN Based Range Number Table for FLR, and a Service Control Table for FLR.

Under normal circumstance, each STP within an operator's network contains the same data in the co-located SAS server nodes. However, for very large networks, the SAS data in the STPs may be fragmented. This introduces even more Logical SAS Database in the network.

The SPS has to be able to correctly provision these types of multiple Logical SAS Databases. For each Logical SAS Database in the network, there has to be a dedicated SAS Proxy Database in the SPS.

Each table that is defined within the SAS may be sized to the appropriate number of entries depending on individual customer needs. There are restrictions on sizes and combination of sizes that are allowed. Currently the total combined number of entries per SAS server node is 100 Million.

The tables, which are used by the service logic shall contain sufficient information in order to keep the service logic simple and at the same time fulfil all customer requirements concerning Number Portability and Flexible Routing.

This implies that for each type of Single Number and Range Number table - E.164, E.212, E.214 - enough routing numbers and control information per entry shall be provided.

The data model shall be defined primarily on the basis of functional requirements. I.e. required information content, structure and semantics, and finally access functions on the information. Non-functional requirements, such as memory consumption and access speed are secondary issues.

For the first phase of the SAS, it is expected that customers will not require more than 30 million entries per SAS server node. Performance and Capacity tuning will take this fact into account. This implies that there will be about 50 bytes per entry gross chip memory space, under the assumption that a SAS server node has 2 GByte chip memory.

This specification concentrates on logical information models only. Design constraints and implications are mentioned only occasionally. The logical information model is defined using the Entity-Relationship method, due to its simplicity and the fact that it is well known. However, usage of the ER model in this specification does not imply any use of relational databases during design. If the design of the SAS system uses the Object-Oriented approach and a Object-Oriented database, then this logical information model specifies the logical information structure and content which is to be implemented.

In future release, even fragmentation of large E.164 and MSIN databases across multiple SAS nodes at the same STP can be considered. Routing in this case is done from the A5070 SSE Core based on simple fragmentation criteria. This fragmentation introduces even more Logical SAS Database, which have also to be handled by the SPS.

The single number tables are initially empty, if the operator is about to start with number portability or flexible routing. If he has already data of this nature, then it needs to be exported from the existing databases and imported into the respective SPS and SAS databases.

It is expected that the range tables contain each approx. 10000 entries. The number of entries in the range tables is quite stable over time. They can be completely provisioned at system installation time. Modification in the range tables is not part of the general daily business, but is a special and complex task, which requires dedicated skill and authorisation.

1.2 Logical Data Models

1.2.1 Entity Relationship Diagrams

Currently only E.164 and MSIN based tables plus service control data tables and auxiliary tables for digit analysis are supported. In the future, additional types of tables may follow, e.g. CLIV.

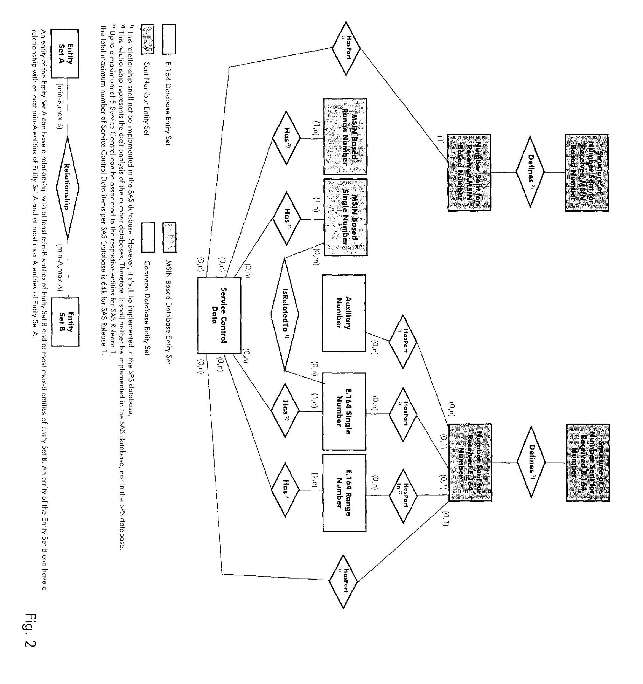

Figure 1 and Figure 2 present a general Entity-Relationship (ER) Model (ERM) of the information involved in the processing of the SAS application services. The ERM distinguishes between received numbers, sent numbers and numbers in the databases. Numbers in the database belong either to the Single Number Table or the Range Table of the respective number type. Two general types of numbers are distinguished: E.164 database numbers and MSIN based database numbers.

A MSIN based database number is either a MSIN (as defined in ITU-T E.212) or MNC+MSIN (as defined in ITU-T E.212), or NC+MSIN (as defined in ITU-T E.214).

The E.164 database numbers are used for number portability and FLR. The MSIN based database numbers are used for FLR. There is a common special case, where IMSI based FLR and MGT based FLR are both present in a network and the MSIN is always sufficient to perform FLR. Then for both types of FLR services, the same MSIN Single Number and Range Number tables can be used.

The tables for E.164 numbers and the tables for MSIN based numbers have a common part in the bottom end: the Service Control Data. Multiple Service Control Data items per table entry are possible. The reasons for having multiple Service Control Data items per E.164 number are as follows:

- Some customers want different network routing numbers for call related signalling and non-call related signalling.

- If MNP is combined with FLR, then in addition to one or more network routing numbers a logical HLR address has to be provided.

- Tariff information may be required additionally.

- Additional routing or Service Control Data information might be required by some customers or in the future.

Auxiliary information is present in order to support the digit analysis of the received E.164 number string.

Figure 2 shows another Entity-Relationship Diagram of the E.164 and MSIN Based Database - Output Digit String plus Database Information.

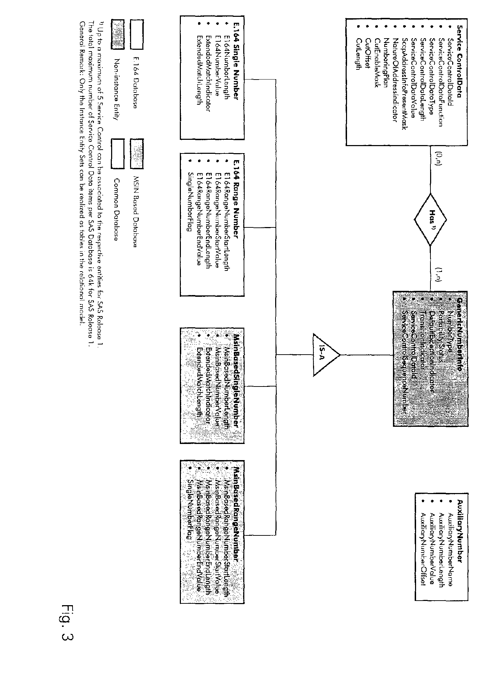

Figure 3 presents an ERD of the E.164 and MSIN based databases. The entities representing the received and sent numbers are not contained in this figure.

Figure 3 shows another Entity-Relationship Diagram of the E.164 and MSIN Based Database - Only Database Information.

The databases for E.164 and MSIN based numbers are structured into a Single Number table, a Range Number table, an Auxiliary Number table, and a Service Control Data table. It is assumed that the service logic first extracts the auxiliary numbers, and then queries with the core part of the received number the Single Number and Range Number tables. It is assumed that always the Single Number table is queried first, and then possibly - depending on some conditions - the Range Number table.

The Single Number tables contain in general single ported or flexible routed numbers. They may, however, also contain single non-ported or single non-flexible routed numbers. Thirdly, the Single Number tables may contain ranges of numbers. The representation of number ranges in Single Number tables is done with the extended match mechanism.

The Range Number tables contain number ranges of the following two kinds:

- Default number ranges. In a Number Portability context, these default number ranges have been assigned to an operator. These default ranges are not modified, even when numbers are ported out of a default range. In a Flexible Routing context, these default number ranges are the ones, which have been assigned to specific HLR, based on defined number prefixes. The purpose of both kinds of default ranges is to check whether a received number belongs to the number range of this operator, or to the number range assigned to an HLR. This check is usually done after the database query of the Single Number table, and the received number has not been found there.

- Exception number ranges. In a Number Portability context, these exception number ranges are ranges, which have been ported as a whole. In a Flexible Routing context, these exception number ranges are ranges, which have been ported from one HLR to another one as a whole. As the Single Number table is always queried before the Range Number table, a number of an exception number range is discovered during the query against the Range Number table, after an unsuccessful query in the Single Number table.

It is also possible that single numbers are represented in the Range Number tables.

1.2.2 General Considerations on Numbers, Ranges, Searches and Matches

In this sub-section the following is described:

- A definition of properties of numbering plans.

- Definitions on digit strings and their order, including a specification how the entries in the SAS database have to be ordered.

- Based on the above two items, a specification how the SAS database is to be searched and under which conditions a match occurs.

1.2.2.1 Properties of Numbering Plans

The E.164 Single Number Table is required to store numbers in accordance with the E.164 numbering plan. The purpose of this data is to provide the ability to associate single E.164 numbers (only the national significant part) to the necessary routing information to support the routing requirements of the deployed SAS Application Services.

The E.164 Range Table is required to store ranges of numbers in accordance with the E.164 numbering plan. The purpose of this data is to provide the ability to associate ranges of E.164 numbers (only the national significant part) to the necessary routing information to support the routing requirements of the deployed SAS Application Services.

The structure of E.164 numbers in fixed networks and in mobile networks is the same. Therefore, it shall be possible to store the E.164 numbers for fixed and mobile networks in the same table. It is, however, also possible to have dedicated tables for fixed network E.164 numbers and mobile network E.164 numbers.

The national significant part of the received E.164 or MSIN based input digit string can be characterised by the following properties:

- Length of National Significant Part: fixed length or variable length.
  This property is relevant for the SAS. It is assumed that the SAS Application Service checks whether the National Significant Part has the specified length before the query against the Single Number or Range Number table is performed. The Length of the National Significant Part is a configuration data item for all SAS Application Services.

- National Significant Part always distinguished by leading digits: Yes or No.
  This means, e.g. if 1234 is an allowed number, then 12341, 12343, etc. are not allowed numbers, and vice versa. This property is relevant for the SAS. This property influences the search algorithm in the Single Number and Range Number table. This property is therefore a configuration data item for the SAS Database.

- Dialling Process of National Significant Part: Overlap Dialling or Block Dialling.
  It is assumed that influence of this property on the SAS is completely captured by the property "Requesting of additional digits".

- Requesting of additional digits of National Significant Part in SAS necessary: Yes or No.
  This property is relevant for the SAS. It controls what a SAS Application Service does when its database query in the Single Number or Range Number table returns an AMBIGUOUS. This property is therefore is a configuration data item for all SAS Application Services.

- Dialling Plan of National Significant Part: Open or Closed.
  A closed dialling plan is a national requirement to use all digits of a national number to place a call, no matter whether local or distance (e.g. France and Belgium). In an open dialling plan - on the other hand - it is not always required to use all digits of a national number to place a call (e.g. Fixed Network in Germany, where for local calls only subscriber number is sufficient).
  It is assumed that this property is not relevant for the SAS. It is assumed that before the network queries the SAS, that the network has already collected the full national significant part.

Only three of above five properties are relevant for the SAS. The possible values combinations of these properties and their impact on the SAS are described in Table 1:

Table 1:

| Impact of the Properties of the National Significant Part on the SAS **Impact of the Properties of the National Significant Part on the SAS** | | | |
|---|---|---|---|
| **Property Values** | | | **Impact on SAS Application Services and SAS Database** |
| **Length** | **Distinguished by Leading Digits** | **Requesting of Additional Digits** | |
| Fixed | No | No | Type of Numbering Plan: Closed [1]. Impact on SAS Application Services: Insufficient length returns an Error[4]. Impact on SAS Database, Single Number tables: AMBIGUOUS result will never be reached [6]. Impact on SAS Database, Range Number tables, only Open Ranges: the length of the range delimiters can be less or equal to the fixed length of the numbering plan [11]. Impact on SAS Database, Range Number tables, only Closed Ranges: Range delimiters must have the fixed length of the numbering plan [12]. |

[1] A (regular) Closed Numbering Plan is a telephone numbering scheme that has a fixed length number of digits, not counting special service codes. E.g. North American numbering plan with always three digits area code and seven digits subscriber number. For Closed numbering plans, the property "Distinguish by Leading Digits" does not have any impact. Implicitly, for Closed numbering plan, all number distinguish by leading digits.

[4] The SAS Application Service has to check whether National Significant Part of input digit string has correct length and return an error if this is not the case. The SAS Database is not queried in this case.

[6] For a regular Closed Numbering Plan, the searches in the Single Number tables result never in AMBIGUOUS, only MATCH and NO MATCH are possible. If the database search returns an AMBIGUOUS in this case, the respective SAS Application Service has to generate an error.

[11] The calling SAS Application Service has to make sure that the length of the national specific part of the input digit string is correct.

[12] Closed Ranges model fixed length numbering plans in the most appropriate way.

Table 1: (continued)

| Impact of the Properties of the National Significant Part on the SAS | | | |
|---|---|---|---|
| **Impact of the Properties of the National Significant Part on the SAS** | | | |
| **Property Values** | | | **Impact on SAS Application Services and SAS Database** |
| **Length** | **Distinguished by Leading Digits** | **Requesting of Additional Digits** | |
| Fixed | No | Yes | Type of Numbering Plan: Closed [1]. Impact on SAS Application Services: Insufficient length implies request more digits [5]. Impact on SAS Database, Single Number tables: AMBIGUOUS result will never be reached [6]. Impact on SAS Database, Range Number tables, only Open Ranges: the length of the range delimiters can be less or equal to the fixed length of the numbering plan [11]. Impact on SAS Database, Range Number tables, only Closed Ranges: Range delimiters must have the fixed length of the numbering plan [12]. |

[1] A (regular) Closed Numbering Plan is a telephone numbering scheme that has a fixed length number of digits, not counting special service codes. E.g. North American numbering plan with always three digits area code and seven digits subscriber number. For Closed numbering plans, the property "Distinguish by Leading Digits" does not have any impact. Implicitly, for Closed numbering plan, all number distinguish by leading digits.

[5] SAS Application Service has to check whether National Significant Part of input digit string has sufficient length and request additional digits before it queries the SAS Database. If the National Significant Part of the received input digit string is longer than as specified in the configuration item SasAppliationServiceInputNatLength, then an Error is to be generated.

[6] For a regular Closed Numbering Plan, the searches in the Single Number tables result never in AMBIGUOUS, only MATCH and NO MATCH are possible. If the database search returns an AMBIGUOUS in this case, the respective SAS Application Service has to generate an error.

[11] The calling SAS Application Service has to make sure that the length of the national specific part of the input digit string is correct.

[12] Closed Ranges model fixed length numbering plans in the most appropriate way.

Table 1: (continued)

| Impact of the Properties of the National Significant Part on the SAS<br>**Impact of the Properties of the National Significant Part on the SAS** | | | |
|---|---|---|---|
| **Property Values** | | | **Impact on SAS Application Services and SAS Database** |
| **Length** | **Distinguished by Leading Digits** | **Requesting of Additional Digits** | |
| Fixed | Yes | No | Type of Numbering Plan: Closed [1]. Impact on SAS Application Services: Insufficient length returns an Error[4]. Impact on SAS Database, Single Number tables: AMBIGUOUS result will never be reached [6]. Impact on SAS Database, Range Number tables, only Open Ranges: the length of the range delimiters can be less or equal to the fixed length of the numbering plan [11]. Impact on SAS Database, Range Number tables, only Closed Ranges: Range delimiters must have the fixed length of the numbering plan[12]). |

[1] A (regular) Closed Numbering Plan is a telephone numbering scheme that has a fixed length number of digits, not counting special service codes. E.g. North American numbering plan with always three digits area code and seven digits subscriber number. For Closed numbering plans, the property "Distinguish by Leading Digits" does not have any impact. Implicitly, for Closed numbering plan, all number distinguish by leading digits.

[4] The SAS Application Service has to check whether National Significant Part of input digit string has correct length and return an error if this is not the case. The SAS Database is not queried in this case.

[6] For a regular Closed Numbering Plan, the searches in the Single Number tables result never in AMBIGUOUS, only MATCH and NO MATCH are possible. If the database search returns an AMBIGUOUS in this case, the respective SAS Application Service has to generate an error.

[11] The calling SAS Application Service has to make sure that the length of the national specific part of the input digit string is correct.

[12] Closed Ranges model fixed length numbering plans in the most appropriate way.

Table 1: (continued)

| Impact of the Properties of the National Significant Part on the SAS | | | |
| --- | --- | --- | --- |
| **Impact of the Properties of the National Significant Part on the SAS** | | | |
| **Property Values** | | | **Impact on SAS Application Services and SAS Database** |
| **Length** | **Distinguished by Leading Digits** | **Requesting of Additional Digits** | |
| Fixed | Yes | Yes | Type of Numbering Plan: Closed[1]. Impact on SAS Application Services: Insufficient length implies request more digits [5]. Impact on SAS Database, Single Number tables: AMBIGUOUS result will never be reached [6]. Impact on SAS Database, Range Number tables, only Open Ranges: the length of the range delimiters can be less or equal to the fixed length of the numbering plan [11]. Impact on SAS Database, Range Number tables, only Closed Ranges: Range delimiters must have the fixed length of the numbering plan [12]. |

[1] A (regular) Closed Numbering Plan is a telephone numbering scheme that has a fixed length number of digits, not counting special service codes. E.g. North American numbering plan with always three digits area code and seven digits subscriber number. For Closed numbering plans, the property "Distinguish by Leading Digits" does not have any impact. Implicitly, for Closed numbering plan, all number distinguish by leading digits.

[5] SAS Application Service has to check whether National Significant Part of input digit string has sufficient length and request additional digits before it queries the SAS Database. If the National Significant Part of the received input digit string is longer than as specified in the configuration item SasAppliationServiceInputNatLength, then an Error is to be generated.

[6] For a regular Closed Numbering Plan, the searches in the Single Number tables result never in AMBIGUOUS, only MATCH and NO MATCH are possible. If the database search returns an AMBIGUOUS in this case, the respective SAS Application Service has to generate an error.

[11] The calling SAS Application Service has to make sure that the length of the national specific part of the input digit string is correct.

[12] Closed Ranges model fixed length numbering plans in the most appropriate way.

Table 1: (continued)

| Impact of the Properties of the National Significant Part on the SAS **Impact of the Properties of the National Significant Part on the SAS** | | | |
|---|---|---|---|
| **Property Values** | | | **Impact on SAS Application Services and SAS Database** |
| **Length** | **Distinguished by Leading Digits** | **Requesting of Additional Digits** | |
| Variable | No | No | Type of Numbering Plan: Special Closed, with variable length national significant part [2]. Impact on SAS Application Services: AMBIGUOUS generates and error [7]. Impact on SAS Database, Single Number tables: MATCH and AMBIGUOUS possible at the same time [9]. Impact on SAS Database, Range Number tables, only Open Ranges: Naturally modelled by open ranges [13]. Impact on SAS Database, Range Number tables, only Closed Ranges: Should not be used [13]. |
| Variable | No | Yes | Type of Numbering Plan: Special Closed, with variable length national significant part [2]. Impact on SAS Application Services: AMBIGUOUS requests more digits [8]. Impact on SAS Database, Single Number tables: MATCH and AMBIGUOUS possible at the same time [9]. Impact on SAS Database, Range Number tables, only Open Ranges: Naturally modelled by open ranges [13]. Impact on SAS Database, Range Number tables, only Closed Ranges: Should not be used [13]. |

[2] A Special Closed Numbering Plan with variable length national significant part occurs in some Eastern European countries.

[7] the query against the SAS Database returns an AMBIGUOUS, the SAS Application Service has to generate an error.

[8] If the query against the SAS Database returns an AMBIGUOUS, the SAS Application Service has request more digits.

[9] With respect to a given search digit string, the Single Number table can contain at the same time one entry which returns a MATCH and additionally multiple entries which return an AMBIGUOUS. Therefore, the search algorithm has to make sure that the MATCH is found before the AMBIGUOUS.

[13] Variable length numbering plans are best modelled by open ranges. If closed ranges are necessary, then they either have to be modelled in the Single Number table with the Extended Match mechanism, or the Range Number table has to be completely configured to contain only closed ranges.

Table 1: (continued)

| Impact of the Properties of the National Significant Part on the SAS **Impact of the Properties of the National Significant Part on the SAS** | | | |
|---|---|---|---|
| **Property Values** | | | **Impact on SAS Application Services and SAS Database** |
| **Length** | **Distinguished by Leading Digits** | **Requesting of Additional Digits** | |
| Variable | Yes | No | Type of Numbering Plan: Typical Open. [3] Impact on SAS Application Services: AMBIGUOUS generates and error [7]. Impact on SAS Database, Single Number tables: MATCH and AMBIGUOUS not possible at the same time [10]. Impact on SAS Database, Range Number tables, only Open Ranges: Naturally modelled by open ranges [13]. Impact on SAS Database, Range Number tables, only Closed Ranges: Should not be used [13]. |
| Variable | Yes | Yes | Type of Numbering Plan: Typical Open. [3] Impact on SAS Application Services: AMBIGUOUS requests more digits[8]. Impact on SAS Database, Single Number tables: MATCH and AMBIGUOUS not possible at the same time [10]. Impact on SAS Database, Range Number tables, only Open Ranges: Naturally modelled by open ranges [13]. Impact on SAS Database, Range Number tables, only Closed Ranges: Should not be used [13]. |

[3] An Open Numbering Plan is a telephone numbering scheme that has variable length number of digits, and all national significant numbers distinguish by leading digits.

[7] the query against the SAS Database returns an AMBIGUOUS, the SAS Application Service has to generate an error.

[8] If the query against the SAS Database returns an AMBIGUOUS, the SAS Application Service has request more digits.

[10] For any given search digit string and any given Single Number or table, it is not possible that the search can return both MATCH and AMBIGUOUS.

[13] Variable length numbering plans are best modelled by open ranges. If closed ranges are necessary, then they either have to be modelled in the Single Number table with the Extended Match mechanism, or the Range Number table has to be completely configured to contain only closed ranges.

It is always assumed that the search algorithm in the Single Number and Range Number tables can always decide for a given search number, whether for this search number a MATCH, an AMBIGUOUS, or a NO MATCH is returned. The service logic of the respective SAS Application Service has to decide how the database search result is further processed. In particular, it is a matter of the specific closed numbering plan of a given customer, when the digit analysis queries the Single Number Table and/or the Range Number Table in order to avoid that the query does not occur for the wrong number. E.g. it must be avoided that the database is queried for 1234, if the original intent was that the database is queried for 12341, and vice versa. For both open and closed numbering, the decision what to do with an ambiguous number has to be performed in the SAS Application Service. Details of this discrimination may be customer specific and therefore are CDE.
Note:
There are various cases, where requesting of additional digits can occur:

• Number portability with All Call Query method in fixed networks.
• Number portability with Query on Release method where PABXs are involved.
• Etc.

A SAS Application Service queries the SAS database with the national specific part of the received number, i.e. either Nat or the concatenation of Nat1 and Nat2. If a SAS Application Service queries the SAS database with the national specific part of the received number, the SAS database comes back with either MATCH, NO MATCH, or AMBIGUOUS. The SAS Database knows - by means of a configuration data item - whether the numbers in a Single Number or Range Number table distinguish all be leading digits or not. The SAS Application Services know - by means of configuration data items - whether the national specific part of the received number is of fixed or variable length, or whether or not requesting of additional digits is allowed.
In this specification, it is assumed that requesting of additional digits is only possible with single digits dialling (overlap dialling), and only not possible for block dialling. It is also assumed in this specification that requesting of additional digits is not necessary for Auxiliary Numbers.
These properties of numbering plans apply for E.164 numbers. They also apply for E.212 and E.214 numbers, and for any other types of numbers, where they are useful.

1.2.2.2 Digit Strings and Their Order

A digit string is defined as a final sequence of digits $D_l$ ... $D_n$, where $D_v$ is encoded as a hexadecimal digit.
The length of digit string $D_l$ ... $D_n$ is n.
In order to search and match in a defined and consistent manner, it is necessary to define three relations for digit strings: equal (=), lessThan (<), and leadingSubstringOf.
equal(=):=
Two digit strings are equal, if and only if they are equal in length, and all digits at corresponding positions are equal.

Mathematical definition:

Let digit string A be $D_{A,l}$ ... $D_{A,m}$, and let digit string B be $D_{B,l}$ ... $D_{B,n}$. Then A is equal to B, if and only if

$$(m = n) \wedge \left( \left( \sum_{k=1}^{k=m} D_{A,k} * 16^{(n+1-k)} \right) = \left( \sum_{k=1}^{k=n} D_{B,k} * 16^{(n+1-k)} \right) \right)$$

lessThan (<) :=
Digit string A is lessThan digit string B, if and only if the significant digits of digit string A are less than the significant digits of digit sting B.
Examples: 2345 < 2346, 2345<23451, 2345<23450000, 2345<45.

Mathematical definition:

Let digit string A be $D_{A,l}$ ... $D_{A,m}$, and let digit string B be $D_{B,l}$ ... $D_{B,n}$. Then A < B, if and only if

$$\left( (m < n) \wedge \left( \left( \sum_{k=1}^{k=m} D_{A,k} * 16^{(m+1-k)} \right) \leq \left( \sum_{k=1}^{k=m} D_{B,k} * 16^{(m+1-k)} \right) \right) \right) \vee$$

$$\left( (m \geq n) \wedge \left( \left( \sum_{k=1}^{k=n} D_{A,k} * 16^{(n+1-k)} \right) < \left( \sum_{k=1}^{k=n} D_{B,k} * 16^{(n+1-k)} \right) \right) \right)$$

leadingSubstringOf :=
Digit string A is considered leadingSubstringOf digit string B, if and only if the digit string B has more digits than digit string A, and digit string A is equal to the leading sub-string of digit string B of the same length as digit string A.
Examples: 2345 leadingSubstringOf 23451.

Mathematical definition:

Let digit string A be $D_{A,l} \dots D_{A,m}$, and let digit string B be $D_{B,l} \dots D_{B,n}$. Then A leadingSubstringOf B, if and only if

$$\left( (m < n) \wedge \left( \left( \sum_{k=1}^{k=m} D_{A,k} * 16^{(m+1-k)} \right) = \left( \sum_{k=1}^{k=m} D_{B,k} * 16^{(m+1-k)} \right) \right) \right)$$

Note: If for two digit strings A and B the condition A leadingSubstringOf B is true, then also the condition A<B is true.
It is assumed that in all Single Number tables, in all Range Number tables, and in all Auxiliary Number Tables of the SAS database, the entries are sorted in ascending order according to their primary key. For the Single Number and Range Number tables, the primary key is always a pair including the Number Length and the Number Value. For the Single Number tables is always the respective pair (Number Length, Number Value). For the Range Number tables it is either the respective pair (Number Start Range Length, Number Start Range Value) or the respective pair (Number End Range Length, Number End Range Value), or even both. For the Auxiliary Number table, the primary key is the triple (Auxiliary Number Name, Auxiliary Number Length, Auxiliary Number Value). The ascending order is defined with the following three relations, based on the lessThan (<) relation above:
lessThanV:=
The pair (NumberLength$_A$, NumberValue$_A$) is lessThanV the pair (NumberLength$_B$, NumberValue$_B$), if and only if NumberValue$_A$ lessThan NumberValue$_B$.
lessThanLV :=
The pair (NumberLength$_A$, NumberValue$_A$) is lessThanLV the pair (NumberLength$_B$, NumberValue$_B$), if and only if
    NumberLength$_A$ < NumberLength$_B$, or
    (NumberLength$_A$ = NumberLength$_B$) and (NumberValue$_A$ lessThan NumberValue$_B$).
lessThanNV :=
The triple (NumberName$_A$, NumberLength$_A$, NumberValue$_A$) is lessThanNV the triple (NumberName$_B$, NumberLength$_B$, NumberValue$_B$), if and only if
    NumberName$_A$ < NumberName$_B$, or
    (NumberName$_A$ = NumberName$_B$) and (NumberValue$_A$ lessThan NumberValue$_B$).
The ascending order in the Single Number tables and in the Auxiliary Number table is defined on the relations lessThanV and lessThanNV as follows:

- For Single Number tables: lessThanV for the pair (NumberLength, NumberValue).

- For the Auxiliary Number table: lessThanNV for the triple (AuxiliaryNumberName, AuxiliaryNumberLength, AuxiliaryNumberValue).

The relation lessThanV is necessary for defining the ascending order in the Single Number tables. The relation lessThanNV is necessary for defining the ascending order in the Auxiliary Number table.

For Single Number tables, lessThanV has to be used, as possible matches, ambiguities and extended matches are very close together. With lessThanLV and Single Number tables, possible matches, ambiguities and extended matches may be very far away from each other, which makes the search algorithm inefficient. lessThanLV will be used in defining the ascending order in Range Number tables.

Each search in the Auxiliary Number table is always restricted to the set of entries belonging to a given AuxiliaryNumberName. Therefore, the relation lessThanV is not used for defining the ascending order, as in this case too many entries would be visited during the search unnecessarily. With lessThanNV, the ascending order in the Auxiliary Number table is defined in a way that only those entries are visited during the search which are really possible candidates to be found.

The ascending order in Range Number tables is defined in 1.2.2.3.2.2.

1.2.2.3 Searching and Matching

Based on an ascending order in the respective tables, searching and matching can be defined. This is a quite complex issue, which also works differently for the various kinds of tables. Four cases have to be distinguished for searching and matching:

1. Searching and Matching in the Single Number tables, where the Extended Match mechanism is disabled. This is the easiest case.

2. Searching and Matching in the Range Number tables. Here the concept of ranges is introduced and their order criteria. As a special case, single numbers can be represented in a Range Number table. Therefore, searching and matching in the Range Number tables builds upon searching and matching in the Single Number tables.

3. Also as a special case, ranges can be represented in the Single Number tables. This introduces the Extended Match mechanism. Searching and Matching in the Single Number tables, where the Extended Match mechanism is enabled builds upon the first two kinds of searching and matching.

4. Searching and Matching in the Auxiliary Number table. This is a bit different from the all above three cases.

All four cases for searching and matching are specified in detail in the following four sub-chapters. This sub-chapter closes with considerations on the B-Tree implementation of the number tables.

The normal use of the Single Number table is to store single numbers, i.e. either exception single number entries or default single number entries. The normal use of the Range Number table is to store default and exception ranges. The Default/Exception Indicator of the respective entry indicates the Default and Exception role. The single numbers in the Single Number tables are mainly exception single numbers. The ranges in the Range Number tables are mainly default ranges.

In general, the search starts in the Single Number table. If the result is NO MATCH, then the corresponding Range Number table is queried.

However, with the introduction of the Extended Matches in Single Number tables, this rule can be relaxed. The Single Number tables can now contain also ranges. With the introduction of the Single Number Flag in the Range Number tables can now also contain single numbers.

1.2.2.3.1 Searching and Matching in the Single Number Tables, Extended Match Disabled

Single Number tables where the Extended Match mechanism is disabled can store single number entries, with both roles Default and Exception.

The Service Logic Access interface of the SAS database returns number queries against the Single Number tables with either MATCH, NO MATCH, or AMBIGUOUS. A MATCH returns also the found entry. NO MATCH and AMBIGUOUS do not return any entry. The SAS Application Service has to decide what to do with these responses, in particular what to with the AMBIGUOUS response. The SAS Application Service uses for this decision among other service specific data, configurable data items, such as NatRequestAdditionalDigitsAllowed.

A search algorithm in a Single Number table is always based on the ascending order defined for this table, i.e. lessThanV for the pair (NumberLength, NumberValue).

The ascending order, the search algorithms and the match algorithms are all based on the primary key of the Single Number table: i.e. the pair (NumberLength, NumberValue).

The search algorithm traverses the Single Number table based on the ascending order using the primary key.

It can either go from the smallest to the greatest primary key or from the greatest to the smallest primary key. This results in two possible search algorithms for Single Number tables.

Single Number tables contain single number entries and - if the configuration data item ExtendedMatchStatus is ENABLED - also ranges. Ranges are introduced in 0. Therefore, in this sub-chapter we consider only Single Number tables where the Extended Match is disabled. After the treatment of Ranges, searching and matching in Single Number tables with enabled Extended Match mechanism is specified in 0.

In general, if the configuration data item ExtendedMatchStatus is DISABLED for this Single Number table, there are the following static definitions of MATCH, AMBIGUOUS and NO MATCH:

- A MATCH occurs, if the queried Search Digit String is exactly found in the Single Number table, i.e. there is an entry where the Number Value is equal to the Search Digit String.

- An AMBIGUOUS occurs, if there is no entry in the Single Number table, of which the Number Value generates a MATCH with the Search Digit String, and the Search Digit String is a leading sub-string of at least one Number Value in the Single Number table. E.g. the queried Search Digit String 1234 is not an entry in the Single Table, but there are entries with 123467 and 1234765 in the Single Table.

  - If the numbers of the numbering plan in the Single Number table all distinguish by leading digits - configuration item SasDbTableNatDistinguishedByLeadingDigits = YES - then MATCH and AMBIGUOUS can never occur at the same time for a given Search Digit String in this Single Number table.

  - If the numbers of the numbering plan in the Single Number table DO NOT all distinguish by leading digits - configuration item SasDbTableNatDistinguishedByLeadingDigits = NO - then MATCH and AMBIGUOUS can occur at the same time for a given Search Digit String in this Single Number table.

- A NO MATCH occurs, if the queried Search Digit String does neither result in a MATCH nor in an AMBIGUOUS for all entries in the Single Number table.

These static definitions have to be realised by the search algorithm. From a logical point of view, the database search in a Single Number table walks either from the smallest digit string primary key to the greatest digit string primary key, or in the opposite direction, based on the lessThanV relation above. The physical access methods of the SAS database have to assure that the respective search direction is guaranteed.

The following specifies the dynamic search conditions a given Search Digit Sting can have with respect to a visited entry in the Single Number table. If the configuration data item ExtendedMatchStatus is DISABLED for this Single Number table then a given Search Digit String can have the following four possible relationships with the Number Value primary key of a given Single Number table entry:

1 SearchDigitString = NumberValue: this relationship will result in a MATCH. Then the search algorithm terminates.

2 SearchDigitString leadingSubstringOf NumberValue: the search algorithm detects an AMBIGUOUS. The search algorithm terminates if the numbers of the numbering plan in this Single Number table all distinguish by leading digits. If the numbers of the numbering plan in this Single Number table DO NOT all distinguish by leading digits, then the search algorithm has first to make sure that there is no MATCH in the table before it terminates.

3 SearchDigitString > NumberValue:

   3.1 If the search goes from the smallest to the greatest, the search shall continue.
   3.2 If the search goes from the greatest to the smallest, the search shall terminate and return NO MATCH, if neither MATCH nor AMBIGUOUS has been found in this Single Number table.
   Note: if the search goes from the greatest to the smallest, the Search Digit String can only enter into this condition, if there was no MATCH; however, an AMBIGUOUS may or may not have been found.

4 (SearchDigitString < NumberValue) AND (NOT (SearchDigitString leadingSubstringOf NumberValue)): this relationship tells the database search algorithm that the SearchDigitString is really smaller than the entry's NumberValue (without being its leading sub-string), and

   4.1 If the search goes from the smallest to the greatest, the search shall terminate and return NO MATCH, if neither MATCH nor AMBIGUOUS has been found in this Single Number table.

Note: if the search goes form the smallest to the greatest, the Search Digit String can only enter into this condition, if there was neither a MATCH nor AMBIGUOUS.

4.2 If the search goes from the greatest to the smallest, the search shall continue.

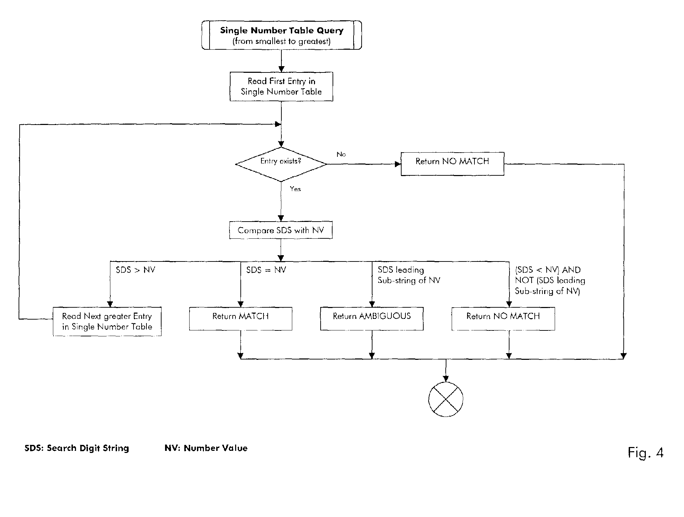

Figure 4 depicts the SAS Database query search algorithm in the Single Number table with search direction from the smallest to the greatest and Extended Match disabled.

Figure 4 shows a SAS Database Query Search Algorithm in Single Number Table with Search Direction from the smallest to the greatest, Extended Match Disabled.

This algorithm progresses from the smallest to the greatest NumberValue, as long as the SearchDigitString is really greater than the NumberValue. As soon as this condition is no longer fulfilled, it checks for MATCH, AMBIGUOUS, or NO MATCH.

The search algorithm for Single Number tables, which searches from the smallest to the greatest, can be used for all possible values of the configuration item NatDistinguishedByLeadingDigits (either YES or NO).

If the Single Number table contains the numbers 1234 and 12345 - i.e. the numbers of the table belong to a Special Closed Numbering Plan - then this algorithm finds the MATCH with 1234, and not the AMBIGUOUS with 12345. The search algorithm from the smallest to the greatest finds efficiently the MATCH before the AMBIGUOUS, as the MATCH occurs earlier than the AMBIGUOUS. The configuration data item NatDistinguishedByLeadingDigits does not need to be taken into account here.

If the database runs into an error situation, this error has to be indicated to the calling procedure, plus a respective counter to be increased.

If a Single Number table is to be searched from the greatest to the smallest entry, then some complications arise:

- If the Single Number table contains the numbers 1234 and 12345 - i.e. the numbers of the table belong to a Special Closed Numbering Plan - then this algorithm finds the AMBIGUOUS before the MATCH. If also in this case it has to be assured that the MATCH is returned and not the AMBIGUOUS, additional algorithms have to be introduced.

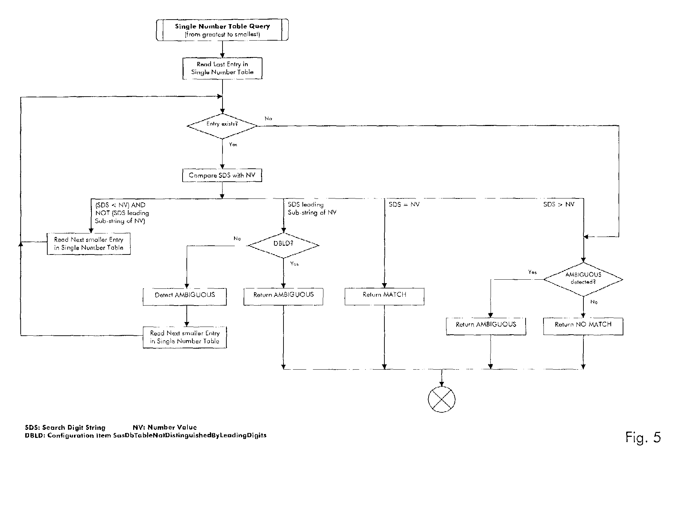

Figure 5 depicts the SAS Database query search algorithm in the Single Number table with search direction from the smallest to the greatest and Extended Match disabled.

Figure 5 shows a SAS Database Query Search Algorithm in Single Number Table with Search Direction from the greatest to the smallest, Extended Match Disabled.

This algorithm progresses from the greatest to the smallest NumberValue, as long as the SearchDigitString is really smaller than the NumberValue, without being a leading sub-string of the Number Value. As soon as this condition is no longer fulfilled, it checks for MATCH, AMBIGUOUS, or NO MATCH. Particular care has to be taken for AMBIGUOUS returns. If the numbers in the Single Number table all distinguish by leading digits, then AMBIGUOUS can immediately be returned. If the numbers in the Single Number table DO NOT all distinguish by leading digits, then further entries have to be checked for a possible exact MATCH. If no exact MATCH is found, then as soon as the search digit string is greater than the entry's number value, the AMBIGUOUS is returned.

If the database runs into an error situation, this error has to be indicated to the calling procedure, plus a respective counter to be increased.

Conclusion:

The search algorithm from the smallest to the greatest (Figure 4) is less complex than the search algorithm from the greatest to the smallest (Figure 5). Therefore, if the Extended Match mechanism is disabled for a Single Number table, the search algorithm from the smallest to the greatest (Figure 4) is recommended.

1.2.2.3.2 Searching and Matching in the Range Number Tables

Searching and matching in Range Number tables is more complex than searching and matching in Single Number tables. Therefore, this chapter has four sub-chapters:

1. Fundamental Definitions and Matches.

2. Sorting of Entries in the Range Number tables.

3. Searching in Range Number tables.

4. Representation of ranges in Single Number tables using the Extended Match mechanism.

1.2.2.3.2.1 Fundamental Definitions and Matches

For ranges, the whole issue is a bit more complex. Therefore, at first the following definitions on ranges are introduced:
Range:=
A Range is a defined set of numbers. This set of numbers is specified by the Start-of-Range digit sequence and the End-of-Range digit sequence. The Start-of-Range digit sequence and the End-of-Range digit sequence shall have the same number of digits.
This is always true for closed ranges. For open ranges, this constraint is not a restriction, as illustrated by the following examples:

• The open range 33435-34 has an equivalent representation with the open range 33435-34999.
• The open range 33435-34567545 has an equivalent representation with the two open ranges 33435-34566 and 34567000-34567545.
• Note: if the Start-of-Range digit sequence and the End-of-Range digit sequence of an open range have different length, then the result AMBIGUOUS cannot be clearly defined. This is the main reason for always having Start-of-Range digit sequence and End-of-Range digit sequence with the same length.

Open Range :=
An Open Range is a range, where a match occurs for search digit strings, where the number of digits is greater or equal to the number of digits of the Start-of-Range or End-of-Range digit sequence, and the significant digits are within the range definition.
For any Range Number table containing open ranges, an entry shall be considered a MATCH, when the following conditions are met:

• The number of digits in the search digit string is greater than or equal to the number of digits of the start of the range (or end of the range), and
• The significant digits in the search digit string are greater than or equal to the significant digits in the start of the range and less than or equal to the significant digits in the end of the range.

For any Range Number table containing open ranges, an entry shall be considered AMBIGUOUS with a search digit string, when the following conditions are met:

• The number of digits in the search digit string are less than the number of digits of the start of the range (or end of the range) of the found entry, and
• The digits of the search digit string are within the range boundaries.

For any Range Number table containing open ranges, an entry shall be considered NO MATCH, if the queried number does neither result in a MATCH nor in an AMBIGUOUS for all entries in the Range Number table.

Examples:

• The open range 33435-34999 is an entry in the range database. Then the search digit strings 33556, 3367896, and 349999999 result in a MATCH. The search digit string 345 is considered AMBIGUOUS. The search digit strings 324 and 4345667 are outside the range.

Closed Range :=
An Closed Range is a range, where a match occurs for digit strings, where the number of digits is exactly equal to the number of digits of the Start-of-Range or End-of-Range digit sequence, and the significant digits are within the range definition.
For any Range Number table containing closed ranges, an entry shall be considered a MATCH, when the following conditions are met:

• The number of digits in the search digit string is equal to the number of digits of the start of the range (or end of the range), and
- The digits in the search digit string are greater than or equal to the digits in the start of the range and less than or equal to the digits in the end of the range.

For any Range Number table containing closed ranges, an entry shall be considered AMBIGUOUS with a search digit string, when the following conditions are met:

- The number of digits in the search digit string are less than the number of digits of the start of the range (or end of the range) of the found entry, and
- The digits of the search digit string are within the range boundaries.

For any Range Number table containing closed ranges, an entry shall be considered NO MATCH, if the queried number does neither result in a MATCH nor in an AMBIGUOUS for all entries in the Range Number table.

Examples:

- The closed range 33435-34999 is an entry in the range database. Then the search digit string 33556 results in a match. The search digit string 345 is considered ambiguous. The search digit strings 3367896, 349999999, 324 and 4345667 are outside the range.

Note: a Range Number table contains either only open ranges or only closed ranges. This property of a Range Number table is specified by a configuration data item.
Overlapping ranges are explicitly forbidden in the Range Number and Single Number tables of the SAS. If the SPS supports overlapping ranges, then they have to be mapped into split non-overlapping ranges.
Two ranges R1 and R2 overlap, if there exists at least one single number, which results in a match for both ranges R1 and R2.
For any Range Number table, the number of significant digits entered for the start of the range must exactly match the number of significant digits entered for the end of the range.
I.e. the following attempted range entry is invalid: 5551234-555123.
For any Range Number table, the start of the range must not exceed the value of the end of the range.
The following presents a formal representation of the range definitions.
A range is defined a pair of digit sequences: $D_{StartRange,l} \ldots D_{StartRange,n} - D_{EndRange,l} \ldots D_{EndRange,n}$.
A search digit string is defined as a digit sequence: $D_{Search,l} \ldots D_{Search,i}$.
For open ranges, a MATCH occurs when there exists an entry in the Range Number table with

$$(i \geq n) \wedge \left( \left( \sum_{k=1}^{k=n} D_{StartRange,k} * 16^{(n+1-k)} \right) \leq \left( \sum_{k=1}^{k=n} D_{Search,k} * 16^{(n+1-k)} \right) \leq \left( \sum_{k=1}^{k=n} D_{EndRange,k} * 16^{(n+1-k)} \right) \right)$$

For open ranges, an AMBIGUOUS occurs when there exists an entry in the Range Number table with

$$(i < n) \wedge \left( \left( \sum_{k=1}^{k=i} D_{StartRange,k} * 16^{(i+1-k)} \right) \leq \left( \sum_{k=1}^{k=i} D_{Search,k} * 16^{(i+1-k)} \right) \leq \left( \sum_{k=1}^{k=i} D_{EndRange,k} * 16^{(i+1-k)} \right) \right)$$

For open ranges, a NO MATCH occurs when there exists no entry in the Range Number table, which generates a MATCH or an AMBIGUOUS.
The entries in the Range Number table have an attribute "Single Number Flag" which indicates whether the range definition in this entry is to be interpreted as a range or as a single number. The above conditions apply for entries where the Single Number Flag is set to "Interpret Entry as Range". If the Single Number Flag is set to "Interpret Entry as Range" the start range number and the end range number have to be exactly the same. Additionally, the MATCH condition has to be modified to

$$\left(i=n\right) \wedge \left( \left( \sum_{k=1}^{k=n} D_{StartRange,k} * 16^{(n+1-k)} \right) \leq \left( \sum_{k=1}^{k=n} D_{Search,k} * 16^{(n+1-k)} \right) \leq \left( \sum_{k=1}^{k=n} D_{EndRange,k} * 16^{(n+1-k)} \right) \right)$$

The AMBIGUOUS condition remains as it was above.

For closed ranges, a MATCH occurs when there exists an entry in the Range Number table with

$$\left(i=n\right) \wedge \left( \left( \sum_{k=1}^{k=n} D_{StartRange,k} * 16^{(n+1-k)} \right) \leq \left( \sum_{k=1}^{k=n} D_{Search,k} * 16^{(n+1-k)} \right) \leq \left( \sum_{k=1}^{k=n} D_{EndRange,k} * 16^{(n+1-k)} \right) \right)$$

For closed ranges, an AMBIGUOUS occurs when there exists an entry in the Range Number table with

$$\left(i<n\right) \wedge \left( \left( \sum_{k=1}^{k=i} D_{StartRange,k} * 16^{(i+1-k)} \right) \leq \left( \sum_{k=1}^{k=i} D_{Search,k} * 16^{(i+1-k)} \right) \leq \left( \sum_{k=1}^{k=i} D_{EndRange,k} * 16^{(i+1-k)} \right) \right)$$

For closed ranges, a NO MATCH occurs when there exists no entry in the Range Number table, which generates a MATCH or an AMBIGUOUS.

The conditions for MATCH and AMBIGUOUS for closed ranges are the same, no matter to which value the attribute Single Number Flag is set for this entry.

1.2.2.3.2.2 Sorting of Entries in the Range Number Tables

Ranges need to be sorted in the Range Number tables. This is a bit more complex than for Single Number tables and the Auxiliary Number table. A given Range Number table can only contain one type of ranges. I.e. a Range Number table contains either only Open Ranges or only Closed Ranges. This type of the Range Number table is defined in the configuration item SasDbTableRangeType. For any open or closed range, the following condition holds:

NumberStartRangeValue <= NumberEndRangeValue.

The special case where

NumberStartRangeValue = NumberEndRangeValue

specifies either a range of numbers or a single number. The Single Number Flag of the respective Range Number entry defines this distinction. If the Single Number Flag is set to "Interpret Entry as Range", the entry is interpreted as range. If the Single Number Flag is set to "Interpret Entry as Single Number", the entry is interpreted as single number.

This is illustrated by the following example. Given the range 12345-12345. If the Range Number table contains only closed ranges, then this range defines only the single number 12345. If the Range Number table contains only open ranges, and the Single Number Flag of this entry is set to "Interpret Entry as Range", then this range defines all numbers with any length greater or equal to 5 and starting with 12345. If the Range Number table contains only open ranges, and the Single Number Flag of this entry is set to "Interpret Entry as Single Number", then this range defines only the single number 12345.

The following definitions for an ascending order of entries in Range Number tables are possible:

1. Range A lessThanR0-O Range B, if and only if all digit strings (DigitStringNumberLength, DigitStringNumberValue), which result in a MATCH in Range A are lessThanV all digit strings (DigitStringNumberLength, DigitStringNumberValue), which result in a MATCH in Range B.

2. Range A lessThanR0-C Range B, if and only if all digit strings (DigitStringNumberLength, DigitStringNumber-

Value), which result in a MATCH in Range A are lessThanLV all digit strings (DigitStringNumberLength, DigitStringNumberValue), which result in a MATCH in Range B.

3. Range A lessThanR1 Range B, if and only if NumberStartRangeValue$_A$ lessThan NumberStartRangeValue$_B$.

4. Range A lessThanR2 Range B, if and only if NumberEndRangeValue$_A$ lessThan NumberEndRangeValue$_B$.

The relations lessThanR0-O, lessThanR0-C, lessThanR1 and lessThanR2 can be applied to Range Number tables containing only open ranges. However, it does not make sense to apply lessThanR0-C to open ranges, as this would destroy the "natural order" of open ranges.

The relations lessThanR0-C, lessThanR1 and lessThanR2 can be applied to Range Number tables containing only closed ranges. lessThanR0-O cannot be applied to closed ranges. As an illustration, consider the two closed ranges 10-19 and 100-199. The closed range 10-19 contains entries, which are smaller than entries in the closed range 100-199 (e.g. 11 is smaller than 123), and entries which are greater than entries in 100-199 (e.g. 17 is greater than 123).

In the SAS Database it is forbidden, that ranges overlap.

This implies that for any two (open or closed) ranges A and B, exactly one of the following conditions holds:

Either (NumberEndRangeValue$_A$ lessThan NumberStartRangeValue$_B$) AND NOT (NumberEndRangeValue$_A$ leadingSubstringOf NumberStartRangeValue$_B$),

Or (NumberEndRangeValue$_B$ lessThan NumberStartRangeValue$_A$) AND NOT (NumberEndRangeValue$_B$ leadingSubstringOf NumberStartRangeValue$_A$).

For open ranges, this implies that the relations lessThanR0-O, lessThanR1 and lessThanR2 are equivalent. I.e. all three relations define the same ascending order for ranges in a Range Number table for open ranges.

For closed ranges, all three relation lessThanR0-C, lessThanR1, and lessThanR2 each define a different ascending order for the closed ranges in the Range Number table.

The situation for the closed ranges is illustrated by the following example. Suppose, the Range Number table contains the following eight ranges: 10-14, 15-19, 20-29, 30-39, 100-199, 200-249, 250-299, and 300-399. The relation lessThanR0-C orders them in this sequence. The relations lessThanR1 orders them in the sequence 10-14, 100-199, 15-19, 20-29, 200-249, 250-299, 30-39, 300-399. The relations lessThanR1 orders them in the sequence 10-14, 15-19, 100-199, 200-249, 20-29, 250-299, 30-39, 300-399.

The requirement above - ranges must not overlap in the SAS database - applies even in the case when ranges are modelled both in the Range Number table and in the corresponding Single Number table using the Extended Match mechanism.

This results in exactly one ascending order for Range Number tables containing only open ranges, and three ascending orders for Range Number tables containing only closed ranges. The ascending order in the Range Number tables is defined on the relations lessThanR0-O, lessThanR0-C, lessThanR1, and lessThanR2 as follows:

• Range Number tables with only open ranges are sorted equivalently based on the relations lessThanR0-O, lessThanR1 and lessThanR2.

• Option 1 for Range Number tables with only closed ranges:

    Sorted on the relation lessThanR0-C.

• Option 2 for Range Number tables with only closed ranges:

    Sorted on the relation lessThanR1.

• Option 3 for Range Number tables with only closed ranges:

    Sorted on the relation lessThanR2.

If open or closed ranges are modelled with the Extended Match mechanism in the Single Number table, then the order of the resulting Single Number table entries is always defined by the relation lessThanV. This harmonises the order criteria for open and closed ranges, as their order is then only based on the relation lessThanV.

1.2.2.3.2.3 Searching in Range Number Tables

Range Number tables can store ranges of both roles, Default and Exception. By means of the Single Number Flag of a Range Number entry, it is also possible to store true single numbers in a Range Number table. These single numbers can in principle also have both roles, Default and Exception. All true ranges in a Range Number table must not overlap. A Default true single number in a Range Number table must not overlap with any Default or Exception range.

It is, however, forbidden to model exception single numbers in Range Number tables. Representing single numbers as ranges is inefficient usage of storage. In general there are many exception single numbers. It does not make sense to distribute the same type of numbers over more than one table. If exception single numbers and default ranges are in the same table, then the search algorithm must not terminate after a MATCH with a default range, but has to go on an look for an exception single number within this default range. Such a search algorithm is complicated and inefficient.

The Service Logic Access interface of the SAS database returns number queries against the Range Number tables with either MATCH, NO MATCH, or AMBIGUOUS. A MATCH returns also the found entry. NO MATCH and AMBIGUOUS do not return any entry. The SAS Application Service has to decide what to do with these responses, in particular what to with the AMBIGUOUS response. The SAS Application Service uses for this decision among other service specific data, configurable data items, such as NatRequestAdditionalDigitsAllowed.

Searching in Range Number tables is different for open ranges and closed ranges. Therefore, the search algorithms for each type of range are specified in a dedicated sub-chapter.

1.2.2.3.2.3.1 Searching in Range Number Tables, Open Ranges

The search algorithm in Range Number tables is determined by the fact whether or not true single numbers are allowed in this Range Number table. This fact is represented in the configuration data item SasDbTableTrueSingleNumbersAllowed. The following two sub-chapters specify the respective algorithms. We start with the simple case, i.e. true single numbers are not allowed.

1.2.2.3.2.3.1.1 Searching in Range Number Tables, Open Ranges, True Single Numbers Not Allowed

A search algorithm in a Range Number table is always based on the ascending order applied in this table. There is only one ascending order defined for open ranges, based on the relations lessThanR0-O, lessThanR1 and lessThanR2.

The search algorithms are based on the primary key of the Range Number table, i.e. either the pair (NumberStartRangeLength, NumberStartRangeValue) or the pair (NumberEndRangeLength, NumberEndRangeValue).

The match algorithms for Range Number tables are based on the formal definitions of MATCH and AMBIGUOUS for open and closed ranges.

The search algorithm traverses the Range Number table based on the ascending order using the respective primary key. It can either go from the smallest to the greatest primary key or from the greatest to the smallest primary key. This results in four possible search algorithms for Range Number tables containing only open ranges:

- From the smallest to the greatest using the pair (NumberStartRangeLength, NumberStartRangeValue) as primary key.
- From the greatest to the smallest using the pair (NumberStartRangeLength, NumberStartRangeValue) as primary key.
- From the smallest to the greatest using the pair (NumberEndRangeLength, NumberEndRangeValue) as primary key.
- From the greatest to the smallest using the pair (NumberEndRangeLength, NumberEndRangeValue) as primary key.

Range Number tables contain as entries ranges. Based on the Single Number Flag of a Range Number table entry, this entry is either interpreted as a range or as a single number. In this sub-chapter, only the case is considered where the Single Number Flag of all entries is set to "Interpret Entry as Range".

For Range Number tables containing only open ranges, there are the following static definitions of MATCH, AMBIGUOUS and NO MATCH:

- A MATCH occurs, if the queried Search Digit String fulfils the respective formal range match condition for open ranges above, with respect to a found entry in the Range Number table. A given Search Digit String can only match with exactly one range entry in the Range Number table.

- An AMBIGUOUS occurs, if the queried Search Digit String fulfils the respective formal range ambiguous condition for open ranges above, with respect to a found entry in the Range Number table. The following additional statements are also true:

  - A given Search Digit String can be AMBIGUOUS with one or more range entries in the Range Number table. Example: consider the ranges [1111-1119], [112-115]. The Search Digit String 11 is AMBIGUOUS with both.

  - If a given Search Digit String is AMBIGUOUS with a range in a Range Number table containing only open ranges, then there must be no other range in this table resulting in a MATCH with this Search Digit String. This is illustrated by the following example: consider the range [1111-1119]. The AMBIGUOUS Search Digit String 11 can match with the range [10-11]. The range [10-11] overlaps with the range [1111-1119]. This is not allowed.

- A NO MATCH occurs, if the queried Search Digit String does neither result in a MATCH nor in an AMBIGUOUS for all entries in the Range Number table.

The fact whether the numbers of the numbering plan, which is stored in the Range Number table distinguish all by leading digits, does not have an effect on the above three conditions, as long as the Single Number Flag is set to "Interpret Entry as Range". I.e. the effect of the configuration item SasDbTableNatDistinguishedByLeadingDigits on the search algorithms in Range Number tables containing only open ranges has to be considered in combination with the Single Number Flag set to "Interpret Entry as Single Number".

These static definitions have to be realised by the search algorithms. The dynamic behaviour of the search in Range Number tables containing only open ranges is based on the following two principles:

- When the Search Digit String traverses the Range Number table with only open ranges from the smallest to the greatest, it has to stop at the first entry where
      ((SearchDigitStringValue <= NumberEndRangeValue) OR
      (NumberEndRangeValue leadingSubstringOf SearchDigitStringValue)).
  Then the algorithms for MATCH and AMBIGUOUS have to be started.
  Then the search terminates with returning either MATCH, AMBIGUOUS, or NO MATCH.

- When the Search Digit String traverses the Range Number table with only open ranges from the greatest to the smallest, it has to stop at the first entry where
      ((SearchDigitStringValue >= NumberStartRangeValue) OR
      (SearchDigitStringValue leadingSubstringOf NumberStartRangeValue)).
  Then the algorithms for MATCH and AMBIGUOUS have to be started.
  Then the search terminates with returning either MATCH, AMBIGUOUS, or NO MATCH.

This implies that the above four possible search algorithms for Range Number tables containing only open ranges are effectively reduced to only the following two:

- From the smallest to the greatest using the pair (NumberEndRangeLength, NumberEndRangeValue) as primary key.
- From the greatest to the smallest using the pair (NumberStartRangeLength, NumberStartRangeValue) as primary key.

The physical access methods of the SAS database have to assure that these search directions are guaranteed.

The two algorithms outlined above are specified by the following two SDL diagrams below.

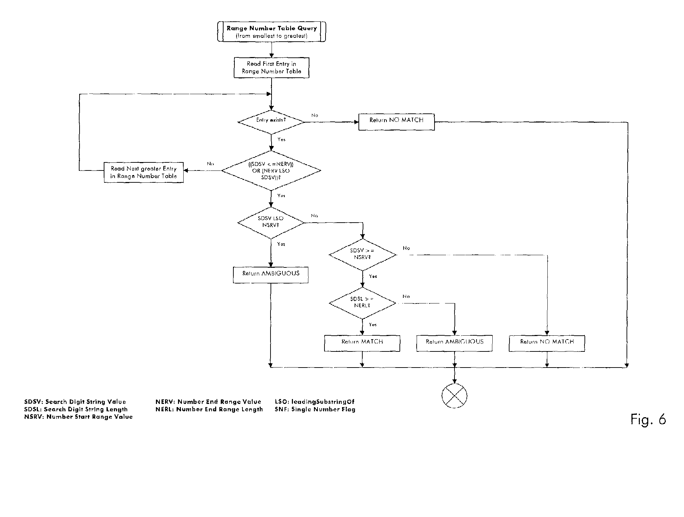

Figure 6 shows a SAS Database Query Search Algorithm in Range Number Table with Search Direction from the smallest to the greatest, Open Ranges, True Single Numbers Not Allowed.

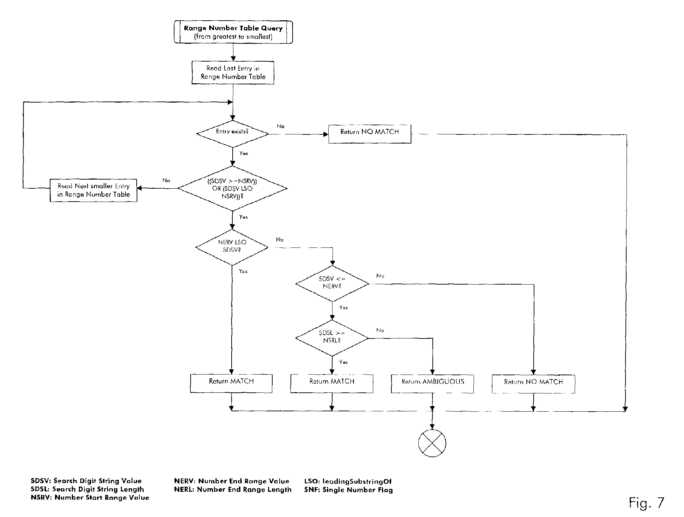

Figure 7 shows a SAS Database Query Search Algorithm in Range Number Table with Search Direction from the greatest to the smallest, Open Ranges, True Single Numbers Not Allowed.

Both algorithms are quite similar. Therefore, in Range Number tables containing only open ranges and no true single numbers, the search direction does not matter.

If the database runs into an error situation, this error has to be indicated to the calling procedure, plus a respective counter to be increased.

1.2.2.3.2.3.1.2 Searching in Range Number Tables, Open Ranges, True Single Numbers Allowed

A search algorithm in a Range Number table is always based on the ascending order applied in this table. There is only one ascending order defined for open ranges, based on the relations lessThanR0-O, lessThanR1 and lessThanR2.

The search algorithms are based on the primary key of the Range Number table, i.e. either the pair (NumberStartRangeLength, NumberStartRangeValue) or the pair (NumberEndRangeLength, NumberEndRangeValue).

The match algorithms for Range Number tables are based on the formal definitions of MATCH and AMBIGUOUS for open and closed ranges.

The search algorithm traverses the Range Number table based on the ascending order using the respective primary key. It can either go from the smallest to the greatest primary key or from the greatest to the smallest primary key. This results in four possible search algorithms for Range Number tables containing only open ranges:

- From the smallest to the greatest using the pair (NumberStartRangeLength, NumberStartRangeValue) as primary key.
- From the greatest to the smallest using the pair (NumberStartRangeLength, NumberStartRangeValue) as primary key.
- From the smallest to the greatest using the pair (NumberEndRangeLength, NumberEdRangeValue) as primary key.
- From the greatest to the smallest using the pair (NumberEndRangeLength, NumberEndRangeValue) as primary key.

Range Number tables contain as entries ranges. Based on the Single Number Flag of a Range Number table entry, this entry is either interpreted as a range or as a single number.

For Range Number tables containing only open ranges, there are the following static definitions of MATCH, AMBIGUOUS and NO MATCH:

- A MATCH occurs, if the queried Search Digit String fulfils the respective formal range match condition for open ranges above, with respect to a found entry in the Range Number table. A given Search Digit String can only match with exactly one range entry in the Range Number table. If the Single Number Flag for this entry is set to "Interpret Entry as Single Number", then a MATCH occurs if the Search Digit String is exactly equal to the entry's Number Start Range Value or Number End Range Value.

- An AMBIGUOUS occurs, if the queried Search Digit String fulfils the respective formal range ambiguous condition for open ranges above, with respect to a found entry in the Range Number table. The following additional statements are also true:

  - A given Search Digit String can be AMBIGUOUS with one or more range entries in the Range Number table. Example: consider the ranges [1111-1119], [112-115]. The Search Digit String 11 is AMBIGUOUS with both.

  - If a given Search Digit String is AMBIGUOUS with a range in a Range Number table containing only open ranges, then there must be no other range in this table resulting in a MATCH with this Search Digit String. This is illustrated by the following example: consider the range [1111-1119]. The AMBIGUOUS Search Digit String 11 can match with the range [10-11]. The range [10-11] overlaps with the range [1111-1119]. This is not allowed.

  - If the Single Number Flag for this entry is set to "Interpret Entry as Single Number", then an AMBIGUOUS occurs if the Search Digit String is a leading sub-string of the entry's Number Start Range Value or Number End Range Value.

- A NO MATCH occurs, if the queried Search Digit String does neither result in a MATCH nor in an AMBIGUOUS for all entries in the Range Number table.

The fact whether the numbers of the numbering plan, which is stored in the Range Number table distinguish all by leading digits, does not have an effect on the above three conditions, as long as the Single Number Flag is set to "Interpret Entry as Range". I.e. the effect of the configuration item SasDbTableNatDistinguishedByLeadingDigits on the search algorithms in Range Number tables containing only open ranges has to be considered in combination with the Single Number Flag set to "Interpret Entry as Single Number".

These static definitions have to be realised by the search algorithms. The dynamic behaviour of the search in Range Number tables containing only open ranges is based on the following two principles:

- When the Search Digit String traverses the Range Number table with only open ranges from the smallest to the greatest, it has to stop at the first entry where

  ((SearchDigitStringValue <= NumberEndRangeValue) OR
  (NumberEndRangeValue leadingSubstringOf SearchDigitStringValue)).

  Then the algorithms for MATCH and AMBIGUOUS have to be started, taking into account the actual value of the entry's Single Number Flag.
  Then the search terminates with returning either MATCH, AMBIGUOUS, or NO MATCH.

- When the Search Digit String traverses the Range Number table with only open ranges from the greatest to the smallest, it has to stop at the first entry where

  ((SearchDigitStringValue >= NumberStartRangeValue) OR
  (SearchDigitStringValue leadingSubstringOf NumberStartRangeValue)).

  Then the algorithms for MATCH and AMBIGUOUS have to be started, taking into account the actual value of the entry's Single Number Flag.
  If these algorithms return MATCH or NO MATCH, then the respective result is returned and the search terminates.
  If these algorithms return AMBIGUOUS, and the configuration item SasDbTableNatDistinguishedByLeadingDigits is set to YES or the Single Number Flag set to "Interpret Entry as Range" in this entry, then the respective result is returned and the search terminates.
  If these algorithms return AMBIGUOUS, and the configuration item SasDbTableNatDistinguishedByLeadingDigits is set to NO and the Single Number Flag set to "Interpret Entry as Single Number" in this entry, then the search has to continue and try to find a MATCH in an entry with the Single Number Flag set to "Interpret Entry as Single Number". If the MATCH is found, the MATCH is returned, otherwise the AMBIGUOUS is returned, and then the search terminates.

This implies that the above four possible search algorithms for Range Number tables containing only open ranges are effectively reduced to only the following two:

- From the smallest to the greatest using the pair (NumberEndRangeLength, NumberEndRangeValue) as primary key.
- From the greatest to the smallest using the pair (NumberStartRangeLength, NumberStartRangeValue) as primary key.

The physical access methods of the SAS database have to assure that these search directions are guaranteed.

The two algorithms outlined above are specified by the following two SDL diagrams below.

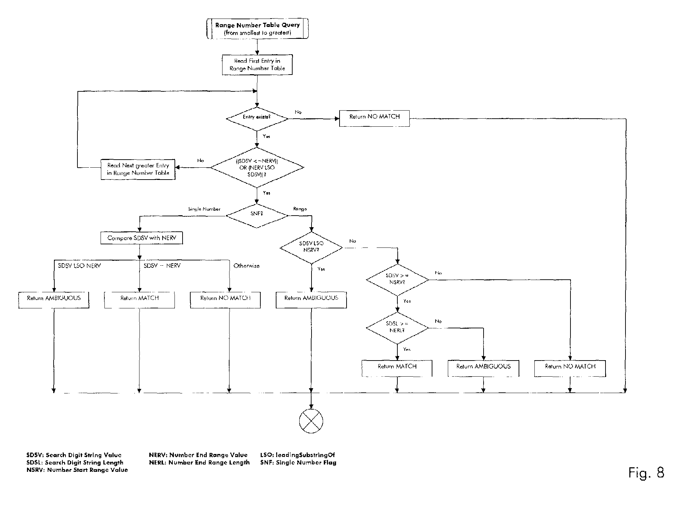

Figure 8 shows a SAS Database Query Search Algorithm in Range Number Table with Search Direction from the smallest to the greatest, Open Ranges.

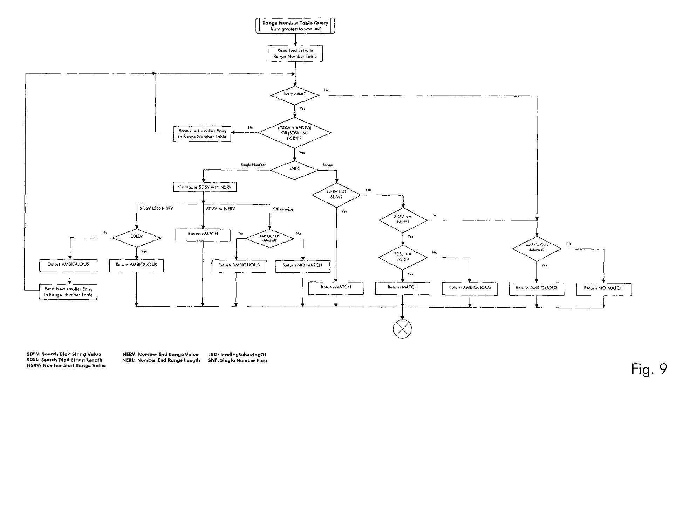

Figure 9 shows SAS Database Query Search Algorithm in Range Number Table with Search Direction from the greatest to the smallest, Open Ranges.

In Figure , it is assumed that the entries in the Range Number table containing only open ranges do not overlap. In particular, a situation illustrated by the following example is not allowed. If there is an entry with Number Start Range Value and Number End Range Value equal to 1234567 and Single Number Flag set "Interpret Entry as Single Number", then it is not allowed that there is an entry with 1234 (or any other leading sub-string of 1234567) as Number End Range Value and Single Number Flag set "Interpret Entry as Range".

If the database runs into an error situation, this error has to be indicated to the calling procedure, plus a respective counter to be increased. 1.2.2.3.2.3.2 Searching in Range Number Tables, Closed Ranges

Note: Closed Ranges are not yet required for SAS Release 1. Therefore, this sub-chapter contains only first ideas on the subject.

The structure of this sub-chapter has to be the same as for the sub-chapter on Open Ranges, 0.

For Closed Ranges there are three different orders possible, with the following characteristics:

- Sorting of entries according to lessThanR0-C is excellent if AMBIGUOUS is not needed.

- Sorting of entries according to lessThanR1 and lessThanR2 is very similar, however, it is not identical. lessThanR1 and lessThanR2 are better to be used, if AMBIGUOUS is needed. For both, lessThanR1 and lessThanR2, is can happen for searching from the smallest to the greatest and for searching from the greatest to the smallest, that an AMBIGUOUS entry is found before the MATCH entry.

There are 3 different types of sorting for closed ranges. Each sorting can be searched either from the smallest to the greatest or from the greatest to the smallest. All six possibilities need to be discussed, taking into account all applicable configuration data items: SasDbTableNatDistinguishedByLeadingDigits

1.2.2.3.2.4 Representation of Ranges in Single Number Tables Using the Extended Match Mechanism

In this sub-chapter, it is illustrated how ranges can be represented in the Single Number table using the Extended Match mechanism. For this purpose the parameters Extended Match Indicator (EMI) and Extended Match Length (EML) of the Single Number table are used. Consider as an example the open range: 33435-36567. It is equivalent to the following set of entries in the Single Table using the Extended Match Indicator (EMI) and the Extended Match Length (EML).
33435, EMI="Extended Match", EML=0
33436, EMI="Extended Match", EML=0
33437, EMI="Extended Match", EML=0
33438, EMI="Extended Match", EML=0
33439, EMI="Extended Match", EML=0
3344, EMI="Extended Match", EML=1
3345, EMI="Extended Match", EML=1
3346, EMI="Extended Match", EML=1
3347, EMI="Extended Match", EML=1
3348, EMI="Extended Match", EML=1
3349, EMI="Extended Match", EML=1
335, EMI="Extended Match", EML=2
336, EMI="Extended Match", EML=2
337, EMI="Extended Match", EML=2
338, EMI="Extended Match", EML=2
339, EMI="Extended Match", EML=2
34, EMI="Extended Match", EML=3
35, EMI="Extended Match", EML=3
360, EMI="Extended Match", EML=2
361, EMI="Extended Match", EML=2
362, EMI="Extended Match", EML=2
363, EMI="Extended Match", EML=2
364, EMI="Extended Match", EML=2
3650, EMI="Extended Match", EML=1
3651, EMI="Extended Match", EML=1
3652, EMI="Extended Match", EML=1
3653, EMI="Extended Match", EML=1
3654, EMI="Extended Match", EML=1
3655, EMI="Extended Match", EML=1
36560, EMI="Extended Match", EML=0
36561, EMI="Extended Match", EML=0
36562, EMI="Extended Match", EML=0
36563, EMI="Extended Match", EML=0
36564, EMI="Extended Match", EML=0
36565, EMI="Extended Match", EML=0
36566, EMI="Extended Match", EML=0
36567, EMI="Extended Match", EML=0
The closed range: 33435-36567 is equivalent to the following set of entries in the Single Table using the Extended Match Indicator (EMI) and the Extended Match Length (EML):
33435, EMI="Exact Match"
33436, EMI="Exact Match"
33437, EMI="Exact Match"
33438, EMI="Exact Match"
33439, EMI="Exact Match"
3344, EMI="Extended Match", EML= 1
3345, EMI="Extended Match", EML= 1
3346, EMI="Extended Match", EML=1

3347, EMI="Extended Match", EML= 1
3348, EMI="Extended Match", EML= 1
3349, EMI="Extended Match", EML= 1
335, EMI="Extended Match", EML=2
336, EMI="Extended Match", EML=2
337, EMI="Extended Match", EML=2
338, EMI="Extended Match", EML=2
339, EMI="Extended Match", EML=2
34, EMI="Extended Match", EML=3
35, EMI="Extended Match", EML=3
360, EMI="Extended Match", EML=2
361, EMI="Extended Match", EML=2
362, EMI="Extended Match", EML=2
363, EMI="Extended Match", EML=2
364, EMI="Extended Match", EML=2
3650, EMI="Extended Match", EML=1
3651, EMI ="Extended Match", EML=1
3652, EMI="Extended Match", EML=1
3653, EMI="Extended Match", EML=1
3654, EMI="Extended Match", EML=1
3655, EMI="Extended Match", EML=1
36560, EMI ="Exact Match"
36561, EMI="Exact Match"
36562, EMI="Exact Match"
36563, EMI="Exact Match"
36564, EMI="Exact Match"
36565, EMI="Exact Match"
36566, EMI ="Exact Match"
36567, EMI="Exact Match"

Although it is possible to represent a single closed range in the Single Number table using the Extended Match mechanism, it is not in general possible to represent any set of closed ranges in this way in the Single Number table, see 1.2.2.3.3.

1.2.2.3.3 Searching and Matching in the Single Number Table, Extended Match Enabled

Note: Single Number tables with the Extended Match mechanism are not yet required for SAS Release 1. Therefore, this sub-chapter contains only first ideas on the subject.
The structure of this sub-chapter has to be the same as for the sub-chapters on Single Numbers without Extended Match and Open Ranges, 1.2.2.3.1 and 1.2.2.3.2.
As for all Single Number tables there is only one way to sort this type of table, even when Extended Match is allowed. This sorting can be searched either from the smallest to the greatest or from the greatest to the smallest. All two possibilities need to be discussed, taking into account all applicable configuration data items: SasDbTableNatDistinguishedByLeading Digits
In a Single Number table where Extended Match mechanism is enabled, a given Search Digit String can have the following relationships to the digit string of an entry:

1. Search Digit String (SDS) is less than Entry's Number Value (ENV) and SDS is not leading sub-string of ENV. If the search is from the greatest to the smallest, then the search has to continue. If the search is from the smallest to the greatest, the search terminates with NO MATCH.

2. Search Digit String is leading sub-string of AmbiguousString.

3. MatchString is equal to the Search Digit String. This is the case if the Extended Match Indicator of this entry is set to Normal Match. It is also the case of the Extended Match Indicator of this entry is set to Extended Match and the Extended Match Length is 0.

4. ExtendedMatchString is either leading sub-string of Search Digit String or equal to Search Digit String. This implies that even for a normal match, it has to be checked whether the Extended Match Indicator of this entry is set to Extended Match. If set to Extended Match, it can occur that the found MATCH is actually an AMBIGUOUS if the Extended Match Length for this entry is greater than 0.

5. SDS > ENV and ENV not leading sub-string of SDS. If the search is from the smallest to the greatest, then the search has to continue. If the search is from the greatest to the smallest, the search terminates with NO MATCH.

The string compare function always delivers exactly one of the above five possibilities. The sequence, in which these five possibilities are checked does not play a role, except the continue search condition (this has to be done first).

For the cases 2, 3 and 4, it is important to always find the exact MATCH. If the numbering plan of the Single Number table does not distinguish by leading digits, then besides the exact MATCH multiple AMBIGUOUS and multiple Extended Matches are possible. The occurrence of multiple Extended Matches has to be further studied. In particular it has to be clarified whether (345, Extended Match Length set to 4) and (345, Extended Match Length set to 5) and similar conditions can be in the Single Number table at the same time. This seams to be the case for closed ranges modelled in the Single Number table. These cases need a properly defined treatment. Otherwise, closed ranges need to be excluded from the Single Number table in combination with the Extended Match mechanism.

When searched from the smallest to the greatest, Extended Matches can be found at first, then Matches, then Ambiguous. In the opposite search direction, the three are found in the opposite order. A found Extended Match can actually lead to an AMBIGUOUS if the Search Digit String is shorter than the Extended Match Entry plus the Extended Match Length in this entry. Always if AMBIGUOUS is found before a MATCH, is has to be checked whether there is also an exact MATCH in the table for this Search Digit String.

Assumption: If all numbers of a given numbering plan distinguish by leading digits, then there can be at most one of the three results for a given Search Digit String in a given Single Number table where the Extended Match mechanism is enabled: either 1 MATCH, 1 Extended Match, or 1 AMBIGUOUS. It has to be proven, whether this assumption is correct.

Assumption: if for a given numbering plan not all numbers distinguish by leading digits, then there can be more than one of the three results for a given Search Digit String in a given Single Number Table where the Extended Match mechanism is enabled: 1 MATCH, multiple Extended Matches (depending on whether the table contains only open ranges or only closed ranges), multiple AMBIGUOUS. Always if AMBIGUOUS is found before a MATCH, is has to be checked whether there is also an exact MATCH in the table for this Search Digit String. It has to be proven, whether this assumption is correct.

When searching through the Single Number table, the Search Digit String remains the same, the digit string of the actual entry is increasing for search from the smallest to the greatest, it is decreasing for the search from the greatest to the smallest.

The configuration items to be taken into account for searches in a Single Number table where the Extended Match mechanism might be enabled are: SasDbTableRangeType, SasDbTableNatDistinguishedByLeadingDigits, and SasDbTableExtendedMatchStatus. A table needs to be defined, where for each allowed combination of these three configuration items the following is presented: the optimal search direction, number of possible found entries which have to be further investigates, etc. We have here only four combinations, as in this context it is always assumed that Extended Match is enabled for this table.

If Extended Match is enabled for a given Single Number table, and the ranges specified with Extended Match are all Open Ranges, and all numbers in the Single Number table all distinguish by leading digits, then the best search direction is probably from the smallest to the greatest, as only at most one entry can lead to an Extended Match.

It is assumed that the compare operation in the search algorithm requires the most CPU time. This implies that the search direction is only of minor concern wrt to CPU consumption. This implies that simple algorithms should be preferred, as the probability that there is an error in them is smaller than for complicated algorithms. As the finding of Extended Match entries is the most complicated one, as compared to finding a MATCH or an AMBIGUOUS, the search direction should always be chosen, that Extended Matches are analysed at last, i.e. search from the greatest to the smallest.

Extended Matches are really tricky and need to be treated with care.

For instance a Single Number table might contain the entry 23456 and the entry 234 with Extended Match Indicator set to Extended Match and Extended Match Length set to 4. This situation is not allowed if the numbers in the Single Number table belong to a numbering plan where all numbers distinguish by leading digits. This situation is, however, allowed if the numbers in the Single Number table belong to a numbering plan where not all numbers distinguish by leading digits. Cases of this kind need to be analysed in depth before using the Extended Match mechanism.

The next tricky property of the Extended Match mechanism is that Extended Match entries in Single Number tables define ranges. It has been stated above, that ranges must not overlap. This implies the following:

- An exception range defined by an Extended Match entry in the Single Number table must not overlap with a default or exception single number entry in the Single Number table.

- An exception range defined in the Range Number table must not overlap with a default or exception single number entry in the Single Number table.

- A default range defined by an Extended Match entry in the Single Number table must not overlap with a default single number entry in the Single Number table.

- A default range defined in the Range Number table must not overlap with a default single number entry in the Single Number table.

- A default range defined by an Extended Match entry in the Single Number table may overlap with an exception single number entry in the Single Number table.

- A default range defined in the Range Number table may overlap with an exception single number entry in the Single Number table.

- An exception or default range defined by an Extended Match entry in the Single Number table must not overlap with an exception or default range defined by another Extended Match entry in the Single Number table.

- An exception or default range defined by an Extended Match entry in the Single Number table must not overlap with an exception or default range defined by an entry in the Range Number table.

- An exception or default range defined by an entry in the Range Number table must not overlap with an exception or default range defined by another entry in the Range Number table.

These consistency rules must be assured during population of the respective tables. They are not checked during runtime by a SAS Application Service.

The normal use of the Single Number table is to store single numbers, i.e. either exception single number entries or default single number entries. The normal use of the Range Number table is to store default and exception ranges. The Default/Exception Indicator of the respective entry indicates the Default and Exception role. The single numbers in the Single Number tables are mainly exception single numbers. The ranges in the Range Number tables are mainly default ranges. The modelling of single numbers and ranges in this case is straightforward. There is always one defined possibility in which table a default or exception single number or a default or exception range is to be inserted.

In general, the search starts in the Single Number table. If the result is NO MATCH, then the corresponding Range Number table is queried. As long as the Single Number tables contain only single numbers and the Range Number tables contain only ranges, the search algorithm does not need to take the Default/Exception Indicator into account.

However, with the introduction of the Extended Matches in Single Number tables, this rule can be relaxed. The Single Number tables can now contain also ranges. With the introduction of the Single Number Flag in the Range Number tables can now also contain single numbers. This introduces an enormous complexity. In general, Extended Matches for Single Number tables and true Single Numbers for Range Number tables are not necessary to model all situations. These concepts where introduced in order to have more flexibility in modelling and also performance advantages. Ffor instance, when all single numbers and ranges are modelled in the Single Number tables, then we have in many case only one database dip instead of two.

With the introduction of the Extended Matches in Single Number tables, and the introduction of true Single Numbers in the Range Number tables, the Default/Exception Indicator becomes relevant for the search. It has to be avoided, that the table search terminates with a MATCH in a default range, if there is an exception single number which falls into this found default range. In this case the search has to continue and check whether there is an exception single number in this table which generates a MATCH or an AMBIGUOUS with the Search Digit String. Because of this reason, the introduction of the following configuration data item for tables has to be studied: default ranges and exception single number may/don't occur at the same time in this table.

With the introduction of the Extended Matches in Single Number tables, and the introduction of true Single Numbers in the Range Number tables, it is no longer a straightforward and easy task, in which table a default or exception single number or a default or exception range is to be inserted. No simple rules exist here. Care has to be taken, not to mess up the tables. An initial set of modelling rules could be the following (the rules are not to be applied all at the same time, the validity of the rules needs to be proven):

- It is not possible to model Closed Ranges in Single Number tables with the Extended Match mechanism. Example: the two closed ranges 10-19 and 1000-1999 would result in the two respective representations (1, EML=1) and (1, EML=3) using the Extended Match mechanism. This implies that Closed Ranges can only be represented in Range Number tables.
  There may, however, be a possibility to model closed ranges in the Single Number table using the Extended Match mechanism. This is only possible, if EMI and EML are added to the primary key of the Single Number table entries. EMI and EML would then define the secondary order, where the Number Value would define the primary order.

- Exception single numbers should be modelled in Range Number tables. Representing single numbers as ranges is inefficient usage of storage. In general there are many exception single numbers. It does not make sense to distribute the same type of numbers over more than one table. If exception single numbers and default ranges are in the same table, then the search algorithm must not terminate after a MATCH with a default range, but has to go on an look for an exception single number within this default range.

- It is possible to realise open default ranges in the Single Number table using the Extended Match mechanism.

- All exception single numbers and all exception ranges are inserted into the Single Number table. All default single numbers and all default ranges are inserted into the Range Number table.

- All (default and exception) single numbers and all exception ranges are inserted into the Single Number table. All default ranges are inserted into the Range Number table.

- Everything is inserted into the Single Number table. Care has to be taken here, that the exception single number MATCH is found even in the presence of a containing default range number entry. The correct definition of default ranges using the Extended Match mechanism has to be assured in this case.

- Avoid inserting the same type of entry in both the Single Number table and the Range Number table. E.g. do not insert exception ranges in the Single Number table and in the Range Number table.

- Default ranges should be all either in the Single Number table or in the Range Number table. If the default ranges are all in the Single Number table, then the Range Number table has to be completely empty.

The following table shows the possible options for all types of single numbers and ranges, including in which table they can be realised:

| Single Number/ Range Type | Representation in Single Number Table | Representation in Range Number Table |
| --- | --- | --- |
| Default Single Number | Recommended | Possible |
| Exception Single Number | Recommended | Not Recommended |
| Default Open Range | Possible | Recommended |
| Exception Open Range | Possible | Recommended |
| Default Closed Range | Not allowed | Recommended |
| Exception Closed Range | Not allowed | Recommended |

As already mentioned above, a MATCH with an exception single number entry should always be found before the MATCH with a default range number entry. Within the Range Number table this is difficult an inefficient, therefore, this case should be excluded for Range Number tables. Within the Single Number table, this can be achieved by searching from the greatest to the smallest, in case the Extended Match mechanism is enabled (this statement has to be proven).

If the numbering plan of the Single Number table does not distinguish by leading digits, then a search from the greatest to the smallest can find multiple AMBIGUOUS before the MATCH. Even multiple MATCHes with entries using the Extended Match mechanism are possible.

The following contains some early considerations on Extended Matches.

Single Number tables contain single number entries and - if the configuration data item ExtendedMatchStatus is ENABLED - also ranges. In general, if the configuration data item ExtendedMatchStatus is DISABLED for this Single Number table,

• A MATCH occurs, if the queried Search Digit String is exactly found in the Single Number table, i.e. there is an entry where the Number Value is equal to the Search Digit String.

• An AMBIGUOUS occurs, if there is no entry in the Single Number table, of which the Number Value generates a MATCH with the Search Digit String, and the Search Digit String is a leading sub-string of at least one Number Value in the Single Number table. E.g. the queried Search Digit String 1234 is not an entry in the Single Table, but there are entries with 123467 and 1234765 in the Single Table.

• A NO MATCH occurs, if the queried Search Digit String does neither result in a MATCH nor in an AMBIGUOUS.

• In addition to the normal match mechanism, an EXTENDED MATCH mechanism is defined. An Extended Match may occur for an entry if the Number Value in this entry is a leading sub-string of the Search Digit String. Whether the Extended Match actually occurs, depends on whether or not extended matches are allowed at all for this Single Number table, and on whether or not extended matches are allowed for this particular entry. Details of the extended match mechanism are found below in the respective algorithm and in the definition of the Single Number tables. Extended matches are used in order to specify ranges in a Single Number table. Care must be taken when defining entries with Extended Matches allowed. It has to be assured that there are no overlaps between ranges defined with Extended Match. Additionally, it has to be assured that no single number is included in a range defined with Extended Match. If these overlaps would be allowed, then a database query could result in multiple found matched entries. Currently, there is no application envisaged, which could make use of multiple query results.

This principle has to be realised by the search algorithm. From a logical point of view, the database search in a Single Number table walks either from the smallest digit string primary key to the greatest digit string primary key, or in the opposite direction, based on the lessThanV relation above. The physical access methods of the SAS database have to assure that the respective search direction is guaranteed.

If the configuration data item ExtendedMatchStatus is ENABLED for this Single Number table then a given Search Digit String can have the following five possible relationships with the Number Value primary key of a given Single Number table entry:

1 SearchDigitString = NumberValue: this relationship will result in a MATCH. Then the search algorithm terminates.

2 SearchDigitString leadingSubstringOf NumberValue: this relationship will result in an AMBIGUOUS. Then the search algorithm terminates.

3 (SearchDigitString < NumberValue) AND (NOT (SearchDigitString leadingSubstringOf NumberValue)): this relationship tells the database search algorithm that the SearchDigitString is really smaller than the entry's NumberValue (without being its leading sub-string), and

    3.1 If the search goes from the smallest to the greatest, the search shall continue.
    3.2 If the search goes from the greatest to the smallest, the search shall terminate and return NO MATCH.

4 NumberValue leadingSubstringOf SearchDigitString: this relationship tells the database search algorithm that it shall start the Extended Match Algorithm.

5 (SearchDigitString > NumberValue) AND (NOT (NumberValue leadingSubstringOf SearchDigitString)):

    5.1 If the search goes from the smallest to the greatest, the search shall terminate and return NO MATCH.
    5.2 If the search goes from the greatest to the smallest, the search shall continue.

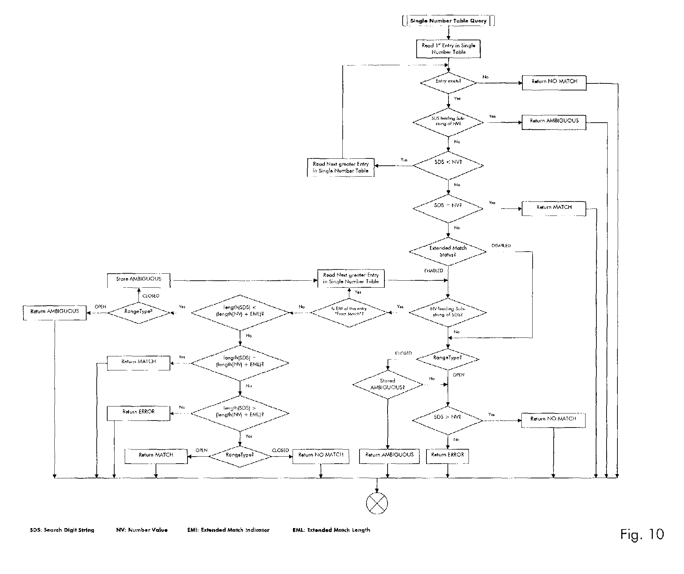

We have now identified the relationships a given Search Digit String can have with the entries of a Single Number table, both with the configuration data item ExtendedMatchStatus DISABLED and ENABLED. An algorithm where the search goes from the smallest to the greatest is outlined in the SDL diagram of Figure 10:

Figure 10 shows a SAS Database Query Search Algorithm in Single Number Table with Search Direction from the smallest to the greatest, Extended Match Enabled.

This algorithm progresses from the smallest to the greatest NumberValue, as long as the SearchDigitString is really smaller than the NumberValue (without being its leading sub-string). As soon as this condition is no longer fulfilled, it checks for AMBIGUOUS, MATCH, Extended Match or NO MATCH, in this sequence. It is important to do these checks in this sequence, as with reference to a given Search Digit String, an ambiguous entry in the Single Number table is greater than a matching entry, a matching entry is greater than an extended matching entry, and an extended matching entry is greater than an entry, which is genuinely smaller than the Search Digit String. The ERROR should never be returned, if everything fits nicely together. A returned ERROR might indicate that the table is not properly sorted.

The search algorithm for Single Number tables, which searches from the smallest to the greatest, can be used for all possible configurations of the SAS Database. I.e.

- NatDistinguishedByLeadingDigits with values YES or NO.
- ExtendedMatchStatus with values ENABLED or DISABLED.
- If ExtendedMatchStatus is ENABLED, then RangeType with values OPEN or CLOSED.

If the Single Number table contains the numbers 1234 and 12345, and the numbers of the table belong to a Special Closed Numbering Plan, then this algorithm finds the MATCH with 1234, and not the AMBIGUOUS with 12345. I.e. MATCH and AMBIGUOUS is possible at the same time. The search algorithm finds nevertheless efficiently the MATCH before the AMBIGUOUS, as it searches from the smallest to the greatest. The configuration data item Nat-DistinguishedByLeadingDigits does not need to be taken into account here.

If the Single Number table contains numbers of a closed numbering plan, and 1234 is an entry, then 123 with Extended Match Indicator set to "Extended Match" is not allowed. Otherwise, the range defined by the Extended Match mechanism would include this single entry 1234.

1.2.2.3.4 Searching and Matching in the Auxiliary Number Table

The Service Logic Access interface of the SAS database returns number queries against the Auxiliary Number table with either MATCH, AMBIGUOUS or NO MATCH. MATCH and AMBIGUOUS return also the found entry. NO MATCH does not return any entry. The SAS Application Service has to decide what to do with these responses during inbound digit analysis.

A search algorithm in the Auxiliary Number table is always based on the ascending order applied in this table, i.e. lessThanNV for the triple (NumberName, NumberLength, NumberValue).

The ascending order, the search algorithms and the match algorithms are all based on the primary key of the Auxiliary Number table: i.e. the triple (NumberName, NumberLength, NumberValue).

In principle, the search algorithm in the Auxiliary Number table can either go from the smallest to the greatest or from the greatest to the smallest. However, as it is possible that the number entries for a given Auxiliary Number part - identified by a Auxiliary Number Name - do not distinguish by leading digits, only a search from the greatest to the smallest can be applied. This is absolutely necessary. The following example illustrates this. Assume that the numbers 1234 and 12341 are both entries in the Auxiliary Number table with the same Auxiliary Number Name. In order to generate a MATCH with 12341, the search has to go from the greatest to the smallest, as otherwise the MATCH will be generated with 1234. This results in one possible search algorithm for the Auxiliary Number Table: from the greatest to the smallest.

In general, the Auxiliary Number values of a given Auxiliary Number name distinguish all by leading digits. E. g. the County Code, the NDC, INRNs, etc. Currently, there is only one known exception to this rule: the Escape Code, e.g. 0 and 00 in Germany. This exception implies that above search from the greatest to the smallest has to be applied.

In general, there are the following static definitions of MATCH, AMBIGUOUS and NO MATCH:

- A MATCH occurs, if there is an entry in the Auxiliary Number table with the requested Auxiliary Number Name and a Number Value, which is a leading sub-string of the Search Digit String. It has to be assured that the longest such Number Value is found.

- An AMBIGUOUS occurs, if there is an entry in the Auxiliary Number table with the requested Auxiliary Number Name and a Number Value, of which the Search Digit String is a leading sub-string, AND the Search Digit String does not result in a MATCH in this Auxiliary Number table.

- A NO MATCH occurs, if the queried Search Digit String does not result in a MATCH for all entries in the Auxiliary Number table.

These static definitions have to be realised by the search algorithm. From a logical point of view, the database search in a Auxiliary Number table walks from the greatest primary key to the smallest primary key, based on the lessThanNV relation above. The physical access methods of the SAS database have to assure that the respective search direction is guaranteed.

The following specifies the dynamic search conditions a given Search Digit Sting can have with respect to a visited entry in the Auxiliary Number table. A given Search Digit String can have the following six possible relationships with the Number Value primary key of a given Single Number table entry:

1. Auxiliary Number Name of Search Query smaller than Auxiliary Number Name of current entry. This implies that the search shall continue.

2. Auxiliary Number Name of Search Query equal to Auxiliary Number Name of current entry AND (Search Digit String lessThanV Auxiliary Number Value) AND (NOT (Search Digit String leadingSubstringOf Auxiliary Number Value)). This implies that the search shall continue.

3. Auxiliary Number Name of Search Query equal to Auxiliary Number Name of current entry AND ((Auxiliary Number Value is leading sub-string of Search Digit String) OR (Auxiliary Number Value is equal to Search Digit String)). This implies that the search shall terminate and return MATCH.

4. Auxiliary Number Name of Search Query equal to Auxiliary Number Name of current entry AND (Search Digit String is leading sub-string of Auxiliary Number Value). This implies that the search algorithm detects an AMBIGUOUS. As the numbers in the
Auxiliary Number Table in general DO NOT all distinguish by leading digits, the search algorithm has to first make sure that there is no MATCH in the Auxiliary Number table before it terminates. It there is a MATCH, the search algorithm terminates with a MATCH, if there is no MATCH, the search algorithm terminates with AMBIGUOUS.

5. Auxiliary Number Name of Search Query equal to Auxiliary Number Name of current entry, and Auxiliary Number Value lessThanV Search Digit String, but Auxiliary Number Value is not a leading sub-string of the Search Digit String. This implies that the search shall terminate and return NO MATCH, if neither a MATCH nor an AMBIGUOUS has been found in the Auxiliary Number table.
Note: the Search Digit String can only enter into this condition, if there was no MATCH; however, an AMBIGUOUS may or may not have been found.

6. Auxiliary Number Name of Search Query greater than Auxiliary Number Name of current entry. This implies that the search shall terminate and return NO MATCH, if neither a MATCH nor an AMBIGUOUS has been found in the Auxiliary Number table.
Note: the Search Digit String can only enter into this condition, if there was no MATCH; however, an AMBIGUOUS may or may not have been found.

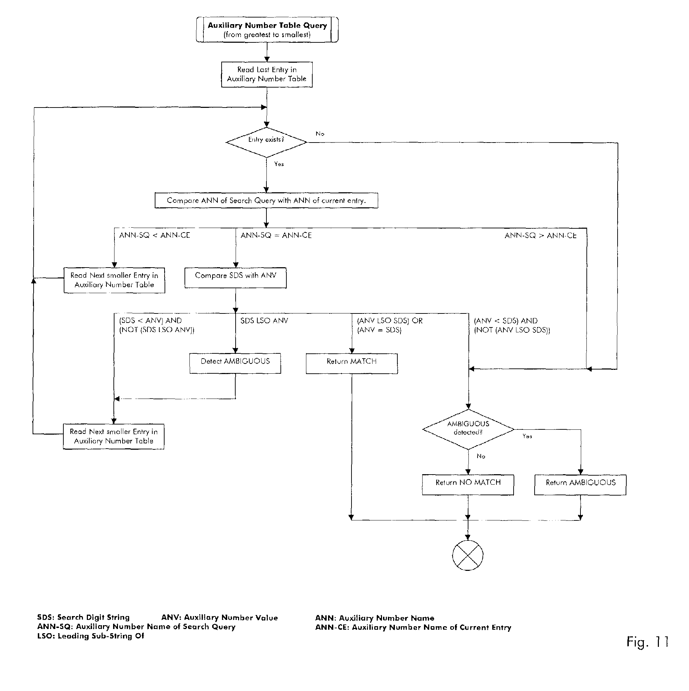

Figure 11 depicts the SAS Database query search algorithm in the Auxiliary Number table with search direction from the greatest to the smallest.

Figure 11 shows a SAS Database Query Search Algorithm in Auxiliary Number Table with Search Direction from the greatest to the smallest.

This algorithm progresses from the greatest to the smallest entry based on the relation lessThanNV above, as long as the Auxiliary Number Name of the Search Query is really less than the Auxiliary Number Name of the Current Entry. As soon as this condition is no longer fulfilled, it checks whether there are entries in the Auxiliary Number table matching with the Auxiliary Number Name of the Search Query. If present, these entries are checked for MATCH, AMBIGUOUS or NO MATCH.

The AMBIGUOUS result can only occur, if the currently remaining digits in the Search Digit String are a leading sub-string of an entry in the Auxiliary Number table, without matching with another entry in the Auxiliary Number table. This situation can occur in network with overlap dialling, where sufficient digits are not yet available in the SAS.

If the database runs into an error situation, this error has to be indicated to the calling procedure, plus a respective counter to be increased.

1.2.2.3.5 Notes on the B-Tree Implementation of Number Tables

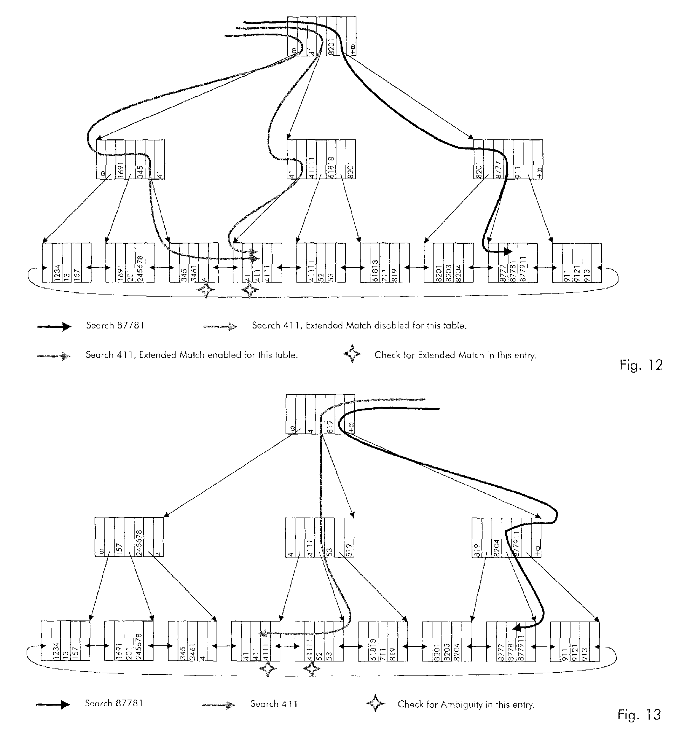

The implementation of the Single Number tables and the Range Number tables is done in an object-oriented database using a B-Tree like access method. The B-Trees used for the SAS Database shall be as much as possible use proven B-Tree theory and algorithms. The B-Trees can be optimised for a search direction from the smallest to the greatest and from the greatest to the smallest. This is illustrated in Figure 12.

Figure 12 shows an Illustration of the B-Tree Implementation of a Single Number Table - Optimized for Searching from the Smallest to the Greatest.

Figure 13 shows an Illustration of the B-Tree Implementation of a Single Number Table - Optimized for Searching from the Greatest to the Smallest.

Both tables contain the same set of entries. Some of the entries do not distinguish by leading digits. In Figure the pointers and keys are organised according to the rule [Pointer < Key <= Pointer]. In Figure the pointers and keys are organised according to the rule [Pointer <= Key < Pointer].

The B-Tree in Figure 12 is optimised for searching from the smallest to the greatest, as illustrated. There will problems and/or inefficiencies if the B-Tree in Figure 12 is used for searching from the greatest to the smallest.

The B-Tree in Figure 13 is optimised for searching from the greatest to the smallest, as illustrated. There will problems and/or inefficiencies if the B-Tree in Figure 13 is used for searching from the smallest to the greatest.

If all numbers in the Single Number table distinguish by leading digits, then an AMBIGUOUS can sometimes already be detected in a branch node. If not all numbers distinguish by leading digits, then an AMBIGUOUS can only be detected in the leaf nodes.

A MATCH can sometimes be detected in the branch nodes, no matter whether all digits distinguish by leading digits or not. However, in order to retrieve the necessary data, the leaf nodes have to be accessed anyway.

An Extended Match can always only be detected in the leaf nodes, no matter whether all digits distinguish by leading digits or not.

A NO MATCH can always only be detected in the leaf nodes, no matter whether all digits distinguish by leading digits or not.

1.2.3 Table Details

This sub-section specifies the details of the logical information model of the E.164 and MSIN based databases in terms of tables. This includes the following kinds of tables:

- The E.164 Single Number and Range tables.

- The MSIN Based Single Number and Range tables.

- The Service Control Data table.

- The Auxiliary Number table.

For each table, the list of its attributes is specified. For each attribute, its format, its possible values, and a description of the attribute is given.

1.2.3.1 E.164 Tables

This sub-section specifies the details of the E.164 Single Number and Range Number tables. Table 2 defines the E.164 Single Number Table. Table 3 defines the E.164 Range Number Table.

| E.164 Single Number Table | | | |
|---|---|---|---|
| **Attribute** | **Format** | **Values** | **Description** |
| E.164 Number Length | 4 Bit | Any one digit hex integer value, 0h-Fh. | Primary Key. This field defines the actual length of the E.164 number. Purpose of this parameter for the service logic of the SAS Application Service: Detects whether received number does or does not match in this database. |
| E.164 Number Value | 7 Byte plus 4 Bit | Any valid E.164 Number, in general without Country Code, up to 15 hex digits | For this number, Service Control Data information (such as routing information) is to be determined. Primary Key. Unused trailing hex digits are filled with 0h. The maximum length of this attribute shall be configurable at system installation time. The default length is 7 1/2 byte. The E.164 numbers are to be organised as a digit tree during implementation in order to optimise access speed. Purpose of this parameter for the service logic of the SAS Application Service: Detects whether received number does or does not match in this database. |
| Number Type | 4 Bit | Fixed Geographic Number, Non-Geographic Service Number: Individually Assigned, Non-Geographic Service Number: Block-wise Assigned, Pan-European Service Number, Mobile Network Number (MSISDN), Mobile Prepaid Number E.212 IMSI E.214 MGT | Indicates the type of the E.164 or MSIN based number. The encoding of Number Type for E.164 numbers and MSIN based numbers has to be the same for all SAS databases of a given customer network. In general, the customer can decide on an encoding. The default encoding is as follows: 0000b: Fixed Geographic Number. 0001b: Non-Geographic Service Number: Individually Assigned. 0010b: Non-Geographic Service Number: Block-wise Assigned. 0011b: Pan-European Service Number. 0100b: Mobile Network Number (MSISDN). 0101b: Mobile Prepaid Number. 0110b: E.212 IMSI. 0111b: E.214 MGT. 1000b-1111b: For future use, and - decreasing from 1111b - Customer specific. The code of this field controls the loop detection and the outbound processing of the service logic. The association of the Number Type's logical name and the code is defined as configuration items. Each individual E.164 or MSIN based number has a specific type. Per E.164 or MSIN based Single Number or Range Number Table E.164 or MSIN based numbers with different types may occur. It is unlikely, that more than 16 E.164 and MSIN based Number Types are required in the mid-term future. This parameter is mandatory in the SAS database. It is optional at the CCS-SPS interface. This implies that a customer specific default value for this parameter is to be defined during the customer questionnaire. Purpose of this parameter for the service logic of the SAS Application Service: Controls the loop detection and the configured outbound processing. |
| Portability Status | 4 Bit | "Own Number Ported Out", "Own Number Not Ported Out", "Foreign Number Ported In", "Foreign Number Ported to Another Foreign Network", "Foreign Number Not Known to be Ported", "Foreign Number Not Ported In", "Own or Foreign Number Ported to Another Foreign Network", "Number, which cannot be ported", "Own Number, which cannot be geographically ported", "Own Number Not Geographically Ported", "Own Number Geographically Ported", "Own Number, which | Indicates the portability status of the E.164 number or MSIN Based number with reference to the network in which the SAS is located. The portability status of the E.164 number or MSIN Based number is known at configuration time. The Portability Status determines the loop detection and the basic control flow of the outbound processing of the service logic. The value "Foreign Number Not Ported In" groups the values ", "Foreign Number Ported to Another Foreign Network" and "Foreign Number Not Known to be Ported". The value "Own or Foreign Number Ported to Another Foreign Network" groups the values "Own Number Ported Out" and "Foreign Number Ported to Another Foreign Network". The value "Number, which cannot be ported" marks numbers, which must not be ported, such as SCAs. The encoding is a follows: The most significant bit indicates the porting type of the E.164 number: 0b: Service Provider Ported. 1b: Geographically Ported, or Flexible Routed (FLR). For the Service Provider Ported E.164 numbers, the remaining 3 bits have the following meaning: |

| | | cannot be flexible routed", "Own Number not flexible routed", "Own Number flexible routed". | 000b: Own Number, which cannot be ported.<br>001b: Own Number Not Ported Out.<br>010b: Own Number Ported Out.<br>011b: Own or Foreign Number Ported to Another Foreign Network.<br>100b: Foreign Number Not Ported In.<br>101b: Foreign Number Not Known to be Ported.<br>110b: Foreign Number Ported In.<br>111b: Foreign Number Ported to Another Foreign Network.<br>The semantics of the Bits are as follows:<br>Bit 1 (Most Significant Bit): 0 if an own number is involved; 1 if only a foreign number is involved.<br>Bit 2: 0 if number is not ported; 1 if number is ported.<br>Bit 3 (Least Significant Bit): additional discriminator for Bit 2.<br>For the Geographically Ported E.164 numbers and flexible routed E.164 numbers and MSIN Based numbers, the remaining 3 bits have the following meaning:<br>000b: Own Number, which cannot be geographically ported.<br>001b: Own Number Not Geographically Ported.<br>010b: Own Number Geographically Ported.<br>011b: Undefined.<br>100b: Own Number, which cannot be flexible routed.<br>101b: Own Number not flexible routed.<br>110b: Own Number flexible routed.<br>111b: Undefined.<br>It is likely that this field will require additional bits in the future. There should be potentially space for in total up to 8 bits for this field.<br>This parameter is mandatory in the SAS database and has to be provisioned at the CCS-SPS interface.<br>Purpose of this parameter for the service logic of the SAS Application Service: Controls the loop detection and the configured outbound processing. |
| Default/Exception Indicator | 1 Bit | "Default Entry", Exception Entry". | This field specifies whether the E.164 number in this record is a default number or an exception number. A Default E.164 Number is an E.164 number, which is not ported, or not flexible routed. An Exception E.164 Number is an E.164 number, which is ported, or flexible routed.<br>This field controls the Nat1 Nat2 digit analysis part of the service logic.<br>The encoding is as follows:<br>0b: Default Entry.<br>1b: Exception Entry (default value for this table).<br>In combination with the Extended Match attributes, this attribute allows the storage of exception and default numbers and ranges completely in this table. This results in a performance gain. Only drawback: the specification of ranges is a bit more complex compared to the option to store ranges in the range table.<br>This parameter is part of the SAS database of SAS Release 1. However, the Application Services of SAS Release 1 will not use this parameter. Therefore, the default value of 1b is to be provisioned.<br>Purpose of this parameter for the service logic of the SAS Application Service: Controls the number of database dips. |

| Transition Indicator | 1 Bit | "Transition Time is Over", Transition Time is Not Yet Over". | This field indicated whether the transition time of this E.164 number is over or not. The Transition Time is the time, which is required to make all changes of a number portation active in all involved networks of the porting domain. This attribute is used for detection of inconsistencies, which might be caused by looping SS7 messages. The default of this attributed is "Transition Time is Over". The SPS has to set this attribute to "Transition Time is Not Yet Over" if usage of this attributed is required, and has to trigger the modification of this attribute as soon as the transition time is over. Only few customers require this feature. Values: <br> • 0b: Transition Time is Over. I.e. E.164 Number Type and Portability Status have not been changed, or has remained in the same state for a sufficient amount of time. <br> • 1b: Transition Time is Not Yet Over. I.e. E.164 Number Type and Portability Status have been changed recently. <br> Purpose of this parameter for the service logic of the SAS Application Service: this field controls the Loop Detection part of the service logic. |
| --- | --- | --- | --- |
| Extended Match Indicator | 1 Bit | "Exact Match", "Extended Match". | Purpose: to efficiently model ranges in the single number table. Extended Match Indicator indicates whether the E.164 number above generates a positive match also for queried numbers which have above E.164 number as the start: <br> * 0b for default case, only exact matches for E.164 numbers are allowed. <br> * 1b: Extended Match, the match is also positive when the queried number is longer than the above E.164 number and contains the above E.164 number as the start. <br> This field controls the digit analysis of the Nat1 Nat2 part of the received E.164 number. This field and its associated functionality in the service logic can be used when ranges are to be modelled in the Single Number table. Another example of the use of Extended Matches is the case where it can be assumed that in the operator's network the PABXs care for the collection of missing digits, and that overlap dialling is correctly handled by the operator's network. This assumption is mandatory, as the service logic will stop requesting additional digits as soon as there is a database hit. This database hit may occur already with an incomplete PABX DDI (Direct Dialling In) number. Open and Closed Ranges can be modelled with this parameter. This parameter will be in SAS database of SAS Release 1. The SAS Application Services of SAS Release 1 will not use this parameter. Therefore, it will be provisioned with the default value 0b. Purpose of this parameter for the service logic of the SAS Application Service: In combination with Extended Match Length, this attribute detects whether the received number is incomplete or complete; if complete, it detects whether the received number does or does not match in this database. |
| Extended Match Length | 3 Bit | Integer values 0-7 | This parameter specifies the number of digits, which need to be present in addition to the digits in the parameter E.164 Number Value in order to have a complete number. For an incomplete number the Application Service has to request additional digits. Open and Closed Ranges can be modelled with this parameter. This parameter will be in SAS database of SAS Release 1. The SAS Application Services of SAS Release 1 will not use this parameter. Therefore, it will be provisioned with the default value 000b. Purpose of this parameter for the service logic of the SAS Application Service: In combination with Extended Match Indicator, this attribute detects whether the received number is incomplete or complete; if complete, it detects whether the received number does or does not match in this database. |

| Service Control Data Id | E.g. 16 Bit | Pointer into the entity set "Service Control Data". | This attribute is a foreign key into the entity set "Service Control Data". Purpose of this parameter for the service logic of the SAS Application Service: In combination with Service Control Data Sequence Number, this attribute refers to one of the set of Service Control Data, which are to be used during outbound processing. For SAS Release 1 the general flexibility of the attributes Service Control Data Id and Service Control Data Sequence Number is not realised. I.e. it is not possible in SAS Release 1 to associate an arbitrary number of Service Control Data with a single entry of this table, but only a fixed limited number of Service Control Data, specifically 5. Therefore, instead of the two attributes Service Control Data Id and Service Control Data Sequence Number the following five attributes are present:<br>• Service Control Data Id0 (Slot 0).<br>• Service Control Data Id1 (Slot 1).<br>• Service Control Data Id2 (Slot 2).<br>• Service Control Data Id3 (Slot 3).<br>• Service Control Data Id4 (Slot 4). |
|---|---|---|---|
| Service Control Data Sequence Number | E.g. 4 Bit | Integer Value 0h to Fh. | This field defines the sequence number of the referenced Service Control Data. In general, the sequence of the Service Control Data of a given E.164 number is free, however, it is recommended to define a common order. E.g. the first Service Control Data item contains the INRN, the second Service Control Data item contains the Logical HLR Address, etc. In the current implementation it is always assumed that there is a fixed association between Service Control Data Sequence Number and Service Control Data Type. Purpose of this parameter for the service logic of the SAS Application Service: In combination with Service Control Data Id, this attribute refers to one of the set of Service Control Data, which are to be used during outbound processing. |

If the Service Control Data Groups are used, then the field "Service Control Data Id" in this table has to be replaced by the field "Service Control Data Group Id" with similar functionality.

Extended matches are useful for fixed networks, where operators use the numbers assigned to PABXs economically. This means that there can be for instance two or more PABXs with the prefix 543-. The number range 2000-4999 after the prefix 543 belongs to one subscriber, and the number range 5000-5999 belongs to another subscriber, etc. However, it is still assumed that a PABX is only ported as a whole. In this case the Extended Match Indicator plus the Extended Match Length is used to specify ported number ranges without have to introduce a second E.164 number to delimit the range.

Recommended byte structure for control information captured in the attributes E.164 Number Type (ENT), Portability Status (PS), Default/Exception Indicator (DEI), Transition Indicator (TI), Extended Match Indicator (EMI), and Extended Match Length (EML):
Byte 1:
• Bit 0-2: Extended Match Length.
• Bit 3: Extended Match Indicator.
• Bit 4-7: Number Type.
Byte 2:
• Bit 0-3: Portability Status.
• Bit 4: Spare.
• Bit 5: Spare.
• Bit 6: Transition Indicator.
• Bit 7: Default/Exception Indicator.

An alternative and more efficient encoding for the Extended Match mechanism is as follows: the 3 bit attribute Extended Match Length and the 1 bit attribute Extended Match Indicator are combined into one single 4 bit attribute Extended Match Field with the following encoding:
• 0000b: Extended Match, Extended Match Length 0.
• 0001b: Extended Match, Extended Match Length 1.
• 0010b: Extended Match, Extended Match Length 2.
• 0011b: Extended Match, Extended Match Length 3.
• 0100b: Extended Match, Extended Match Length 4.
• 0101b: Extended Match, Extended Match Length 5.
• 0110b: Extended Match, Extended Match Length 6.
• 0111b: Extended Match, Extended Match Length 7.
• 1000b: Extended Match, Extended Match Length 8.
• 1001b: Extended Match, Extended Match Length 9.
• 1010b: Extended Match, Extended Match Length 10.
• 1011b: Extended Match, Extended Match Length 11.
• 1100b: Extended Match, Extended Match Length 12.
• 1101b: Extended Match, Extended Match Length 13.
• 1110b: Extended Match, Extended Match Length 14.
• 1111b: Exact Match.

Table 2: Details of the E.164 Single Number Table

| E.164 Range Number Table | | | |
|---|---|---|---|
| **Attribute** | **Format** | **Values** | **Description** |
| E.164 Number Start Range Length | 4 Bit | Any one digit hex integer value, 0h-Fh. | Primary Key. This field defines the actual length of the E.164 number. Purpose of this parameter for the service logic of the SAS Application Service: Detects whether received number does or does not match in this database. |
| E.164 Number Start Range Value | 7 Byte plus 4 Bit | Any valid E.164 Number, in general without Country Code, up to 15 hex digits | For the number range of which this attribute defines the start, Service Control Data information (such as routing information) is to be determined. Primary Key. Unused trailing hex digits are filled with 0h. The maximum length of this attribute shall be configurable at system installation time. The default length is 7 1/2 byte. Purpose of this parameter for the service logic of the SAS Application Service: Detects whether received number does or does not match in this database. |
| E.164 Number End Range Length | 4 Bit | Any one digit hex integer value, 0h-Fh. | Primary Key. This field defines the actual length of the E.164 number. Purpose of this parameter for the service logic of the SAS Application Service: Detects whether received number does or does not match in this database. |
| E.164 Number End Range Value | 7 Byte plus 4 Bit | Any valid E.164 Number, in general without Country Code, up to 15 hex digits | For the number range of which this attribute defines the end, Service Control Data information (such as routing information) is to be determined. Primary Key. Unused trailing hex digits are filled with 0h. The maximum length of this attribute shall be configurable at system installation time. The default length is 7 1/2 byte. The E.164 numbers are to be organised as a digit tree during implementation in order to optimise access speed. Purpose of this parameter for the service logic of the SAS Application Service: Detects whether received number does or does not match in this database. |
| Number Type | 4 Bit | Fixed Geographic Number, Non-Geographic Service Number: Individually Assigned, Non-Geographic Service Number: Block-wise Assigned, Pan-European Service Number, Mobile Network Number (MSISDN), Mobile Prepaid Number E.212 IMSI E.214 MGT | Indicates the type of the E.164 or MSIN based number. The encoding of Number Type for E.164 numbers and MSIN based numbers has to be the same for all SAS databases of a given customer network. In general, the customer can decide on an encoding. The default encoding is as follows: 0000b: Fixed Geographic Number. 0001b: Non-Geographic Service Number: Individually Assigned. 0010b: Non-Geographic Service Number: Block-wise Assigned. 0011b: Pan-European Service Number. 0100b: Mobile Network Number (MSISDN). 0101b: Mobile Prepaid Number. 0110b: E.212 IMSI. 0111b: E.214 MGT. 1000b-1111b: For future use, and - decreasing from 1111b - Customer specific. The code of this field controls the loop detection and the outbound processing of the service logic. The association of the Number Type's logical name and the code is defined as configuration items. Each individual E.164 or MSIN based number has a specific type. Per E.164 or MSIN based Single Number or Range Number Table E.164 or MSIN based numbers with different types may occur. It is unlikely, that more than 16 E.164 and MSIN based Number Types are required in the mid-term future. This parameter is mandatory in the SAS database. It is optional at the CCS-SPS interface. This implies that a customer specific default value for this parameter is to be defined during the customer questionnaire. Purpose of this parameter for the service logic of the SAS Application Service: Controls the loop detection and the configured outbound processing. |

| Portability Status | 4 Bit | "Own Number Ported Out", "Own Number Not Ported Out", "Foreign Number Ported In", "Foreign Number Ported to Another Foreign Network", "Foreign Number Not Known to be Ported", "Foreign Number Not Ported In", "Own or Foreign Number Ported to Another Foreign Network", "Number, which cannot be ported", "Own Number, which cannot be geographically ported", "Own Number Not Geographically Ported", "Own Number Geographically Ported", "Own Number, which cannot be flexible routed", "Own Number not flexible routed", "Own Number flexible routed". | Indicates the portability status of the E.164 number or MSIN Based number with reference to the network in which the SAS is located. The portability status of the E.164 number or MSIN Based number is known at configuration time. The Portability Status determines the loop detection and the basic control flow of the outbound processing of the service logic. The value "Foreign Number Not Ported In" groups the values ", "Foreign Number Ported to Another Foreign Network" and "Foreign Number Not Known to be Ported". The value "Own or Foreign Number Ported to Another Foreign Network" groups the values "Own Number Ported Out" and "Foreign Number Ported to Another Foreign Network". The value "Number, which cannot be ported" marks numbers, which must not be ported, such as SCAs. The encoding is a follows: The most significant bit indicates the porting type of the E.164 number: 0b: Service Provider Ported. 1b: Geographically Ported, or Flexible Routed (FLR). For the Service Provider Ported E.164 numbers, the remaining 3 bits have the following meaning: 000b: Own Number, which cannot be ported. 001b: Own Number Not Ported Out. 010b: Own Number Ported Out. 011b: Own or Foreign Number Ported to Another Foreign Network. 100b: Foreign Number Not Ported In. 101b: Foreign Number Not Known to be Ported. 110b: Foreign Number Ported In. 111b: Foreign Number Ported to Another Foreign Network. The semantics of the Bits are as follows: Bit 1 (Most Significant Bit): 0 if an own number is involved; 1 if only a foreign number is involved. Bit 2: 0 if number is not ported; 1 if number is ported. Bit 3 (Least Significant Bit): additional discriminator for Bit 2. For the Geographically Ported E.164 numbers and flexible routed E.164 numbers and MSIN Based numbers, the remaining 3 bits have the following meaning: 000b: Own Number, which cannot be geographically ported. 001b: Own Number Not Geographically Ported. 010b: Own Number Geographically Ported. 011b: Undefined. 100b: Own Number, which cannot be flexible routed. 101b: Own Number not flexible routed. 110b: Own Number flexible routed. 111b: Undefined. It is likely that this field will require additional bits in the future. There should be potentially space for in total up to 8 bits for this field. This parameter is mandatory in the SAS database and has to be provisioned at the CCS-SPS interface. Purpose of this parameter for the service logic of the SAS Application Service: Controls the loop detection and the configured outbound processing. |

| Default/Exception Indicator | 1 Bit | "Default Number Range", Exception Number Range". | This field specifies whether the E.164 number range in this record is a default number range or an exception number range. A Default E.164 Number Range is an E.164 number range, which is not ported, or not flexible routed. An Exception E.164 Number Range is an E.164 number range, which is ported, or flexible routed. The encoding is as follows: 0b: Default Number Range (default value for this table). 1h: Exception Number Range. This field controls the Nat1 Nat2 digit analysis part of the service logic. A Default Number Range is assigned to a specific operator, or a specific HLR in case of flexible routing. Numbers from a Default Number Range may be ported, or flexible routed. The definition of a Default Number Range in this table does not change, no matter whether and how many numbers of this range have been ported, or flexible routed. The Range Number Table is accessed after the Single Number Table if there was no hit in the Single Number Table. A hit in the Range Table with a Default Number Range indicates that the received E.164 number is an own number not ported out, a foreign number not known to be ported, or an own number not flexible routed. An Exception Number Range is an E.164 number range, which has been ported completely. If a sub-range of a default range is ported, the original default range in this table has to be split, as overlapping ranges are not allowed. The Range Table is accessed after the Single Number Table if there was no hit in the Single Number Table. A hit in the Range Table with an Exception Number Range indicates that the received E.164 number belongs to a ported number range. This parameter is part of the SAS database of SAS Release 1 and the Application Services of SAS Release 1 will use this parameter. Purpose of this parameter for the service logic of the SAS Application Service: Controls the number of database dips. If default and exception ranges are both modelled in this table, then the second database dip is definitely the last one. |
| Transition Indicator | 1 Bit | "Transition Time is Over", Transition Time is Not Yet Over". | This field indicated whether the transition time of this E.164 number range is over or not. The Transition Time is the time, which is required to make all changes of a number portation active in all involved networks of the porting domain. This attribute is used for detection of inconsistencies, which might be caused by looping SS7 messages. The default of this attributed is "Transition Time is Over". The SPS has to set this attribute to "Transition Time is Not Yet Over" if usage of this attributed is required, and has to trigger the modification of this attribute as soon as the transition time is over. Only few customers require this feature. Values: <br>• 0b: Transition Time is Over. I.e. E.164 Number Type and Portability Status have not been changed, or has remained in the same state for a sufficient amount of time. <br>• 1b: Transition Time is Not Yet Over. I.e. E.164 Number Type and Portability Status have been changed recently. <br>Purpose of this parameter for the service logic of the SAS Application Service: this field controls the Loop Detection part of the service logic. |
| Single Number Flag | 1 Bit | "Interpret Entry as Range", "Interpret Entry as Single Number" | With this flag it is possible to interpret an entry in this range database as a single number instead of a range. This implies that Start Range and End Range are exactly the same. The value of this single entry is read from the key, which is End Range. This flag therefore allows having single number entries in the range database. It is the counterpart to the Extended Match Indicator and the Extended Match Length of the single number tables. The following values are allowed: <br>• 0b: Interpret Entry as Range (default) <br>• 1b: Interpret Entry as Single Number <br>This parameter will be in SAS database of SAS Release 1. The SAS Application Services of SAS Release 1 will not use this parameter. Therefore, it will be provisioned with the default value 0b. Purpose of this parameter for the service logic of the SAS Application Service: indication whether this range database entry is to interpreted as |

| | | | number range or as single number. |
|---|---|---|---|
| Service Control Data Id | E.g. 16 Bit | Pointer into the entity set "Service Control Data". | This attribute is a foreign key into the entity set "Service Control Data". Purpose of this parameter for the service logic of the SAS Application Service: In combination with Service Control Data Sequence Number, this attribute refers to one of the set of Service Control Data, which are to be used during outbound processing. For SAS Release 1 the general flexibility of the attributes Service Control Data Id and Service Control Data Sequence Number is not realised. I.e. it is not possible in SAS Release 1 to associate an arbitrary number of Service Control Data with a single entry of this table, but only a fixed limited number of Service Control Data, specifically 5. Therefore, instead of the two attributes Service Control Data Id and Service Control Data Sequence Number the following five attributes are present: <br> • Service Control Data Id0 (Slot 0). <br> • Service Control Data Id1 (Slot 1). <br> • Service Control Data Id2 (Slot 2). <br> • Service Control Data Id3 (Slot 3). <br> • Service Control Data Id4 (Slot 4). |
| Service Control Data Sequence Number | E.g. 4 Bit | Integer Value 0h to Fh. | This field defines the sequence number of the referenced Service Control Data. In general, the sequence of the Service Control Data of a given E.164 number is free, however, it is recommended to define a common order. E.g. the first Service Control Data item contains the INRN, the second Service Control Data item contains the Logical HLR Address, etc. In the current implementation it is always assumed that there is a fixed association between Service Control Data Sequence Number and Service Control Data Type. Purpose of this parameter for the service logic of the SAS Application Service: In combination with Service Control Data Id, this attribute refers to one of the set of Service Control Data, which are to be used during outbound processing. |

For Range Number tables, the primary key is either the Number Start Range Length/Value or the Number End Range Length/Value, or even both.

If the Service Control Data Groups are used, then the field "Service Control Data Id" in this table has to be replaced by the field "Service Control Data Group Id" with similar functionality.

Recommended byte structure for control information captured in the attributes E.164 Number Type (ENT), Portability Status (PS), Default/Exception Indicator (DEI), Transition Indicator (TI), Extended Match Indicator (EMI), and Extended Match Length (EML):
Byte 1:
• Bit 0: Single Number Flag.
• Bit 4-7: E.164 Number Type.
Byte 2:
• Bit 0-3: Portability Status.
• Bit 4: Spare.
• Bit 5: Spare.
• Bit 6: Transition Indicator.
• Bit 7: Default/Exception Indicator.

Table 3: Details of the E.164 Range Number Table

1.2.3.2 MSIN Based Table

The MSIN Based Table is required to store MSIN information for mobile location updates. The purpose of the data is to provide the ability to map the MSIN information to additional routing information.
Three cases need to be distinguished:

1. The MSIN is sufficient to perform IMSI based FLR and MGT based FLR in the mobile network. In this case only the MSIN part of the E.212 and E.214 number is stored. This implies that there is a common table for E.212 and E.214 numbers.

2. The MSIN plus the MNC is required to perform IMSI based FLR in the mobile network. A dedicated table is required for IMSI based FLR and MGT based FLR.

3. The MSIN plus the NC is required to perform MGT based FLR in the mobile network. A dedicated table is required for IMSI based FLR and MGT based FLR.

For all MSIN based table it is assumed that the number received is always complete. I.e. requesting of additional digits is never necessary.

Table 4 and Table 5 specify the details of the MSIN Single Number Table and the MSIN Range Number Table of the ER diagram of Figure 1.

| MSIN Single Number Table | | | |
|---|---|---|---|
| **Attribute** | **Format** | **Values** | **Description** |
| MSIN Based Number Length | 4 Bit | Any one digit hex integer value, 0h-Fh. | Primary Key. This field defines the actual length of the MSIN based number. Purpose of this parameter for the service logic of the SAS Application Service: Detects whether received number does or does not match in this database. |
| MSIN Based Number Value | 7 Byte plus 4 Bit | Any valid MSIN Based Number, in general without Country Code, up to 15 hex digits | For this number, control information (such as routing information) is to be determined. Primary Key. Unused trailing hex digits are filled with 0h. The maximum length of this attribute shall be configurable at system installation time. The default length is 7 1/2 byte. The real required lengths are as follows: * Mere MSIN: up to 10 hex digits. * IMSI based: MNC plus MSIN: up to 12 hex digits. * MGT based: NC plus MSIN: up to 14 hex digits. Purpose of this parameter for the service logic of the SAS Application Service: Detects whether received number does or does not match in this database. |
| Number Type | 4 Bit | Fixed Geographic Number, Non-Geographic Service Number: Individually Assigned, Non-Geographic Service Number: Block-wise Assigned, Pan-European Service Number, Mobile Network Number (MSISDN), Mobile Prepaid Number E.212 IMSI E.214 MGT | Indicates the type of the E.164 or MSIN based number. The encoding of Number Type for E.164 numbers and MSIN based numbers has to be the same for all SAS databases of a given customer network. In general, the customer can decide on an encoding. The default encoding is as follows: 0000b: Fixed Geographic Number. 0001b: Non-Geographic Service Number: Individually Assigned. 0010b: Non-Geographic Service Number: Block-wise Assigned. 0011b: Pan-European Service Number. 0100b: Mobile Network Number (MSISDN). 0101b: Mobile Prepaid Number. 0110b: E.212 IMSI. 0111b: E.214 MGT. 1000b-1111b: For future use, and - decreasing from 1111b - Customer specific. The code of this field controls the loop detection and the outbound processing of the service logic. The association of the logical name and the code is defined as configuration items. Each individual E.164 or MSIN based number has a specific type. Per E.164 or MSIN based Single Number or Range Number Table E.164 or MSIN based numbers with different types may occur. It is unlikely, that more than 16 E.164 and MSIN based Number Types are required in the mid-term future. This parameter is mandatory in the SAS database. It is optional at the CCS-SPS interface. This implies that a customer specific default value for this parameter is to be defined during the customer questionnaire. Purpose of this parameter for the service logic of the SAS Application Service: Controls the loop detection and the configured outbound processing. |

| | | | |
|---|---|---|---|
| Portability Status | 4 Bit | "Own Number Ported Out", "Own Number Not Ported Out", "Foreign Number Ported In", "Foreign Number Ported to Another Foreign Network", "Foreign Number Not Known to be Ported", "Foreign Number Not Ported In", "Own or Foreign Number Ported to Another Foreign Network", "Number, which cannot be ported", "Own Number, which cannot be geographically ported", "Own Number Not Geographically Ported", "Own Number Geographically Ported", "Own Number, which cannot be flexible routed", "Own Number not flexible routed", "Own Number flexible routed". | Indicates the portability status of the E.164 number or MSIN Based number with reference to the network in which the SAS is located.<br>The portability status of the E.164 number or MSIN Based number is known at configuration time.<br>The Portability Status determines the loop detection and the basic control flow of the outbound processing of the service logic.<br>The value "Foreign Number Not Ported In" groups the values ", "Foreign Number Ported to Another Foreign Network" and "Foreign Number Not Known to be Ported".<br>The value "Own or Foreign Number Ported to Another Foreign Network" groups the values "Own Number Ported Out" and "Foreign Number Ported to Another Foreign Network".<br>The value "Number, which cannot be ported" marks numbers, which must not be ported, such as SCAs.<br>The encoding is a follows:<br>The most significant bit indicates the porting type of the E.164 number:<br>0b: Service Provider Ported.<br>1b: Geographically Ported, or Flexible Routed (FLR).<br>For the Service Provider Ported E.164 numbers, the remaining 3 bits have the following meaning:<br>000b: Own Number, which cannot be ported.<br>001b: Own Number Not Ported Out.<br>010b: Own Number Ported Out.<br>011b: Own or Foreign Number Ported to Another Foreign Network.<br>100b: Foreign Number Not Ported In.<br>101b: Foreign Number Not Known to be Ported.<br>110b: Foreign Number Ported In.<br>111b: Foreign Number Ported to Another Foreign Network.<br>The semantics of the Bits are as follows:<br>Bit 1 (Most Significant Bit): 0 if an own number is involved; 1 if only a foreign number is involved.<br>Bit 2: 0 if number is not ported; 1 if number is ported.<br>Bit 3 (Least Significant Bit): additional discriminator for Bit 2.<br>For the Geographically Ported E.164 numbers and flexible routed E.164 numbers and MSIN Based numbers, the remaining 3 bits have the following meaning:<br>000b: Own Number, which cannot be geographically ported.<br>001b: Own Number Not Geographically Ported.<br>010b: Own Number Geographically Ported.<br>011b: Undefined.<br>100b: Own Number, which cannot be flexible routed.<br>101b: Own Number not flexible routed.<br>110b: Own Number flexible routed.<br>111b: Undefined.<br>It is likely that this field will require additional bits in the future. There should be potentially space for in total up to 8 bits for this field.<br>This parameter is mandatory in the SAS database and has to be provisioned at the CCS-SPS interface.<br>Purpose of this parameter for the service logic of the SAS Application Service: Controls the loop detection and the configured outbound processing. |
| Default/Exception Indicator | 1 Bit | "Default Entry", Exception Entry". | This field specifies whether the MSIN Based number in this record is a default number or an exception number. A Default MSIN Based Number is a MSIN Based number, which is not ported for flexible routing. An Exception MSIN Based Number is an MSIN Based number, which is ported for flexible routing.<br>This field controls the MSIN Based Number digit analysis part of the service logic.<br>The encoding is as follows:<br>0b: Default Entry.<br>1h: Exception Entry.<br>In combination with the Extended Match attributes, this attribute allows the storage of exception and default numbers and ranges completely in this table. This results in a performance gain. Only drawback: the specification of ranges is a bit more complex compared to the option to |

| | | | store ranges in the range table. This parameter is part of the SAS database of SAS Release 1. However, the Application Services of SAS Release 1 will not use this parameter. Therefore, the default value of 1b is to be provisioned. Purpose of this parameter for the service logic of the SAS Application Service: Controls the number of database dips. |
|---|---|---|---|

| | | | |
|---|---|---|---|
| Transition Indicator | 1 Bit | "Transition Time is Over", Transition Time is Not Yet Over". | This field indicated whether the transition time of this MSIN Based number is over or not. The Transition Time is the time, which is required to make all changes of a flexible number routing active in the network. This attribute is used for detection of inconsistencies, which might be caused by looping SS7 messages. The default of this attributed is "Transition Time is Over". The SPS has to set this attribute to "Transition Time is Not Yet Over" if usage of this attributed is required, and has to trigger the modification of this attribute as soon as the transition time is over. Only few customers require this feature. Values: <br> • 0b: Transition Time is Over. I.e. MSIN Number Type and Portability Status have not been changed, or has remained in the same state for a sufficient amount of time. <br> • 1b: Transition Time is Not Yet Over. I.e. MSIN Number Type and Portability Status have been changed recently. <br> Purpose of this parameter for the service logic of the SAS Application Service: this field controls the Loop Detection part of the service logic. |
| Extended Match Indicator | 1 Bit | "Exact Match", "Extended Match". | Purpose: to efficiently model ranges in the single number table. Extended Match Indicator indicates whether the MSIN based number above generates a positive match also for queried numbers which have above MSIN based number as the start: <br> * 0b for default case, only exact matches for MSIN based numbers are allowed. <br> * 1b: Extended Match, the match is also positive when the queried number is longer than the above MSIN based number and contains the above MSIN based number as the start. <br> This field controls the digit analysis of the mandatory part(s) of the received MSIN based number. Open and Closed Ranges can be modelled with this parameter. This parameter will be in SAS database of SAS Release 1. The SAS Application Services of SAS Release 1 will not use this parameter. Therefore, it will be provisioned with the default value 0b. Purpose of this parameter for the service logic of the SAS Application Service: In combination with Extended Match Length, this attribute detects whether the received number is incomplete or complete; if complete, it detects whether the received number does or does not match in this database. |
| Extended Match Length | 3 Bit | Integer values 0-7 | This parameter specifies the number of digits, which need to be present in addition to the digits in the parameter MSIN Based Number Value in order to have a complete number. For an incomplete number the Application Service has to request additional digits. Open and Closed Ranges can be modelled with this parameter. This parameter will be in SAS database of SAS Release 1. The SAS Application Services of SAS Release 1 will not use this parameter. Therefore, it will be provisioned with the default value 000b. Purpose of this parameter for the service logic of the SAS Application Service: In combination with Extended Match Indicator, this attribute detects whether the received number is incomplete or complete; if complete, it detects whether the received number does or does not match in this database. |

| Service Control Data Id | E.g. 16 Bit | Pointer into the entity set "Service Control Data". | This attribute is a foreign key into the entity set "Service Control Data". Purpose of this parameter for the service logic of the SAS Application Service: In combination with Service Control Data Sequence Number, this attribute refers to one of the set of Service Control Data, which are to be used during outbound processing. For SAS Release 1 the general flexibility of the attributes Service Control Data Id and Service Control Data Sequence Number is not realised. I.e. it is not possible in SAS Release 1 to associate an arbitrary number of Service Control Data with a single entry of this table, but only a fixed limited number of Service Control Data, specifically 5. Therefore, instead of the two attributes Service Control Data Id and Service Control Data Sequence Number the following five attributes are present: <br>• Service Control Data Id0 (Slot 0).<br>• Service Control Data Id1 (Slot 1).<br>• Service Control Data Id2 (Slot 2).<br>• Service Control Data Id3 (Slot 3).<br>• Service Control Data Id4 (Slot 4). |
|---|---|---|---|
| Service Control Data Sequence Number | E.g. 4 Bit | Integer Value 0h to Fh. | This field defines the sequence number of the referenced Service Control Data. In general, the sequence of the Service Control Data of a given MSIN Based number is free, however, it is recommended to define a common order. In the current implementation it is always assumed that there is a fixed association between Service Control Data Sequence Number and Service Control Data Type. Purpose of this parameter for the service logic of the SAS Application Service: In combination with Service Control Data Id, this attribute refers to one of the set of Service Control Data, which are to be used during outbound processing. |

Recommended byte structure for control information captured in the attributes MSIN Number Type (MNT), Portability Status (PS), Default/Exception Indicator (DEI), Transition Indicator (TI), Extended Match Indicator (EMI), and Extended Match Length (EML):

Byte 1:
- Bit 0-2: Extended Match Length.
- Bit 3: Extended Match Indicator.
- Bit 4-7: MSIN Number Type.

Byte 2:
- Bit 0-3: Portability Status.
- Bit 4: Spare.
- Bit 5: Spare.
- Bit 6: Transition Indicator.
- Bit 7: Default/Exception Indicator.

An alternative and more efficient encoding for the Extended Match mechanism is as follows: the 3 bit attribute Extended Match Length and the 1 bit attribute Extended Match Indicator are combined into one single 4 bit attribute Extended Match Field with the following encoding:
- 0000b: Extended Match, Extended Match Length 0.
- 0001b: Extended Match, Extended Match Length 1.
- 0010b: Extended Match, Extended Match Length 2.
- 0011b: Extended Match, Extended Match Length 3.
- 0100b: Extended Match, Extended Match Length 4.
- 0101b: Extended Match, Extended Match Length 5.
- 0110b: Extended Match, Extended Match Length 6.
- 0111b: Extended Match, Extended Match Length 7.
- 1000b: Extended Match, Extended Match Length 8.
- 1001b: Extended Match, Extended Match Length 9.
- 1010b: Extended Match, Extended Match Length 10.
- 1011b: Extended Match, Extended Match Length 11.
- 1100b: Extended Match, Extended Match Length 12.
- 1101b: Extended Match, Extended Match Length 13.
- 1110b: Extended Match, Extended Match Length 14.
- 1111b: Exact Match.

Table 4: Details of the MSIN Single Number Table - ER Model of Figure 1.

| MSIN Range Number Table Range | | | |
|---|---|---|---|
| **Attribute** | **Format** | **Values** | **Description** |
| MSIN Based Number Start Range Length | 4 Bit | Any one digit hex integer value, 0h-Fh. | Primary Key. This field defines the actual length of the MSIN based Number Start Range. Purpose of this parameter for the service logic of the SAS Application Service: Detects whether received number does or does not match in this database. |
| MSIN Based Number Start Range Value | 7 Byte plus 4 Bit | Any valid MSIN Based Number, in general without Country Code, up to 15 hex digits | For this number, control information (such as routing information) is to be determined. Primary Key. Unused trailing hex digits are filled with 0h. The maximum length of this attribute shall be configurable at system installation time. The default length is 7 1/2 byte. The real required lengths are as follows: * Mere MSIN: up to 10 hex digits. * IMSI based: MNC plus MSIN: up to 12 hex digits. * MGT based: NC plus MSIN: up to 14 hex digits. Purpose of this parameter for the service logic of the SAS Application Service: Detects whether received number does or does not match in this database. |
| MSIN Based Number End Range Length | 4 Bit | Any one digit hex integer value, 0h-Fh. | Primary Key. This field defines the actual length of the MSIN based Number End Range. Purpose of this parameter for the service logic of the SAS Application Service: Detects whether received number does or does not match in this database. |
| MSIN Based Number End Range Value | 7 Byte plus 4 Bit | Any valid MSIN Based Number, in general without Country Code, up to 15 hex digits | For the number range of which this attribute defines the end, routing information is to be determined. Primary Key. Unused trailing hex digits are filled with 0h. The maximum length of this attribute shall be configurable at system installation time. The default length is 7 1/2 byte. The real required lengths are as follows: * Mere MSIN: up to 10 hex digits. * IMSI based: MNC plus MSIN: up to 12 hex digits. * MGT based: NC plus MSIN: up to 14 hex digits. Purpose of this parameter for the service logic of the SAS Application Service: Detects whether received number does or does not match in this database. |
| Number Type | 4 Bit | Fixed Geographic Number, Non-Geographic Service Number: Individually Assigned, Non-Geographic Service Number: Block-wise Assigned, Pan-European Service Number, Mobile Network Number (MSISDN), Mobile Prepaid Number E.212 IMSI E.214 MGT | Indicates the type of the E.164 or MSIN based number. The encoding of Number Type for E.164 numbers and MSIN based numbers has to be the same for all SAS databases of a given customer network. In general, the customer can decide on an encoding. The default encoding is as follows: 0000b: Fixed Geographic Number. 0001b: Non-Geographic Service Number: Individually Assigned. 0010b: Non-Geographic Service Number: Block-wise Assigned. 0011b: Pan-European Service Number. 0100b: Mobile Network Number (MSISDN). 0101b: Mobile Prepaid Number. 0110b: E.212 IMSI. 0111b: E.214 MGT. 1000b-1111b: For future use, and - decreasing from 1111b - Customer specific. The code of this field controls the loop detection and the outbound processing of the service logic. The association of the Number Type's logical name and the code is defined as configuration items. Each individual E.164 or MSIN based number has a specific type. Per E.164 or MSIN based Single Number or Range Number Table E.164 or MSIN based numbers with different types may occur. It is unlikely, that more than 16 E.164 and MSIN based Number Types are required in the mid-term future. This parameter is mandatory in the SAS database. It is optional at the CCS-SPS interface. This implies that a customer specific default value for this parameter is to be defined during the customer questionnaire. Purpose of this parameter for the service logic of the SAS Application Service: Controls the loop detection and the configured outbound processing. |

| Portability Status | 4 Bit | "Own Number Ported Out", "Own Number Not Ported Out", "Foreign Number Ported In", "Foreign Number Ported to Another Foreign Network", "Foreign Number Not Known to be Ported", "Foreign Number Not Ported In", "Own or Foreign Number Ported to Another Foreign Network", "Number, which cannot be ported", "Own Number, which cannot be geographically ported", "Own Number Not Geographically Ported", "Own Number Geographically Ported", "Own Number, which cannot be flexible routed", "Own Number not flexible routed", "Own Number flexible routed". | Indicates the portability status of the E.164 number or MSIN Based number with reference to the network in which the SAS is located. The portability status of the E.164 number or MSIN Based number is known at configuration time. The Portability Status determines the loop detection and the basic control flow of the outbound processing of the service logic. The value "Foreign Number Not Ported In" groups the values ", "Foreign Number Ported to Another Foreign Network" and "Foreign Number Not Known to be Ported". The value "Own or Foreign Number Ported to Another Foreign Network" groups the values "Own Number Ported Out" and "Foreign Number Ported to Another Foreign Network". The value "Number, which cannot be ported" marks numbers, which must not be ported, such as SCAs. The encoding is a follows: The most significant bit indicates the porting type of the E.164 number: 0b: Service Provider Ported. 1b: Geographically Ported, or Flexible Routed (FLR). For the Service Provider Ported E.164 numbers, the remaining 3 bits have the following meaning: 000b: Own Number, which cannot be ported. 001b: Own Number Not Ported Out. 010b: Own Number Ported Out. 011b: Own or Foreign Number Ported to Another Foreign Network. 100b: Foreign Number Not Ported In. 101b: Foreign Number Not Known to be Ported. 110b: Foreign Number Ported In. 111b: Foreign Number Ported to Another Foreign Network. The semantics of the Bits are as follows: Bit 1 (Most Significant Bit): 0 if an own number is involved; 1 if only a foreign number is involved. Bit 2: 0 if number is not ported; 1 if number is ported. Bit 3 (Least Significant Bit): additional discriminator for Bit 2. For the Geographically Ported E.164 numbers and flexible routed E.164 numbers and MSIN Based numbers, the remaining 3 bits have the following meaning: 000b: Own Number, which cannot be geographically ported. 001b: Own Number Not Geographically Ported. 010b: Own Number Geographically Ported. 011b: Undefined. 100b: Own Number, which cannot be flexible routed. 101b: Own Number not flexible routed. 110b: Own Number flexible routed. 111b: Undefined. It is likely that this field will require additional bits in the future. There should be potentially space for in total up to 8 bits for this field. This parameter is mandatory in the SAS database and has to be provisioned at the CCS-SPS interface. Purpose of this parameter for the service logic of the SAS Application Service: Controls the loop detection and the configured outbound processing. |

| Default/Exception Indicator | 1 Bit | "Default Number Range", Exception Number Range". | This field specifies whether the MSIN Based number range in this record is a default number range or an exception number range. A Default MSIN Based Number Range is a MSIN Based number range, which is not ported for flexible routing. An Exception MSIN Based Number is an MSIN Based number, which is ported for flexible routing. This field controls the MSIN Based Number digit analysis part of the service logic. The encoding is as follows: 0b: Default Number Range. 1h: Exception Number Range. This field controls the MSIN Based Number digit analysis part of the service logic. A Default Number Range is assigned to a specific HLR based on e.g. leading digits of the MSIN. Numbers from a Default Number Range may be ported for flexible routing purposes. The definition of a Default Number Range in this table does not change, no matter whether and how many numbers of this range have been ported for flexible routing purposes. The Range Table is accessed after the Single Number Table if there was no hit in the Single Number Table. A hit in the Range Table with a Default Number Range indicates that the received MSIN Based number is a MSIN Based number, which is still in its default HLR. An Exception Number Range is an MSIN Based number range, which has been ported completely for flexible routing purposes. If a sub-range of a default range is ported for flexible routing, the original default range in this table has to be split, as overlapping ranges are not allowed. The Range Table is accessed after the Single Number Table if there was no hit in the Single Number Table. A hit in the Range Table with an Exception Number Range indicates that the received MSIN Based number belongs to a number range, which has been ported for flexible routing purposes. Purpose of this parameter for the service logic of the SAS Application Service: Controls the number of database dips. If default and exception ranges are both modelled in this table, then the second database dip is definitely the last one. |
| Transition Indicator | 1 Bit | "Transition Time is Over", Transition Time is Not Yet Over". | This field indicated whether the transition time of this MSIN Based number range is over or not. The Transition Time is the time, which is required to make all changes of a flexible number routing active in the network. This attribute is used for detection of inconsistencies, which might be caused by looping SS7 messages. The default of this attributed is "Transition Time is Over". The SPS has to set this attribute to "Transition Time is Not Yet Over" if usage of this attributed is required, and has to trigger the modification of this attribute as soon as the transition time is over. Only few customers require this feature. Values: • 0b: Transition Time is Over. I.e. MSIN Number Type and Portability Status have not been changed, or has remained in the same state for a sufficient amount of time. • 1b: Transition Time is Not Yet Over. I.e. MSIN Number Type and Portability Status have been changed recently. Purpose of this parameter for the service logic of the SAS Application Service: this field controls the Loop Detection part of the service logic. |

| Single Number Flag | 1 Bit | "Interpret Entry as Range", "Interpret Entry as Single Number" | With this flag it is possible to interpret an entry in this range database as a single number instead of a range. This implies that Start Range and End Range are exactly the same. The value of this single entry is read from the key, which is End Range. This flag therefore allows having single number entries in the range database. It is the counterpart to the Extended Match Indicator and the Extended Match Length of the single number tables. The following values are allowed:<br>• 0b: Interpret Entry as Range (default)<br>• 1b: Interpret Entry as Single Number<br>This parameter will be in SAS database of SAS Release 1. The SAS Application Services of SAS Release 1 will not use this parameter. Therefore, it will be provisioned with the default value 0b.<br>Purpose of this parameter for the service logic of the SAS Application Service: indication whether this range database entry is to interpreted as number range or as single number. |
| Service Control Data Id | E.g. 16 Bit | Pointer into the entity set "Service Control Data". | This attribute is a foreign key into the entity set "Service Control Data". Purpose of this parameter for the service logic of the SAS Application Service: In combination with Service Control Data Sequence Number, this attribute refers to one of the set of Service Control Data, which are to be used during outbound processing. For SAS Release 1 the general flexibility of the attributes Service Control Data Id and Service Control Data Sequence Number is not realised. I.e. it is not possible in SAS Release 1 to associate an arbitrary number of Service Control Data with a single entry of this table, but only a fixed limited number of Service Control Data, specifically 5. Therefore, instead of the two attributes Service Control Data Id and Service Control Data Sequence Number the following five attributes are present:<br>• Service Control Data Id0 (Slot 0).<br>• Service Control Data Id1 (Slot 1).<br>• Service Control Data Id2 (Slot 2).<br>• Service Control Data Id3 (Slot 3).<br>• Service Control Data Id4 (Slot 4). |
| Service Control Data Sequence Number | E.g. 4 Bit | Integer Value 0h to Fh. | This field defines the sequence number of the referenced Service Control Data. In general, the sequence of the Service Control Data of a given MSIN Based number range is free, however, it is recommended to define a common order. In the current implementation it is always assumed that there is a fixed association between Service Control Data Sequence Number and Service Control Data Type.<br>Purpose of this parameter for the service logic of the SAS Application Service: In combination with Service Control Data Id, this attribute refers to one of the set of Service Control Data, which are to be used during outbound processing. |

For Range Number tables, the primary key is either the Number Start Range Length/Value or the Number End Range Length/Value, or even both.

Recommended byte structure for control information captured in the attributes MSIN Number Type (MNT), Portability Status (PS), Default/Exception Indicator (DEI), Transition Indicator (TI), Extended Match Indicator (EMI), and Extended Match Length (EML):

Byte 1:
• Bit 0: Single Number Flag.
• Bit 4-7: MSIN Number Type.

Byte 2:
• Bit 0-3: Portability Status.
• Bit 4: Spare.
• Bit 5: Spare.
• Bit 6: Transition Indicator.
• Bit 7: Default/Exception Indicator.

Table 5: Details of the MSIN Range Number Table - ER Model of Figure 1.

### 1.2.3.3 Service Control Table

The Service Control Table is required to store service control numbers, such as routing numbers. The Service Control Database is references by the E.164 and MSIN Based Single Number and Range Tables, in order to retrieve the necessary routing and service control information needed by the respective SAS Application Service. The main purpose of this table is to provide a consistent storage mechanism for these Service Controls.

The Service Control Table shall contain only single numbers.

Table 6 defines the details of the Service Control Data Table. There is only a single table for different types of the Service Control Data, such as Prefix type, Replacement type, etc.

| Service Control Data Table | | | |
|---|---|---|---|
| **Attribute** | **Format** | **Values** | **Description** |
| Service Control Data Id | E.g. 16 Bit | E.g. 16 Bit value or implicit the memory address of the start of the record. | This attribute identifies a unique Service Control Data value. Primary Key. This primary key is a physical primary key, i.e. the single and range tables use this parameter to address the correct Service Control Data entry. Purpose of this parameter for the service logic of the SAS Application Service: Unique reference to this Service Control Data. |
| Service Control Data Function | 1 Byte | E.g. Insert, Replacement, Tariff, NoAction, etc. | This field specifies the Service Control Data Function. This information is necessary for the SAS application service in order to do the right thing with the returned Service Control Data:<br>• Insert: Configuration Info is to be considered in determining the position of the Service Control Data in the output string. The structure of the routing number shall be consistent with the definition of network prefixes.<br>• Replacement: the Service Control Data replaces completely the input number string. The structure of the routing number shall be consistent with the definition of network replacement addresses. Cut Offset, Cut Length, Control Info does not have any effect.<br>• Tariff: The routing number is associated with tariff profile information.<br>The first Service Control Data of a single number or a number range may be of type NoAction. In this case there would be not additional Service Control Data for this single number or number range. A Service Control Data of type NoAction indicates that no Service Control Data information is available, and that the outbound part of the service logic can continue with a default sequence of action. A NoAction type Service Control Data could be applicable e.g. for non-ported numbers.<br>This parameter will be in SAS database of SAS Release 1. The SAS Application Services of SAS Release 1 will not use this parameter. Therefore, it will be provisioned with the default value 00h.<br>Purpose of this parameter for the service logic of the SAS Application Service: specifies what to do with this Service Control Data in the outbound processing, e.g. insert this Service Control Data in the correct slot of the outbound digit string, replace the inbound digit string completely with this Service Control Data, etc. |

| | | | |
|---|---|---|---|
| Service Control Data Type | 1 Byte | E.g. INRN, INRN-2, LPRN, Exchange-Id, SCA, LogicalHLR-Id, LogicalSCP-Id, LogicalVMC-Id, LogicalSMC-Id, LogicalExchange-Id, etc. | This field specifies the Service Control Data Type. This information is necessary for the SAS application service in order to do the right thing with the returned Service Control Data. Logical Key together with Service Control Data Length and Service Control Data Value, necessary to associate an entry of the Service Control Data Table with an entry of the single or range number tables. Possible values are: <br> • INRN: Inter Network Routing Number (values defined by operator). <br> • INRN-2 ... INRN-n: additional types of Inter Network Routing Number (values defined by operator). <br> • LPRN: Location Ported Routing Number (values defined by operator). <br> • Exchange-Id: Exchange Id (values defined by operator). <br> • HLR-Id (values defined by operator). <br> • SCP-Id (values defined by operator). <br> • VMSC-Id (values defined by operator). <br> • SMSC-Id (values defined by operator). <br> • SCA: Service Centre Address (values defined by operator). <br> • HLR-SCA (values defined by operator). <br> • SCP-SCA (values defined by operator). <br> • VMSC-SCA (values defined by operator). <br> • SMSC-SCA (values defined by operator). <br> • Exchange-SCA (values defined by operator). <br> • LogicalHLR-Id: Logical HLR Id (private, values defined by Alcatel). <br> • LogicalSCP-Id: Logical SCP Id (private, values defined by Alcatel). <br> • LogicalVMC-Id: Logical VMC Id (private, values defined by Alcatel). <br> • LogicalSMC-Id: Logical SMC Id (private, values defined by Alcatel). <br> • LogicalExchange-Id: Logical Exchange Id (private, values defined by Alcatel). <br> The Service Control Data Type identifies in combination with the Output Digit String definition the position of an Insert type Service Control Data in the Output Digit Sting. A Replacement type Service Control Data replaces the complete Input Digit String. Customer defined values shall be possible (in combination with the corresponding values in the definition of the outbound processing configuration). Purpose of this parameter for the service logic of the SAS Application Service: Unique name of the Service Control Data. E.g. this is name is used to identify the correct slot in the outbound digit string. |
| Service Control Data Length | 4 Bit | Any one digit hex integer value, 0h-Fh. | This field defines the actual length of the Service Control Data in this entry. Logical Key together with Service Control Data Type and Service Control Data Value, necessary to associate an entry of the Service Control Data Table with an entry of the single or range number tables. Purpose of this parameter for the service logic of the SAS Application Service: no impact. |
| Service Control Data Value | 7 Byte plus 4 Bit | Any number string including up to 15 hex digits. | This is a Service Control Data Value, such as a network routing number, a logical HLR address, etc. Unused trailing hex digits are filled with Fh. Logical Key together with Service Control Data Type and Service Control Data Length, necessary to associate an entry of the Service Control Data Table with an entry of the single or range number tables. Purpose of this parameter for the service logic of the SAS Application Service: this is the value to be inserted / replaced / etc. in the outbound digit string. |

| Address Info Present Mask | 1 Bit | "Present", "Not Present" | Indicates whether NoAI and NP have to be present in the output digit string. This may be either on SCCP level, INAP level, MAP level, CAP level, etc.<br>0b: not present (default).<br>1b: present.<br>Purpose of this parameter for the service logic of the SAS Application Service: indicates whether NoAI and NP of this Service Control Data are to be inserted in the output digits string, either:<br>• On SCCP level, into the Global Title Address Information of the outbound SS7 message.<br>• On INAP level,<br>• On MAP level,<br>• On CAP level,<br>Please note, that the encoding might be different on each level. Even customer specific encoding is possible. Please note also, that for a given Service Control Data entry only ONE encoding of NoAI and NP is allowed. However, multiple encodings within a single Service Control Data table is possible. Care must be taken to correctly provision these data in this case.<br>The respective SAS Application Service decides, where exactly the SCCP address information is to be inserted (SCCP level, INAP level, MAP level, CAP level, etc.). For a given entry in the Service Control Data Table, the SCCP address information can only be inserted at one place at a time. Provisioning of the Service Control Data has to make sure that for each entry the correct encoding of NoAI and NP is provided. |
|---|---|---|---|
| Nature of Address Indicator | 1 Byte | Any NoAI value. | The Nature of Address Indicator of the Service Control Data Value.<br>Purpose of this parameter for the service logic of the SAS Application Service: to be inserted into the NoAI field of the outbound SS7 message at the correct level (either SCCP, INAP, MAP, CAP, etc.) if Address Info Present Mask is set to 1b.<br>If NoAI is to be inserted at more than one protocol level, then the provisioning of the NoAI values must be done with care. It can be the case that the NoAI encoding is always the same for a given Service Control Data Type for a given SAS deployment. If this is not the case, then the SCCP encoding should be taken in all those critical cases, and the SAS Application Services have to perform their respective mapping. |
| Numbering Plan | 1 Byte | Any NP value. | The Numbering Plan of the Service Control Data Value.<br>Purpose of this parameter for the service logic of the SAS Application Service: to be inserted into the NP field of the outbound SS7 message at the correct level (either SCCP, INAP, MAP, CAP, etc.) if Address Info Present Mask is set to 1b.<br>If the Numbering Plan is to be inserted at more than one protocol level, then the provisioning of the Numbering Plan values must be done with care. It can be the case that the Numbering Plan encoding is always the same for a given Service Control Data Type for a given SAS deployment. If this is not the case, then the SCCP encoding should be taken in all those critical cases, and the SAS Application Services have to perform their respective mapping. |
| Cut Enable Mask | 1 Bit | "Enabled", "Disabled" | The Cut Enable Mask indicates whether Cut Offset and Cut Length are active or not. For the Cut mechanism to work properly, there must not be any Infix in the sent digit string. The Cut mechanism applies only to the core part of the received digit string, i.e. Nat, Nat1Nat2, MSIN, MNC MSIN, NC MSIN, etc.<br>0b: disabled (default).<br>1b: enabled.<br>This parameter will be in SAS database of SAS Release 1. The SAS Application Services of SAS Release 1 will not use this parameter. Therefore, it will be provisioned with the default value 1b.<br>Purpose of this parameter for the service logic of the SAS Application Service: indicates whether or not the value of this Service Control Data is to be combined with the received Nat1Nat2 part, MSIN part, or etc., respectively by means of Cut and Paste. The resulting number is then part of the output digit string. |

| Cut Offset | 1 Byte | Positive Integer: 1..15. | Cut Offset with respect to the number in the Single Number Table, which points to this Service Control Data entry. The offset defines the start position in the number of the Single Number Table where the Service Control Data of this entry is to inserted or replaces the number of digits as specified in the field Cut Length. This parameter will be in SAS database of SAS Release 1. The SAS Application Services of SAS Release 1 will not use this parameter. Therefore, it will be provisioned with the default value 00h. Purpose of this parameter for the service logic of the SAS Application Service: defines the offset of the cut and paste. |
|---|---|---|---|
| Cut Length | 1 Byte | Positive Integer: 1..15. | Cut Length with respect to the number in the Single Number Table, which points to this Service Control Data entry. The Cut Length specifies the number of digits, which have to be deleted in the number of the respective Single Number Table at the position specified in Cut Offset before the Service Control Data is inserted at the position of Cut Offset. This parameter will be in SAS database of SAS Release 1. The SAS Application Services of SAS Release 1 will not use this parameter. Therefore, it will be provisioned with the default value 00h. Purpose of this parameter for the service logic of the SAS Application Service: defines the length of the cut and paste. |
| The combination of the parameters Service Control Data Type, Service Control Data Length, and Service Control Data Value are a logical key into the Service Control Data Table, i.e. this combination uniquely identifies a Service Control Data entry on the basis of information which belongs inherently to the Service Control Data. The cut mechanism cannot be used to specify the general position of a Service Control Data Value (e.g. INRN) in the outbound digit string. This can only be achieved using the configuration tables for the outbound digit string. The cut mechanism can rather be used for modifying the Search Digit String in the outbound processing. |||| 

Table 6: Details of the Service Control Data Table

NoAI and NP have different encoding for the various levels where they can occur.

The encoding of NoAI and NP for SCCP (ITU-T, Q.713, Signalling Connection Control Part formats and codes, 07/96) is as follows:

• Nature of Address Indicator in the Global Title Address Information:

 • 0000000b:unknown.
 • 0000001b: subscriber number.
 • 0000010b: reserved for national use.
 • 0000011b: national significant number.
 • 0000100b: international number.
 • 0000101b-1111111b: spare

• Numbering Plan in the Global Title Address Information:

 • 0000b: unknown.
 • 0001b: ISDN/telephony numbering plan (E.163, E.164).
 • 0010b: generic numbering plan.
 • 0011b: data numbering plan (X.121).
 • 0100b: telex numbering plan (F.69).
 • 0101b: maritime mobile numbering plan (E.210, E.211).
 • 0110b: land mobile numbering plan (E.212).
 • 0111b: ISDN/mobile numbering plan (E.214).
 • 1000b-1101b: spare.
 • 1110b: private network or network specific numbering plan.
 • 1111b: reserved.

The encoding of NoAI and NP for MAP (identical for GSM 09.02, Version 5.3.0 (MAP versions 1 and 2) and ETSI TS 100974 V7.5.1 (MAP version 3)) is as follows:

• Nature of Address Indicator in the AddressString:

 • 000b: unknown.
 • 001b: international number.
 • 010b: national significant number.

- 011b: network specific number.
- 100b: subscriber number.
- 101b: reserved.
- 110b: abbreviated number.
- 111b: reserved for extension.

- Numbering Plan Indicator in the AddressString:

  - 0000b: unknown.
  - 0001b: ISDN/telephony numbering plan (E.164).
  - 0010b: spare.
  - 0011b: data numbering plan (X.121).
  - 0100b: telex numbering plan (F.69).
  - 0101b: spare.
  - 0110b: land mobile numbering plan (E.212).
  - 0111b: spare.
  - 1000b: national numbering plan.
  - 1001b: private numbering plan.
  - 1111b: reserved for extension.

For INAP, the encoding of Calling Party Number and Called Party Number is derived from ISUP:

- Nature of Address Indicator:

  - 0000000b: spare.
  - 0000001 b: subscriber number (national use).
  - 0000010b: unknown (national use).
  - 0000011b: national (significant) number.
  - 0000100b: international number.
  - 0000101b: network-specific number (national use).
  - 00001110b: network routing number in national (significant) number format (national use).
  - 0000111b: network routing number in network-specific number format (national use).
  - 0001000b: network routing number concatenated with Called Directory Number (national use).
  - 0001001-1101111b: spare.
  - 1110000- 11111110b: reserved for national use.
  - 1111111b: spare.

- Numbering Plan Indicator:

  - 000b: spare.
  - 001b: ISDN (Telephony) numbering plan (ITU-T Recommendation E.164).
  - 010b: spare.
  - 011b: Data numbering plan (ITU-T Recommendation X.121) (national use).
  - 100b: Telex numbering plan (ITU-T Recommendation F.69) (national use).
  - 101b: reserved for national use.
  - 110b: reserved for national use.
  - 111b: spare.

For CAP, the encoding of Calling Party BCD Number is as follows:

- Type of number (corresponds to Nature of Address Indicator):

  - 000b: unknown.
  - 001b: international number.
  - 010b: national number.
  - 011b: network specific number.
  - 100b: dedicated access, short code.
  - 101b: reserved.

- 110b: reserved.
- 111b: reserved for extension.

- Numbering plan identification (corresponds to Numbering Plan). Number plan (applies for type of number = 000, 001, 010 and 100):

  - 0000b: unknown.
  - 0001b: ISDN/telephony numbering plan (Rec. E.164/E.163).
  - 0010b: reserved.
  - 0011b: data numbering plan (Recommendation X.121).
  - 0100b: telex numbering plan (Recommendation F.69).
  - 0101-0111b: reserved.
  - 1000b: national numbering plan.
  - 1001b: private numbering plan.
  - 1010b: reserved.
  - 1011b: reserved for CTS (see GSM 04.56).
  - 1100-1110b: reserved.
  - 1111b: reserved for extension.

1.2.3.4 Auxiliary Number Tables

The Auxiliary Table is required to store numbers, which are used to analyse the Input Digit String of any given Numbering Plan (e.g. E.164, E.212, E.214, etc.). The main purpose of this table is to provide a consistent storage mechanism to contain Head and Tail part numbers. The SAS Application Services access the Auxiliary Number Table during their Input Digit String Analysis phase. The Auxiliary Number Table contains true Auxiliary Numbers and small Core Part numbers.

The Auxiliary Table is used in combination with the Input Digit String Definition Table. The Input Digit String Definition Table specifies the structure of the Input Digit String. This includes the specification of the digit string elements for which the Auxiliary Table has to be queried. This includes all true Auxiliary number parts and the small Core parts.

The Input Digit String Analysis processes the Head parts, progressing from the most significant digit to the least significant digit or the received digit string until the BigCore is reached. Then it is checked whether Tail parts are present. The Tail parts are analysed starting from the least significant digit to the most significant digit until the BigCore is reached.

The Auxiliary Table shall contain only single numbers. Wild cards and other control information are for further study.

For the digit analysis to find the complete core part of the received E.164 number or MSIN based number, the digit analysis has to access structural information about the received E.164 number or MSIN based number. In order to keep the system flexible, this structural information is kept in a table.

Auxiliary tables are tables defining the possible Head and Tail parts of E.164 numbers and MSIN based numbers. The principles of the auxiliary tables for E.164 numbers and MSIN based numbers are very similar. They should apply also, when additional types of numbers can be processed in the SAS.

Table 7 shows the table structure of the Auxiliary Number table. The Auxiliary Number Table applies for all SAS Application Services.

Table 7:

| Details of the Auxiliary Number Table for E.164 Numbers and MSIN Based Numbers | | | |
| **Auxiliary Number Table for E.164 Numbers and MSIN Based Numbers** | | | |
| **Attribute** | **Format** | **Values** | **Description** |
| Auxiliary Number Name | 1 or 2 byte internal hex number | E.g. the Head and Tail part names Sl, CC, INRN, OwnINRN, VMSC-INP, SMSC-INP, VMSC-INI, SMSC-INI, P, MCC, MNC, NC, GAC, EC, Natl, NDC. These names may refer to true Auxiliary Number parts or to small Core Parts.. | This is the name of the Auxiliary Number, referencing true Auxiliary Numbers and small Core Part numbers. Primary Key. The auxiliary number instances are to be organised as one (or more, if necessary) digit tree(s) during implementation in order to optimise access speed. Partial Foreign Key into various other tables. Purpose of this parameter for the service logic of the SAS Application Service: This unique name is used to define the relationship between corresponding entities in the inbound digit string and outbound digit string, and between Service Control Data and the corresponding entity in the outbound digit string. |
| Auxiliary Number Length | 4 Bit | Any one digit hex integer value, 0h-Fh. | Primary Key. This field defines the actual length of the auxiliary number. The length of the various kinds of Auxiliary Number is defined as follows: • Head parts: the length of a Head part is the number of digits of this Head part. •Tail parts: the length of a Tail part is the number of digits of this Tail part. Purpose of this parameter for the service logic of the SAS Application Service: detect presence and value of true Auxiliary Numbers and small Core Part numbers in the inbound digit string. |

Table 7: (continued)

| Details of the Auxiliary Number Table for E.164 Numbers and MSIN Based Numbers |||| 
| **Auxiliary Number Table for E.164 Numbers and MSIN Based Numbers** |||| 
| **Attribute** | **Format** | **Values** | **Description** |
|---|---|---|---|
| Auxiliary Number Value | 7 Byte plus 4 Bit | Any valid Auxiliary Number, up to 15 hex digits | Primary Key. The value of the true Auxiliary or small Core Part number. Purpose of this parameter for the service logic of the SAS Application Service: detect presence and value of true Auxiliary Numbers and small Core Part numbers in the inbound digit string. |
| Auxiliary Number Offset | 1 Byte | Integer. | The value of this parameter is generally 0. If infixes are specified in combination with Core Parts then this offset is the length of the respective Core Part. In this case the Auxiliary Number Length is the length of the Auxiliary Number plus the number of digits of the respective Core Part immediately before this infix. This Core Part has to distinguish by leading digits from all prefixes, infixes and postfixes. If the Input Digit String specifies also the Core Parts explicitly, then this parameter is probably no longer used. It is, however, kept for possible future purposes. Purpose of this parameter for the service logic of the SAS Application Service: detect presence and value of true Auxiliary Numbers and small Core Part numbers in the inbound digit string. |
| Abbreviations: SI: Service Indicator for IN Services, CC: E.164 Country Code, INRN: Inter Network Routing Number, INP: Internal Network Prefix, VMSC-INP: Voice Mail Centre Internal Network Prefix, INI: Internal Network Infix, VMSC-INI: Voice Mail Centre Internal Network Infix, SMSC-INP: Short Message Centre Internal Network Prefix, SMSC-INI: Short Message Centre Internal Network Infix, P: Postfix, MCC: E.212 Mobile Country Code, MNC: E.212 Mobile Network Code, NC: E.214 Network Code, GAC: General Access Code, EC: Escape Code Note: In order to find non-small Core Parts of fixed length it is possible to provision a single entry for each such Core Part in the Auxiliary Number Table. This entry would contain the name of this Core Part, its length, the value would be a sequence of zeros, the offset would be FFh. In this case, the offset does not function as a normal offset, but rather as an indicator for such a Core Part. The search algorithm for the Auxiliary Number Table would have to be adapted in order to correctly find MATCHes for this situation. Currently, this possibility is not yet further specified in this document, and the search algorithm for the Auxiliary Number Table has not yet been adapted. ||||

1.3 Fundamental Principles for the Physical Data Models of SAS and SPS

Figure 1 shows Design Patterns for SAS Physical Data Model.
Figure 2 shows Design Patterns for SPS Physical Data Model.
Figure 3 shows a SPS SAS Logical Database Hierarchy.
This design has the following benefits:

- Proven separation of logical and physical database design concerns:

  - The logical data model defines only the information structure, information contents, and the relationships of the persistent data as viewed by applications and users.

  - The Logical Access Methods are separated from the Physical Access Methods. The Logical Access Methods operate on the Logical Data Model and represent the view of the applications. The Physical Access Methods are purely internal and provide for tree navigation and re-organisation.

  - The Logical Data Model and the Logical Access Methods constitute a conceptual model, which is quite stable with respect to modifications of application functionality.

  - The Physical Data Model contains:

    - Definition of physical organisation of Logical Data Model in storage (main memory, disk, backup media, etc.).

    - Physical data navigation methods, data access methods, and data re-organisation methods.

- Narrow and manageable interfaces.

- Analogy between OODBMS and RDBMS: only data is stored persistently, not the access methods.

2. Configuration Data of the SAS Database

The following items shall be configurable for the SAS databases:

Configuration of Ranges:

For each range number table there shall be configurable data item, which defines whether the ranges in this range number table are either all open ranges or all closed ranges. The name of this configuration data item is SasDbTableRangeType. The syntax is:
>     SasDbTableRangeType = SasDbTableId, RangeType.
>         SasDbTableId is any valid table Id (details to be defined).
>         RangeType is an enumerated data type with the values OPEN and CLOSED.

This configuration data item is used to determine the specific search algorithm to be applied in this Range Number table.

For each single number table there shall be configurable data item, which defines whether the ranges in this single number table - defined by the Extended Match Indicator and the Extended Match Length in the single number table - are either all open ranges or all closed ranges.

This requirement does not apply to SAS Release 1.

The name of this configuration data item is SasDbTableRangeType. The syntax is:
>     SasDbTableRangeType = SasDbTableId, RangeType.
>         SasDbTableId is any valid table Id (details to be defined).
>         RangeType is an enumerated data type with the values OPEN and CLOSED.

Note: as it is not possible to represent in general closed ranges in the Single Number table using the Extended Match mechanism, this configuration item is likely to be never used. See 1.2.2.3.3.

Configuration of SAS Database Dimensions:

The maximum length of the E.164 numbers and the MSIN based numbers in the respective single number and range number tables for E.164 numbers and MSIN based numbers shall be configurable in order to dimension the databases to be sold.

This requirement does not apply to SAS Release 1.

The name of this configuration data item is SasDbTableMaxNumberLength. The syntax is:
>     SasDbTableMaxNumberLength = SasDbTableId, MaxNumberLength.
>         SasDbTableId is any valid table Id (details to be defined).
>         MaxNumberLength is a positive integer value.

The maximum number of Service Control Data items per entry in the respective single number and range number tables for E.164 numbers and MSIN based numbers shall be configurable in order to dimension the databases to be sold.

This requirement does not apply to SAS Release 1. For SAS Release 1, up to 5 Service Control Data items per entry in the respective single number and range number tables for E.164 numbers and MSIN based numbers can be provisioned.

The name of this configuration data item is SasDbMaxServiceControlDataItems. The syntax is:

SasDbMaxServiceControlDataItems = SasDbTableId, MaxServiceControlDataItems.

SasDbTableId is any valid table Id (details to be defined).

MaxServiceControlDataItems is a positive integer value.


Configuration of SAS Database SLA Queries:

The SAS Database shall have a configuration data item, which specifies for each possible input digit string, whether the national specific part of this input digit string can always be distinguished by leading digits or not.

The name of this configuration data item is SasDbTableNatDistinguishedByLeadingDigits. The syntax is:

SasDbTableNatDistinguishedByLeadingDigits = SasDbTableId, NatDistinguishedByLeadingDigits.

SasDbTableId is any valid table Id (details to be defined).

NatDistinguishedByLeadingDigits is an enumerated data type with values YES and NO.

**[0279]** The NatDistinguishedByLeadingDigits influences / selects the search algorithm in the respective Single Number or Range Number table.

For each Single Number table, there shall be a configuration data item, which specifies whether the Extended Match mechanism is enabled or disabled for this Single Number table.

If ExtendedMatchStatus is ENABLED for this Single Number table, then the database query starts the Extended Match algorithm if the found Single Number entry is leadingSubstringOf the search digit string. If ExtendedMatchStatus is DISABLED for this Single Number table, the Extended Match algorithm is never started.

The name of this configuration data item is SasDbTableExtendedMatchStatus. The syntax is:

SasDbTableExtendedMatchStatus = SasDbTableId, ExtendedMatchStatus.

SasDbTableId is any valid table Id (details to be defined).

ExtendedMatchStatus is an enumerated data type with the values ENABLED and DISABLED.

This configuration data item selects the specific search algorithm to be used for this Single Number table.

For each Range Number table, there shall be a configuration data item, which specifies whether or not this Range Number table contains true single numbers. An entry in the Range Number table is to be interpreted as single number, if the Single Number Flag for this entry is set to "Interpret Entry as Single Number". The name of this configuration data item is SasDbTableTrueSingleNumbersAllowed. The syntax is:

SasDbTableTrueSingleNumbersAllowed = SasDbTableId, TrueSingleNumbersAllowed.

SasDbTableId is any valid table Id (details to be defined).

TrueSingleNumbersAllowed is an enumerated data type with the values YES and NO.

**[0283]** This configuration data item selects the specific search algorithm to be used for this Range Number table.

The Table Found Action shall be configurable. The purpose of this configuration item is to allow the operator to specify an action, depending on whether a single number table or range number table is found or not found. A table is considered found, if there is at least one entry in this table. A table is considered not found, if there is no entry in this table. The following table illustrates this principle. Details are to be defined.

This requirement does not apply to SAS Release 1. Concept of this configuration table is to be clarified.

Table 8:

| Details of the Table Found Action Configuration Table<br>**Table Found Action Configuration Table** | | | |
|---|---|---|---|
| **Attribute** | **Format** | **Values** | **Description** |
| SAS Database Id | 2 Byte | Any valid SAS Database Id | Primary Key. SAS Database Id in combination with SAS Database Table Id and SAS Application Service Id uniquely identifies a SAS Database table. |

Table 8: (continued)

| | | Details of the Table Found Action Configuration Table **Table Found Action Configuration Table** | | |
|---|---|---|---|---|
| **Attribute** | **Format** | **Values** | | **Description** |
| SAS Database Table Id | 2 Byte | Any valid SAS Database Table Id | | Primary Key. SAS Database Id in combination with SAS Database Table Id and SAS Application Service Id uniquely identifies a SAS Database table. |
| SAS Application Service Id | 2 Byte | Any valid SAS Application Service Id | | Primary Key. SAS Database Id in combination with SAS Database Table Id and SAS Application Service Id uniquely identifies a SAS Database table. |
| Found Indicator | | Either FOUND or NOT FOUND | | |
| Found Action | | | | An action, such as "Continue with Range Table", "Stop all Queries in Number Tables", etc |

Configuration of SAS Database CRUD Queries:

During the customer questionnaire, for each single number table and each range number table, a configuration table shall be specified, which associates each Service Control Data slot (i.e. Service Control Data Sequence Number) with a defined Service Control Data Type. E.g. Slot 0 is always INRN, Slot 1 is always LogicalHLR-Id, etc. This configuration table is used in the CRUD interface to properly assign the Service Controls and their values to the correct slot in the entries of the Single Number and Range Number tables.

Table 9:

| | | Details of the Service Control Slots Configuration Table **Service Control Slots Configuration Table** | | |
|---|---|---|---|---|
| **Attribute** | **Format** | **Values** | | **Description** |
| SAS Database Id | 2 Byte | Any valid SAS Database Id | | Primary Key. SAS Database Id in combination with SAS Database Table Id uniquely identifies a SAS Database table. |
| SAS Database Table Id | 2 Byte | Any valid SAS Database Table Id | | Primary Key. SAS Database Id in combination with SAS Database Table Id uniquely identifies a SAS Database table. |
| Service Control Data Slot Id | 1 Byte | Any valid encoding of Service Control Data Slot Id | | |
| Service Control Type | 1 Byte | Any valid encoding of Service Control Type e g INRN, HLR-SCA, etc | | |
| | | | | |

**Claims**

1. Number Portability Database for at least one SAS application service including at least one single number configuration table, at least one range number configuration number table, and a service control configuration table, wherein the single number configuration table serves to store single numbers or attributres thereof and corresponding service control data or attributes thereof, wherein the range number configuration table serves to store ranges or attributes thereof and corresponding service control data or attributes thereof, wherein the service control configuration table serves to store service control data or attributes thereof and corresponding service control information or attributes thereof.

2.  Number Portability Database, as set forth in claim 1, wherein at least one single number configuration table serves to store E.164 single numbers or attributes thereof like E.164 Number Length, E.164 Number Value, Number Type, Portability Status, Default/Exception Indicator, Transition Indicator, Extended Match Indicator, Extended Match Length, and corresponding service control data or attributes thereof like Service Control Data Id, Service Control Data Sequence Number, wherein at least one range number configuration table serves to store E.1 64 range numbers or attributes thereof like E.164 Number Start Range Length, E.164 Number Start Range Value, E.164 Number End Range Length, E.164 Number End Range Value, Number Type, Portability Status, Default/Exception Indicator, Transition Indicator, Single Number Flag, and corresponding service control data or attributes thereof like Service Control Data Id, Service Control Data Sequence Number.

3.  Number Portability Database, as set forth in claim 1, wherein the Number Portability Database serves in addition for flexible routing, wherein at least one single number configuration table serves to store MSIN based single numbers or attributes thereof like MSIN Based Number Length, MSIN Based Number Value, Number Type, Portability Status, Default/Exception Indicator, Transition Indicator, Extended Match Indicator, Extended Match Length, and corresponding service control data or attributes thereof like Service Control Data Id, Service Control Data Sequence Number, wherein at least one range number configuration table serves to store MSIN based range numbers or attributes thereof like MSIN Based Number Start Range Length, MSIN Based Number Start Range Value, MSIN Based Number End Range Length, MSIN Based Number End Range Value, Number Type, Portability Status, Default/Exception Indicator, Transition Indicator, Single Number Flag, and corresponding service control data or attributes thereof like Service Control Data Id, Service Control Data Sequence Number.

4.  Number Portability Database, as set forth in claim 1, wherein the service control configuration table serves to store service control data or attributes thereof like Service Control Data Id, and corresponding service control information or attributes thereof like Service Control Data Function, Service Control Data Type, Service Control Data Length, Service Control Data Value, Address Info Present Mask, Nature of Address Indicator, Numbering Plan, Cut Enable Mask, Cut Offset, Cut Length.

5.  Number Portability Database, as set forth in claim 1, wherein at least one single number configuration table is implemented in an object-oriented database using a B-Tree like access method optimized for searching from the smnallest to the greatest or from the greates to the smallest, and wherein at least one range number configuration table is implemented in an object-oriented database using a B-Tree like access method optimized for searching from the smnallest to the greatest or from the greates to the smallest.

6.  Signaling application server (SAS), comprising at least one processor, at least one database and at least one processing software for processing at least one application service request, wherein the at least one processing software is programmed in such a way that identifying and processing at least one application service request is enabled, and wherein at least one database is a Number Portability Database as set forth in claim 1.

7.  SS7 signaling server for routing SS7 links, including a signaling transfer point (STP), a signaling application server (SAS), and a Number Portability Database as set forth in claim 1,
    wherein the STP has at least one external interface to connect the STP via at least one SS7 link to at least one telecommunications unit, and an internal interface to connect the STP to the SAS,
    wherein the SAS has access to the Number Portability Database and is capable to process at least one application service request, and
    wherein the STP is capable to process incoming SS7 messages, to identify a single application service request in one incoming SS7 message, to provide the identified single application service request to the SAS for further processing.

Fig. 1

Fig. 2

**Service ControlData**
- ServiceControlDataId
- ServiceControlDataFunction
- ServiceControlDataType
- ServiceControlDataLength
- ServiceControlDataValue
- SccpAddressInfoPresentMask
- NatureOfAddressIndicator
- NumberingPlan
- CutEnableMask
- CutOffset
- CutLength

(0,n) — Has [1] — (1,n)

**GenericNumberInfo**
- NumberType
- Portability Status
- DefaultExceptionIndicator
- TransitionIndicator
- ServiceControlDataId
- ServiceControlSequenceNumber

**AuxiliaryNumber**
- AuxiliaryNumberName
- AuxiliaryNumberLength
- AuxiliaryNumberValue
- AuxiliaryNumberOffset

IS-A

**E.164 Single Number**
- E164NumberLength
- E164NumberValue
- ExtendedMatchIndicator
- ExtendedMatchLength

**E.164 Range Number**
- E164RangeNumberStartLength
- E164RangeNumberStartValue
- E164RangeNumberEndLength
- E164RangeNumberEndValue
- SingleNumberFlag

**MsinBasedSingleNumber**
- MsinBasedNumberLength
- MsinBasedNumberValue
- ExtendedMatchIndicator
- ExtendedMatchLength

**MsinBasedRangeNumber**
- MsinBasedRangeNumberStartLength
- MsinBasedRangeNumberStartValue
- MsinBasedRangeNumberEndLength
- MsinBasedRangeNumberEndValue
- SingleNumberFlag

[ ] E.164 Database    [ ] MSIN Based Database

[ ] Non-instance Entity    [ ] Common Database

[1] Up to a maximum of 5 Service Control can be associated to the respective entities for SAS Release 1.
The total maximum number of Service Control Data items per SAS Database is 64k for SAS Release 1.
General Remark: Only the Instance Entity Sets can be realized as tables in the relational model.

Fig. 3

Fig. 4

**Single Number Table Query**
(from smallest to greatest)

Read First Entry in
Single Number Table

Entry exists? — No → Return NO MATCH

Yes

Compare SDS with NV

SDS > NV

Read Next greater Entry
in Single Number Table

SDS = NV

Return MATCH

SDS leading
Sub-string of NV

Return AMBIGUOUS

(SDS < NV) AND
NOT (SDS leading
Sub-string of NV)

Return NO MATCH

**SDS: Search Digit String**     **NV: Number Value**

Fig. 5

SDS: Search Digit String    NV: Number Value
DBLD: Configuration Item SasDbTableNotDistinguishedByLeadingDigits

Fig. 6

SDSV: Search Digit String Value    NERV: Number End Range Value    LSO: leadingSubstringOf
SDSL: Search Digit String Length    NERL: Number End Range Length    SNF: Single Number Flag
NSRV: Number Start Range Value

Fig. 7

SDSV: Search Digit String Value    NERV: Number End Range Value    LSO: leadingSubstringOf
SDSL: Search Digit String Length    NERL: Number End Range Length    SNF: Single Number Flag
NSRV: Number Start Range Value

**Range Number Table Query**
(from smallest to greatest)

Read First Entry in
Range Number Table

Entry exists? — No → Return NO MATCH

Yes

(|SDSV <= NERV|)
OR (NERV LSO
SDSV)? — No → Read Next greater Entry in Range Number Table

Yes

SNF? — Single Number / Range

Compare SDSV with NERV

SDSV LSO NERV → Return AMBIGUOUS
SDSV = NERV → Return MATCH
Otherwise → Return NO MATCH

SDSV LSO NSRV? — No
Yes → Return AMBIGUOUS

SDSV >= NSRV? — No
Yes

SDSL >= NERL? — No
Yes

Return MATCH   Return AMBIGUOUS   Return NO MATCH

SDSV: Search Digit String Value          NERV: Number End Range Value          LSO: leadingSubstringOf
SDSL: Search Digit String Length          NERL: Number End Range Length          SNF: Single Number Flag
NSRV: Number Start Range Value

Fig. 8

72

EP 1 460 862 A1

Fig. 9

SDSV: Search Digit String Value  NERV: Number End Range Value  LSO: leadingSubstringOf
SDSL: Search Digit String Length  NERL: Number End Range Length  SNF: Single Number Flag
NSRV: Number Start Range Value

73

Fig. 10

SDS: Search Digit String     NV: Number Value     EMI: Extended Match Indicator     EML: Extended Match Length

Fig. 11

SDS: Search Digit String    ANV: Auxiliary Number Value    ANN: Auxiliary Number Name
ANN-SQ: Auxiliary Number Name of Search Query    ANN-CE: Auxiliary Number Name of Current Entry
LSO: Leading Sub-String Of

Search 87781      Search 411, Extended Match disabled for this table.

Search 411, Extended Match enabled for this table.      Check for Extended Match in this entry.

Fig. 12

Search 87781      Search 411      Check for Ambiguity in this entry.

Fig. 13

## Fig. 14

**SAS Application Services**

**SAS CRUD LAMs**

**SAS SL LAMs**

SAS Logical Access Methods

**SAS Logical Data Model: Logical Data Structures plus Associations**

SAS Logical Data Model

**SAS Physical Model:**

Persistent Data Structures plus Methods for Tree Navigation and Tree Re-organisation; internal methods not visible outside.

SAS Physical Access Model

Multiple levels with multiple slots per node.

Physical Representation of SAS Logical Data Model

CRUD: Create, Read, Update, Delete          SL: Service Logic          LAM: Logical Access Method

Fig. 14

## Fig. 15

**SPS CRUD Logical Access Methods**

SPS Logical Access Methods

**SPS Logical Data Model: Logical Data Structures plus Associations**

SPS Logical Data Model

**SPS Physical Model:**

Persistent Data Structures plus Methods for Tree Navigation and Tree Re-organisation; internal methods not visible outside.

SPS Physical Access Model

Multiple levels with multiple slots per node.

Physical Representation of SPS Logical Data Model

CRUD: Create, Read, Update, Delete

Fig. 15

Fig. 16

CRUD: Create, Read, Update, Delete     LAM: Logical Access Method     VAR: Versant Asynchronous Replica
LDM: Logical Data Model     PDM: Physical Data Model

**European Patent Office**

## EUROPEAN SEARCH REPORT

Application Number

EP 03 29 0704

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/029182 A1 (MARSICO PETER JOSEPH ET AL) 11 October 2001 (2001-10-11) <br> * figures 4,5A,5B * <br> * paragraph [0021] * <br> * paragraphs [0047]-[0064] * <br> --- | 1-7 | H04Q3/00 |
| X | US 6 535 599 B1 (BOLDT DEAN C ET AL) 18 March 2003 (2003-03-18) <br> * figures 1,2,7,8,16,19 * <br> * column 7, line 32 - column 17, line 21 * <br> * column 27, line 41 - column 28, line 25 * <br> --- | 1-7 | |
| A | EP 1 202 583 A (ALCATEL USA SOURCING LP) 2 May 2002 (2002-05-02) <br> * paragraphs [0009]-[0018] * <br> --- | 1-7 | |
| A | US 5 768 361 A (COWGILL GEORGE A) 16 June 1998 (1998-06-16) <br> * figures 3B,5 * <br> * column 4, line 13 - column 10, line 57 * <br> --- | 1-7 | TECHNICAL FIELDS SEARCHED (Int.Cl.7) |
| A | US 6 370 136 B1 (SILVA MICHAEL C ET AL) 9 April 2002 (2002-04-09) <br> * figure 4 * <br> * column 5, line 26 - column 6, line 8 * <br> ----- | 1-7 | H04Q |

The present search report has been drawn up for all claims

| Place of search | Date of completion of the search | Examiner |
|---|---|---|
| MUNICH | 23 July 2003 | Kreppel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 29 0704

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2003

| Patent document cited in search report | | Publication date | Patent family member(s) | | Publication date |
|---|---|---|---|---|---|
| US 2001029182 | A1 | 11-10-2001 | AU | 2449701 A | 03-07-2001 |
| | | | EP | 1285545 A2 | 26-02-2003 |
| | | | WO | 0147297 A2 | 28-06-2001 |
| | | | US | 2001030957 A1 | 18-10-2001 |
| | | | AU | 2787901 A | 31-07-2001 |
| | | | EP | 1252788 A1 | 30-10-2002 |
| | | | WO | 0154444 A1 | 26-07-2001 |
| US 6535599 | B1 | 18-03-2003 | CA | 2325414 A1 | 08-05-2001 |
| EP 1202583 | A | 02-05-2002 | US | 6466792 B1 | 15-10-2002 |
| | | | EP | 1202583 A2 | 02-05-2002 |
| | | | JP | 2002199093 A | 12-07-2002 |
| US 5768361 | A | 16-06-1998 | WO | 9724888 A1 | 10-07-1997 |
| US 6370136 | B1 | 09-04-2002 | AU | 3527100 A | 04-10-2000 |
| | | | EP | 1161826 A1 | 12-12-2001 |
| | | | WO | 0056048 A1 | 21-09-2000 |

EPO FORM P0459

For more details about this annex : see Official Journal of the European Patent Office, No. 12/82